(19) Europäisches Patentamt
European Patent Office
Office européen des brevets

(11) EP 2 220 176 B1

(12) EUROPEAN PATENT SPECIFICATION

(45) Date of publication and mention of the grant of the patent:
**19.09.2018 Bulletin 2018/38**

(21) Application number: **08854640.3**

(22) Date of filing: **26.11.2008**

(51) Int Cl.:
***C09D 5/08*** *(2006.01)* ***C08G 77/58*** *(2006.01)*
***C09C 1/64*** *(2006.01)* ***C23C 18/12*** *(2006.01)*

(86) International application number:
**PCT/IE2008/000114**

(87) International publication number:
**WO 2009/069111 (04.06.2009 Gazette 2009/23)**

# (54) SOL-GEL COATING COMPOSITIONS AND THEIR PROCESS OF PREPARATION

SOL-GEL BESCHICHUNGSZUSAMMENSETZUNGEN UND DEREN VERFAHREN ZUR HERSTELLUNG

COMPOSITIONS DE REVÊTEMENT SOL-GEL ET LEUR PROCEDE DE PREPARATION

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **26.11.2007 US 996565 P**

(43) Date of publication of application:
**25.08.2010 Bulletin 2010/34**

(73) Proprietors:
- **Dublin Institute of Technology Intellectual Property Ltd**
**Dublin 6 (IE)**
- **Dublin City University**
**Dublin 9 (IE)**

(72) Inventors:
- **COLREAVY, John**
**Monasterevin,**
**Co. Kildare (IE)**
- **DUFFY, Brendan**
**Kilcullen,**
**Co. Kildare (IE)**
- **VARMA, Padinchare, Covilakath, Rajath**
**Dublin 8 (IE)**
- **HAYDEN, Hugh**
**Dundalk,**
**County Louth (IE)**
- **OUBAHA, Mohamed**
**Dublin 9 (IE)**

(74) Representative: **Cahill, Susanne**
**PurdyLucey**
**Intellectual Property**
**6-7 Harcourt Terrace**
**Dublin 2 (IE)**

(56) References cited:
**EP-A- 1 832 629** **WO-A-2004/076718**
**DE-A1- 19 822 721** **FR-A- 2 886 309**

- **QUINET ET AL: "Corrosion protection of sol-gel coatings doped with an organic corrosion inhibitor: Chloranil" 12 January 2007 (2007-01-12), PROGRESS IN ORGANIC COATINGS, XX, XX, PAGE(S) 46 - 53 , XP005827893 ISSN: 0300-9440 abstract point 2.1 page 47**
- **KHRAMOV A N ET AL: "Sol-gel-derived corrosion-protective coatings with controllable release of incorporated organic corrosion inhibitors" 1 July 2005 (2005-07-01), THIN SOLID FILMS, ELSEVIER-SEQUOIA S.A. LAUSANNE, CH, PAGE(S) 191 - 196 , XP004906518 ISSN: 0040-6090 cited in the application abstract figure 1**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Introduction

The invention relates to organosilane coating compositions and use thereof. In one aspect, the coatings can be considered to be protective coatings.

Lightweight metal alloy materials have been utilised in the production of transport vehicles, for example in the automotive and aerospace industries, as the use of such alloys reduces the weight of the vehicle which in turn results in a reduction in fuel consumption. Many of the alloys used incorporate aluminium and/or magnesium. While strength to weight ratio's of such alloys are excellent, a major drawback is the relative reactivity of these alloys to corrosive environments and the difficulty in maintaining a protective barrier coating. The most effective way to prevent corrosion is to coat the base metal with a material that has uniformity, good adhesion, reduced porosity and self-healing properties.

Current anticorrosion strategies in the transport industry (EuMAT, European Aeronautics, a vision for 2020, EuCar) are based on the use of hexavalent chromium Cr(VI) followed by the application of organic coatings. However, hexavalent chromium is a known carcinogen and has been banned, along with Lead, Mercury and Cadmium, for use in transport vehicle production by the End of Vehicle Life (2000/53/EC) and REACH Directives (COM(03)644(01).

A recent US ESTCP project (Project No. PP0025) investigated several alternatives to hexavalent chromium pre-treatments including trivalent chromium, Alodine™ 5200 (an organometallic zirconate) from Henkel Ltd. and a spray-coated solventborne sol-gel (BoeGel®) from aircraft manufacturers Boeing. However such known systems were not as efficient as hexavalent chromium (Alodine™ 1200).

Sol-gel coatings with various corrosion inhibitors used as additives has been researched by several groups. For example researchers at the University of Dayton Research Institute have investigated the anti-corrosion properties of sol-gels using rare-earth metal salts as additives (N.N. Voevodin et al., Surf. and Coat. Technol. 140 (2001) 24-28), amine cross-linkers (M.S. Donley et al., Prog. Org. Coat. 47 (2003) 401-415) and supramolecules for inclusion of organic inhibitors (A.N. Khramov et al., Thin Solid Films 447 (2004) 549-557).

There is a need for an anti-corrosion coating which has self-healing capabilities comparable to the hexavalent chromium system and also complies with the End of Vehicle Life and REACH Directives.

### Statements of Invention

In one aspect, the invention provides a sol-gel coating composition comprising a hydrolysed organosilane, an organometallic precursor and a corrosion inhibitor, wherein the corrosion inhibitor is a chelator for the organometallic precursor and wherein the corrosion inhibitor is selected from diaminobenzoic acid and tetrazine.

The corrosion inhibitor and the organometallic precursor may form a nanoparticulate complex.

The corrosion inhibitor may be an anodic inhibitor, a cathodic inhibitor, an adsorption inhibitor, or an organic inhibitor.

The corrosion inhibitor may be a tetrazine, for example a tetrazine of the formula:

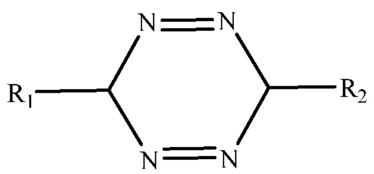

(a)

or

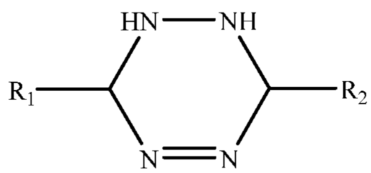

(b)

wherein R1, R2 are selected from hydroxyl, halogen, alkoxy, acyloxy, alkyl, alkenyl, aryl, alkylaryl, arylalkyl, alkenylaryl, arylalkenyl, alkylene, alkenylene, arylene, alkylarylene, arylalkylene, alkenylarylene, arylalkenylene, ethers, thiols, sulphides, sulphur analogs of alcohols or ethers, benzene and derivatives thereof, amines, phosphines, phosphorus analogs of amines, aldehydes, ketones or carboxyl.

R1 and/or R2 may be pyridyl or carboxylate or alkylamine.

The tetrazine may be 3,6-di-2-pyridyl-1,2,4,5-tetrazine (DPTZ) or 3,6-dicarboxylic-4,5-dihydro-1 ,2,4,5-tetrazine($H_2$DCTZ).

The organometallic precursor may be a transition metal precursor. The transition metal precursor may contain zirconium or titanium. The zirconium precursor may be zirconium (VI) propoxide (Zr(OPr)4).
The hydrolysed organosilane may be of the formula:

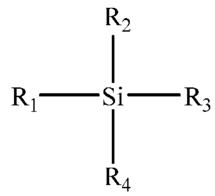

wherein R1, R2, R3 and R4 may be the same or different and are each selected from: n-alkanes which may be $C_1$-$C_8$; hydroxyl group (OH); alkoxy group such as $OCH_3$, $OCH_2CH_3$ $OCH_2CH_2CH_3$; aromatic group such as $C_6H_5$; amine group such as $NH_2$, $CH_2NH_2$, $CH_2CH_2NH_2$, $CH_2CH_2CH_2NH_2$; vinyl group such as $CHCH_2$, $CH_2CHCH_2$, $CH_2CHCH_2$; epoxy group; acryl; methacryl; or mercaptyl.

The organosilane may be methacryloxypropyltrimethoxysilane (MAPTMS) or tetra-ethyl-ortho-silicate (TEOS).

The coating composition may comprise a catalyst to hydrolyse the organosilane. The catalyst may be an acid catalyst such as a weak organic acid for example acetic acid or nitric acid. The catalyst may be a base catalyst.

The coating composition may comprise a photoinitiator. The coating composition may comprise a neutralising agent, such as water.

The coating composition may comprise one or more additive selected from: an antimicrobial additive, a hardener, a water repelling additive, a dye, a scratch resistant additive and a flexibility enhancing additive.

The invention further provides a coating composition containing a tetrazine-zirconium complex. The tetrazine-zirconium complex may be of the formula:

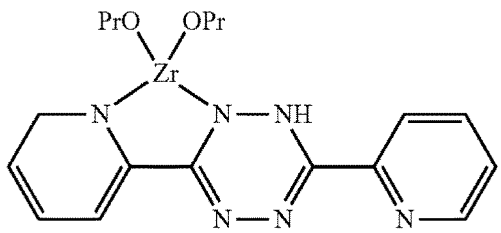

The invention also provides a coated metal surface comprising a metal surface and a coating as described herein. The metal may be selected from the group comprising:- cast-iron, steel, aluminium, aluminium alloys, zinc, zinc alloys, magnesium, magnesium alloys, copper, copper alloys, tin and tin alloys, nickel alloys, titanium and titanium alloys.

The invention further provides a coating for a metal surface, the coating comprising a tetrazine as a corrosion inhibitor. The surface may be formed of aluminium or an aluminium alloy.

The invention also provides a tetrazine-zirconium complex such as a tetrazine-zirconium complex of the formula:

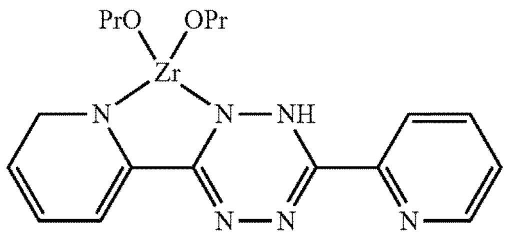

Also described is use of tetrazine as a corrosion inhibitor. The tetrazine may be of the formula:

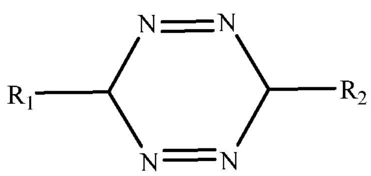

(a)

or

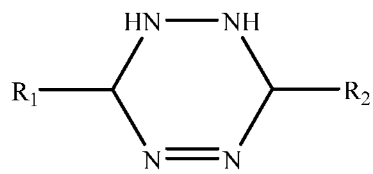

(b)

wherein R1, R2 are selected from hydroxyl, halogen, alkoxy, acyloxy, alkyl, alkenyl, aryl, alkylaryl, arylalkyl, alkenylaryl, arylalkenyl, alkylene, alkenylene, arylene, alkylarylene, arylalkylene, alkenylarylene, aryl alkenylene, ethers, thiols, sulphides, sulphur analogs of alcohols or ethers, benzene and derivatives thereof, amines, phosphines, phosphorus analogs of amines, aldehydes, ketones or carboxyl.

R1 and R2 may be the same or different and are each selected from: pyridyl, carboxylate or alkylamine.

The tetrazine may be 3,6-di-2-pyridyl-1,2,4,5-tetrazine (DPTZ) or 3,6-dicarboxylic-4,5-dihydro-1,2,4,5-tetrazine ($H_2$DCTZ).

The invention further provides for the use of a sol-gel coating composition as described herein as an anti-corrosion coating for a metal surface.

Also described is use of a chelate as described herein as an anti-corrosion coating for a metal surface.

The invention also provides a process for preparing a sol gel coating composition comprising the steps of: hydrolysing an organosilane in the presence of a catalyst; chelating an organometallic precursor; mixing the hydrolysed silane and the chelated organometallic precursor; and hydrolysing the organosilane-organometallic precursor mixture wherein the chelated organometallic precursor is stabilised by a chelating agent. and wherein the chelating agent is a corrosion inhibitor selected from diaminobenzoic acid and tetrazine.

The catalyst may be an acid catalyst such as nitric acid or acetic acid. The organosilane: catalyst molar ratio may be about 1 : 10 and about 1 : 1000, for example between 1 : 10 and 1 : 100.

The chelate may be a bidentate ligand. The chelate may be a corrosion inhibitor. The organometallic precursor:chelate molar ratio may be about 1 : 1.

The hydrolysis may be completed using water.

The final molar concentration of organosilane : chelator : organic metallic precursor : water may be about 2.5 : 1 : 1 : 5.

The organosilane may be hydrolysed for about 45 minutes. The organometallic precursor may be chelated for about 45 minutes.

The hydrolysed organosilane and the chelated organometallic precursor may be mixed for about 2 minutes.

The hydrolysed organosilane and the chelated organometallic precursor may be mixed for about 2 minutes.

A corrosion inhibitor may be added during the step of hydrolysing the organosilane-organometallic precursor mixture for about 45 minutes.

An additive may be added to the sol gel during the step of hydrolysing the organosilane mixture. The additive may be selected from one or more of: an antimicrobial additive, a hardener, a water repelling additive, a dye, a scratch resistant additive and a flexibility enhancing additive.

In another aspect, the invention provides a sol-gel coating composition comprising a hydrolysed organosilane, an organometallic precursor, a chelating agent and one or more additive selected from: an antimicrobial additive, a hardener, a water repelling additive, a dye, a scratch resistant additive and a flexibility enhancing additive.

The organometallic precursor and the chelating agent may form a nanoparticulate complex. The chelating agent may comprise a bidentate ligand. The chelating agent may be one or more selected from: methacrylic acid, acetic acid, isobutyric acid, acetyl acetone and 2' 2 bipyridine.

The antimicrobial additive may be one or more of: silver, copper and zinc. The antimicrobial may be in the form of a nanoparticle.

The hardener may be a zeolite.

The water repelling additive may be a fluorinated compound.

The dye may be creosol red.

The scratch resistant additive may be an inorganic clay such as bentonite.

The flexibility enhancing additive may be an organic oligomer.

The organometallic precursor may be a transition metal precursor. The transition metal precursor may contain zirconium or titanium. The zirconium precursor may be zirconium (VI) propoxide ($Zr(OPr)_4$).

The hydrolysed organosilane may be of the formula:

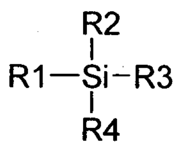

wherein R1, R2, R3 and R4 may be the same or different and are each selected from: n-alkanes which may be $C_1$-$C_8$; hydroxyl group (OH); alkoxy group such as $OCH_3$, $OCH_2CH_3$. $OCH_2CH_2CH_3$; aromatic group such as $C_6H_5$; amine group such as $NH_2$, $CH_2NH_2$. $CH_2CH_2NH_2$ $CH_2CH_2CH_2NH_2$; vinyl group such as $CHCH_2$, $CH_2CHCH_2$, $CH_2CHCH_2$; epoxy group; acryl; methacryl; or mercaptyl.

The organosilane may be methacryloxypropyltrimethoxysilane (MAPTMS) or tetra-ethyl-ortho-silicate (TEOS).

The coating composition may comprise a catalyst to hydrolyse the organosilane. The catalyst may be an acid catalyst. The catalyst may be a weak organic acid such as acetic acid or nitric acid. The catalyst may be a base catalyst.

The coating composition may comprise a photoinitiator. The coating composition may comprise a neutralising agent such as water.

## Brief Description of the Drawings

The invention will be more clearly understood from the following description of an embodiment thereof, given by way of example only, with reference to the accompanying drawings, in which:

Fig. 1 is a schematic of Si/Zr coating with anchored inhibitor (I) formed by chelating the inhibitor with an organometallic precursor (in this case a zirconium precursor);

Fig. 2 is a flow chart illustrating sol-gel formulation using a bidentate ligand as a chelate;

Fig. 3 is a flow chart illustrating sol-gel formulation using an inhibitor as a chelate;

Fig. 4 is a flow chart illustrating a process for the preparation of hybrid sols;

Fig. 5 is a graph showing the thermal stability of various sol gel coatings;

Fig. 6 is a graph showing the particle size diameter of chelated zirconium in various sol gel coatings;

Fig. 7 is a Potentiodynamic Scan plot for various sol gel coatings: (A) MAPTMS and Si/Zr modified with various ligands such as (B) MAAH, (C) AcOH, (D) IBA, (E) AcAc, (F) BiPy (Inset: Extrapolation of data in Tafel region of (B));

Fig. 8 is a Bode Plot of coatings after 1 hour immersion in dilute Harrison's solution (A) MAPTMS and Si/Zr modified with various ligands such as (B) MAAH, (C) AcOH, (D) IBA, (E) AcAc, (F) Bipy;

Fig. 9 is a Bode Plot of coatings after 72 hours immersion in dilute Harrison's solution (A) MAPTMS and Si/Zr modified with various ligands such as (B) MAAH, (C) AcOH, (D) IBA, (E) AcAc, (F) Bipy;

Fig. 10 are images of the salt spray results plots for various sol gel coatings: (A) MAPTMS for 48 hrs and Si/Zr modified with various ligands such as (B) MAAH, (C) AcOH, (D) IBA, (E) AcAc, (F) BP for 1 week (G) Bare AA2024 after 24 Hours;

Fig. 11 is a schematic illustrating the electrochemical cell design;

Fig. 12 is a graph showing the visible absorption profile at 3, 6-di-2-pyridyl-1,2,4,5-tetrazine(DPTZ) $\lambda$ max;

Fig. 13 is a cyclic voltammogram of 100 ppm DPTZ in 100 ppm $Cl^-$;

Fig. 14 (a) and (b) are graphs showing the impedance data for an organosilane coating containing 0.3% imidazole in 3.5% sodium chloride (aqueous);

Fig. 15 (a) and (b) are graphs showing the impedance data for an organosilane coating containing 0.2% tetrazine in 3.5% sodium chloride (aqueous);

Fig. 16 (a) and (b) are graphs showing the impedance data for an organosilane coating synthesised using methacyrlic acid as a chelate in 3.5% sodium chloride (aqueous);

Fig. 17 (a) and (b) are graphs showing the impedance data for an organosilane coating synthesised using DPTZ as a chelate in 3.5% sodium chloride (aqueous);

Fig. 18 is a graph illustrating the potentiodynamic scanning data for aluminium 2024-T3 in the presence and absence of organosilane coatings;

Fig. 19 is a Raman Spectrum of DPTZ;

Fig. 20 is a Raman Spectrum of zirconium (VI) propoxide ($Zr(OPr)_4$) and the DPTZ chelated $Zr(OPr)_4$;

Fig. 21 is a photograph of a black of aluminium panel AA-2024-T3 following a 24 hour exposure to a solution of 3.5% sodium chloride;

Fig. 22 is a scanning electron micrograph of a corrosion pit initiated by chlorine on the aluminium blank of Fig. 21;

Fig. 23 is an elemental analysis dot map image of the blank of Fig. 21 and 22;

Fig. 24 is a photograph of a blank of aluminium panel AA-2024-T3 following a 72 hour exposure to a solution of 3.5% sodium chloride containing 1000 ppm dihydro-1,2,4,5-tetrazine-3,6-dicarboxylic acid ($H_2$DCTZ);

Fig. 25 is a scanning electron micrograph of a stained area of the surface of an aluminium blank of AA-2024-T3 following a 48 hour exposure to a solution of 35% sodium chloride containing 1000 ppm $H_2$DCTZ;

Fig. 26 is an elemental analysis dot map image of the stained area of Fig. 25;

Fig. 27 is a photograph of a blank of aluminium panel AA-2024-T3 following a 48 hour exposure to a solution of 3.5% sodium chloride containing 1000 ppm of the corrosion inhibiter 3,6-bis (3,5-dimethylpyrazole-1-yl) - 1, 2, 4, 5 - tetrazine (DMPTZ);

Fig. 28 is a photograph of a blank of aluminium panel AA-2024-T3 following a 48 hour exposure to a solution of 3.5% sodium chloride containing 1000ppm DMPTZ;

Fig. 29 is a scanning electron micrograph of a corrosion pit of the blank of Fig. 28; and

Fig. 30 is an elemental analysis dot map image of the blank of Fig. 28 and 29.

## Detailed Description

### Anti-corrosion coatings

In one aspect, the invention provides a chromate free coating for a metal substrate. The coating confers the properties of corrosion resistance, barrier protection and high adhesion to the metal substrate. The coating is primarily designed as both an anticorrosion surface treatment and a protective barrier coating, which can be overcoated with a primer and a topcoat.

The invention provides a sol-gel coating composed of hydolysable organosilanes, an organometallic complex and a corrosion inhibitor. The organometallic complex is composed of a reactive organometallic precursor stabilised by a chelating agent. In one aspect the corrosion inhibitor may be the chelating agent.

In one aspect, the invention provides a hybrid sol-gel coating which promotes adhesion of a resinous primer/topcoat to a metal surface. The sol-gel coating is anticorrosive due to inclusion of corrosion inhibitors.

Sol-gel coatings based on organically modified silane and zirconium chemistry have been established to form the most adaptable and resilient coatings for protecting metals (US Patent No. 4,746,366). The strength and performance of the sol-gel coating depends on the chemical bonds between the coating and the metal surface and also on the chemical stability of the coatings. Porous coatings are required for inhibitor mobility, but should be controlled to avoid early depletion.

A sol-gel surface coating of the invention may be applied to a metal for example, aluminium or an alloy thereof, through a waterborne sol containing an organic inhibitor, such as an inhibitor from the tetrazine family. The corrosion inhibition properties of the coating is dependant on the concentration of the inhibitor and the film forming organosilane components.

Sol-gel coatings improve the adhesion of a primer/topcoat to a metal surface through silicon-oxygen-metal bonds. Improved coating performance is achieved by incorporating a photoinitiator to promote improved cross-linking through the organic component of the hybrid sol-gel functionality.

In one aspect the sol-gel coating can be considered as an anticorrosive surface coating for use on metal substrates, which acts as a conversion layer for subsequent surface coatings such as a primer or top coat.

In a further aspect, sol gel coatings in accordance with the invention can be considered as self-healing coatings. By self-healing we mean that corrosion inhibitors present in the coating may be activated by environmentally-triggered

stimuli such as a scratch in the coating which may initiate the corrosion process. For example, when corrosion occurs, oxidation may cause a change in the local pH level, the alteration in pH level may activate inhibitors, attracting them to the site of corrosion where the inhibitors function to inhibit corrosion. In the case of tetrazine for use with aluminium-copper alloys such as 2024-T3, the mobility of the inhibitor towards the corrosion site is driven by the affinity of tetrazine for copper rich intermetallics particles in the alloy.

In a second aspect the anti-corrosion sol-gel composition described herein may be used as a basic mixture into which one or more additives can be added to alter the functionality of the sol-gel. Examples of suitable additives that can be incorporated into the sol-gel include those listed under the heading additives below, for example, an antimicrobial agent may be added to the basic sol-gel mixture to impart antimicrobial properties to a coating formed from the sol-gel. Alternatively, a hardener could be added to the basic sol-gel mixture such as nanoparticles (silica, alumina zirconia) to impart a hard wearing property for example a scratch proof property to a coating formed from the sol gel, for example colloidal silica from the Levosil® range of products (Levosil® 100/200/300) can be added in low concentrations to improve scratch performance of the sol-gel coating. A scratch proof coating would be particularly useful for anodised surfaces, whereby the sol-gel could additionally seal the oxide pores.

Incorporating an additive to the basic sol-gel composition will provide sol gel coatings with two or more functionalities as the sol gel coating will retain the anticorrosion property conferred by the basic sol gel composition and in addition acquire a new functionality, such as anti-microbial or scratch proof properties, imparted by the additive.

Additives

In a third aspect, the invention provides for a sol-gel coating containing additives. One or more additives can be added to a sol gel coating mixture comprising an organosilane, a catalyst, an organometallic precursor and a chelator for the organometallic precursor. Additives that can be incorporated in to the sol-gel coating include:

◦ a nano- metal such as nano- silver, nano- copper, nano- zinc and mixtures thereof which may be used to impart anti-microbial properties;

◦ zeolites (microporous aluminosilicate minerals) may be added to improve the scratch hardness properties of the coating. In some cases the zeolites may contain metal ions, and can therefore be considered antimicrobial. A series of anticrobial zeolite has been commercially supplied under the tradename AgION;

◦ fluorinated additives to reduce the reduce the surface energy of the sol-gel coating thereby preventing water ingress. Suitable fluorinated additives include those containing silane chemistries such as Dynasylan® F 8815, Dynasylan® F 8261 and Dynasylan® F 8061-E;

◦ Dyes, including pH indicators, to impart visual properties to the sol-gel coating, for example cresol red can be added to the basic sol-gel composition to give a deep red colour, but is also used a pH indicator allowing the coating to change colour when immersed in different pH solutions for extended periods of time (greater than at least one hour);

◦ Inorganic clays may be incorporated to impart improved scratch resistance properties to the sol-gel coating. For example, bentonite may be added to improve the scratch resistance property of the coating and give a matt finish to the sol-gel coating rather than a gloss finish. Additionally, the inorganic clay may also be used as a thixotrope (decreases the viscosity of a solution over time at a constant shear/stirring rate) to modify the viscosity of the sol-gel;

◦ Organic oligomers may be incorporated into the sol-gel to improve the flexibility of the final sol-gel coating. This will reduce the hardness of the coating but will improve the brittleness sometimes seen when the level of inorganic chemistries of the coating is too high;

◦ The inclusion of crosslinking chemistries will decrease the porosity of the coatings and improve the structural strength. Examples of crosslinking chemistries include bis-silanes, diaminoalkanes, diisocyanates, divinylbenzenes, acrylics, amides & polyamides, aziridines, benzoguanamines, carbodiimide resins, glycolurils, isocyanates, melamines, polyols, silicon based compounds, urea-formaldehydes, urethanes & polyurethanes; and

◦ Other additives normally used in coatings, especially acid-catalyzed coatings, and those used in antimicrobial compositions, can be included as well. Representative examples of such additives include, but are not limited to, wetting agents, defoaming agents, anti-sag agents, pigments, sheen controllers, plasticizers, (e. g., DINP (di-isonomylphthalate), etc. stabilizers, alcohols (e.g., butanol, isobutanol, ethanol, etc.), silicone flow agents, other flow agents, polysiloxanes, polyethers, silica, polyethylene wax, polypropylene wax, etc.

The chemistry of the components of the sol-gel will now be described in more detail.

Organosilane

Organosilanes are responsible for the bulk properties of the coating such as strength, chemical resistance, scratch hardness. The organosilane forms the backbone of the sol-gel and confers water repellent capabilities to the

coating. Suitable organosilanes must have the ability to cross link. Suitable organosilanes may have the following structure:

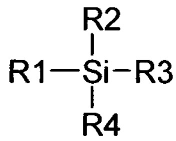

Wherein at least one of R1, R2, R3 or R4 are hydroxyl, halogens, alkoxy or acyloxy groups, while the remainder can be alkyl, alkenyl, aryl, alkylaryl, arylalkyl, alkenylaryl, arylalkenyl, alkylene, alkenylene, arylene, alkylarylene, arylalkylene, alkenylarylene or arylalkenylene.

R1, R2, R3 or R4 may be functional or non-functional groups.

Examples of functional groups include alkoxy, epoxy, methacrylic, acrylic, allyl, alkyd, phenyl, pyridyl, amino, mercaptyl, carboxyl or vinyl groups.

Examples of non-functional alkyl groups include methyl and ethyl.

R4 may be a polymerisable group, for example a polymerisable group as found in glycidoxypropyltrimethoxysilane, methacryloxypropyltrimethoxysilane, methacryloxypropyltriethoxysilaneor mercaptopropyltrimethoxysilane.

R1, R2, R3 or R4 may be interrupted by -O-, -S-, or -NH-

Organosilanes suitable for crosslinking purposes may be selected from the group comprising:

3-aminopropyltriethoxysilane, 3-glycidoxypropyltrimethoxysilane
p-aminophenyltrimethoxysilane, m-aminophenyltrimethoxysilane, allyltrimethoxysilane, n-(2-aminoethyl)-3-aminopropyltrimethoxysilane,
3-aminopropyltrimethoxysilane, 3-glycidoxypropyldiisopropylethoxysilane,
(3-glycidoxypropyl)methyldiethoxysilane, 3-glycidoxypropyltrimethoxysilane,
3-mercaptopropyltrimethoxysilane, 3 -mercaptopropyltriethoxysilane,
3-methacryloxypropylmethyldiethoxysilane, methacryloxypropyltriethoxysilane,
3-methacryloxypropylmethyldimethoxysilane, 3-methacryloxypropyltrimethoxysilane,
n-phenylaminopropyltrimethoxysilane, vinylmethyldiethoxysilane, vinyltriethoxysilane,
vinyltrimethoxysilane, and mixtures thereof

Other suitable organosilanes may include:

Tetraethyl orthosilicate, 1,6-Bis(trichlorosilyl)hexane, Tetrabutyl orthosilicate,
(3-Bromopropyl)trichlorosilane, Tetramethyl orthosilicate, Butyltrichlorosilane,
Tetramethyl orthosilicate, 3-Cyanopropyltrichlorosilane, Tetrapropyl orthosilicate,
Decyltrichlorosilane, 3-(Trimethoxysilyl)propyl acrylate,
[3-(Heptafluoroisopropoxy)propyl]trichlorosilane, Tris(tert-butoxy)silanol,
(2-Methylene-1,3-propanediyl)bis[trichlorosilane], Tris(tert-pentoxy)silanol, 7-Octenyltrichlorosilane, Ethoxydiphenylvinylsilane, Pentyltrichlorosilane,
3-Glycidoxypropyldimethylethoxysilane, Trichloro[2-(chloromethyl)allyl] silane,
Methoxy(dimethyl)octylsilane, Trichloro[4-(chloromethyl)phenyl]silane,
3-Aminopropyl(diethoxy)methylsilane, Trichloro(3-chloropropyl)silane,
(3-Chloropropyl)dimethoxymethylsilane, Trichlorocyclohexylsilane,
Cyclohexyl(dimethoxy)methylsilane, Trichlorocyclopentylsilane, Diethoxydiphenylsilane,
Trichlorododecylsilane, Diethoxy(3-glycidyloxypropyl)methylsilane, Trichloro(hexyl)silane,
Diethoxymethyloctadecylsilane, Trichloro(isobutyl)silane, Diethoxy(methyl)phenylsilane,
Trichloro(octadecyl)silane,
3-Glycidoxypropyldimethoxymethylsilane, Trichloro(octyl)silane,
(3-Mercaptopropyl)methyldimethoxysilane, Trichloro(phenethyl)silane,
Allyltriethoxysilane, Trichloro(phenyl)silane, Allyltrimethoxysilane, Trichloro(propyl)silane, 3-[2-(2-Aminoethylamino)ethylamino]propyl-trimethoxysilane, 2-(Trichlorosilyl)ethyl acetate,
[3-(2-Aminoethylamino)propyl]trimethoxysilane, Trichloro(3,3,3-trifluoropropyl)silane, (3-Aminopropyl)triethoxysilane, Ethoxy(dimethyl)vinylsilane,
Bis(3-(methylamino)propyl)trimethoxysilane, Ethoxytrimethylsilane,
(3-Chloropropyl)triethoxysilane; Methoxytrimethylsilane,
(3-Chloropropyl)trimethoxysilane, Diethoxydimethylsilane,

(2-Cyanoethyl)triethoxysilane, Diethoxy(methyl)vinylsilane,
3-Cyanopropyltriethoxysilane, 1,3-Diethoxy-1,1,3,3-tetramethyldisiloxane,
(3-Diethylaminopropyl)trimethoxysilane, Dimethoxydimethylsilane,
(N,N-Dimethylaminopropyl)trimethoxysilane, Dimethoxydimethylsilane,
Dimethyloctadecyl[3-(trimethoxysilyl)propyl]ammonium chloride,
Dimethoxymethylvinylsilane, 2-(3,4-Epoxycyclohexyl)ethyl-trimethoxysilane, 1,2-Bis(triethoxysilyl)ethane, (3-Glycidyloxypropyl)trimethoxysilane, 1,2-Bis(trimethoxysilyl)ethane, Isobutyl(trimethoxy)silane, (Chloromethyl)triethoxysilane,
(3-Mercaptopropyl)trimethoxysilane, 1,3-Dimethyltetramethoxydisiloxane,
N-Propyltriethoxysilane, Ethyltrimethoxysilane, Triethoxy(isobutyl)silane,
Triethoxy(ethyl)silane, Triethoxy(3-isocyanatopropyl)silane, Triethoxymethylsilane,
Triethoxy(octyl)silane, Triethoxymethylsilane, Triethoxyphenylsilane, Triethoxy(vinyl)silane,
Trimethoxy[3-(methylamino)propyl]silane, Trimethoxymethylsilane,
Trimethoxy(octadecyl)silane, Trimethoxymethylsilane,
Trimethoxy(7-octen-1-yl)silane, Trimethoxy(vinyl)silane, Trimethoxy(octyl)silane,
Trimethoxy(vinyl)silane, Trimethoxy[3-(phenylamino)propyl]silane,
Bis(trichlorosilyl)acetylene, Trimethoxy(2-phenylethyl)silane, 1,2-Bis(trichlorosilyl)ethane,
Trimethoxyphenylsilane, Bis(trichlorosilyl)methane,
Trimethoxy(propyl)silane, tert-Butyltrichlorosilane, Trimethoxy(propyl)silane,
Ethyltrichlorosilane, 3-(Trimethoxysilyl)propyl acrylate, Hexachlorodisilane,
3-(Trimethoxysilyl)propyl methacrylate, Hexachlorodisiloxane, 1-[3-(Trimethoxysilyl)propyl]urea, Methyltrichlorosilane, Tris[3-(trimethoxysilyl)propyl] isocyanurate, Methyltrichlorosilane, Allyltrichlorosilane, Trichloro(dichloromethyl)silane, Benzyltrichlorosilane, Trichloro(trichloromethyl)silane, Trichloro(vinyl)silane.

In one embodiment the organosilane is methacryloxypropyltrimethoxysilane (MAPTMS).
MAPTMS has good crosslinking ability and improved performance. For varying performance of the coating such as improved hardness a different organosilane such as tetra-ethyl-ortho-silicate (also known as tetra-ethoxy-silane) (TEOS) or a combination of organosilanes can be used.

Catalyst

A catalyst is added to the sol-gel to hydrolyse the organosilane. The catalyst may be acidic or basic in nature.
Suitable acid catalyst can be selected from the group consisting of organic acids such as: acetic acid, citric acid, and tartaric acid or mineral acids such as, sulphuric acid and nitric acid.
Suitable base catalysts are bases, such as ammonium hydroxide, sodium hydroxide or aniline. Base catalysts are slower than acid catalysts at equivalent concentrations.
Several catalysts may be used however a preference is for a weak organic acid for example acetic acid or a mineral acid such as nitric acid.
The molar ratio of catalyst: organosilane is typically between 1 : 10 and 1 : 1000, for example between 1 : 10 and 1 : 100.

Photoinitiator

Photoinitiators facilitate and catalyse cross-linking of certain chemical bonds such as vinyl groups. A photoinitiator can be incorporated into the sol-gel to improve the crosslinking of methacryl groups of the organosilane through a vinyl bond. This crosslinking can be activated through the use of a photoininiator, which, when activated by a UV source, facilitates the breaking of vinyl bonds.

The photoinitiator may be selected from,
Irgacure® 184 (1-Hydroxy cyclohexyl phenyl ketone),
Irgacure® 819 (Phosphine oxide, phenyl bis(2,4,6-trimethyl benzoyl),
Irgacure® 907 (2-Methyl-1-[4-(methylthio)phenyl-2-(4-morpholinyl)-1-propanone])
Irgacure® 1800: (25 % Bis(2,6-dimethoxybenzoyl)-2,4,4-trimethyl-pentylphosphineoxide + 75 % 1-Hydroxy-cyclohexyl-phenyl-ketone), and
Irgacure® 2959 (1-[4-(2-Hydroxyethoxy)-phenyl]-2-hydroxy-2-methyl-1-propane-1-one).

The molar ratio of photoinitiator : organosilane is in the range of 0.01 to 10%, for example 0.01 to 1%.

Organometallic precursor

An organometallic precursor is included in the sol-gel to improve the stability of the coating and to promote adhesion of the coating to a metal substrate. Suitable organometallic precursors may be selected from organofunctionalised zirconium, yttrium, cerium, lanthanum, aluminium, titanium, copper, indium, lithium, magnesium, manganese, nickel, rhodium, tin, vanadium.

In one embodiment the organometallic precursor is a transition metal precursor for example, a precursor of zirconium. The inclusion of a zirconium precursor may improve the adhesion of the coating, and/or the pH stability of the coating, and/or the film hardness. The zirconium precursor of choice is zirconium (VI) propoxide ($Zr(OPr)_4$) (70% in ethanol). The zirconium precursor has a greater reactivity compared to the reactivity of the organosilane precursor. Therefore the $Zr(OPr)_4$ must be chelated, reducing it's potential for binding from 4 to 2 sites. This is achieved by using a bidentate ligand in an equimolar ratio. Typical chelates include acetyl acetone, 2' 2 bipyridine (BiPy) and carboxylic acids such as methacrylic acid, acetic acid, and isobutyric acid (IBA). Diacids, such as tartaric acids should not be used, as they will cause precipitation.

The hydrolysis rates of organosilanes ($Si(OR)_n$) is slower than that of organometallics ($Ti(OR)_n$, $Zr(OR)_n$). To form a sol gel containing zirconium, it is necessary to combine these chemistries in a single matrix, this requires chelation of the organometallics using a chelate prior to incorporation into the sol-gel. Typically, zirconium and the chelator are mixed together for at least 45 minutes prior to adding to the sol-gel mixture. Suitable chelates include: carboxylic acids, phosphoric acids, hydroxyacids, polyols, or beta-diketones and allied derivatives (Sanchez et al., 2001). Chelating agents reduce the hydrolysis rates of organometallics to allow mixing with organosilanes.

Corrosion inhibitor

Corrosion inhibitors can be incorporated into the sol-gel.

Corrosion inhibitors are reducible species that bind to a metal surface, preventing further oxidation, and hence corrosion of the surface.

The corrosion inhibitor can be a cathodic inhibitor which migrates to a cathodic site and prevents the further oxidation of the base metal. Alternatively the inhibitor may be an anodic inhibitor that forms deposits on the anode surface (passivation) to prevent oxygen being reduced to hydroxyl ions.

In one aspect, the corrosion inhibitors can be considered as adsorption inhibitors. That is an inhibitor that has polar properties which allow it to be adsorbed onto a metal surface. Passivating (anodic) adsorption inhibitors form a protective oxide film on a metal surface whereas precipitating (cathodic) adsorption inhibitors form insoluble precipitates that can be used to coat a metal surface.

The corrosion inhibitor may be an inorganic or an organic inhibitor.

Organic inhibitors are chemicals that strongly absorb to shift in the corrosion potential (in the anodic or positive direction) of a metal substrate. This means that the metal is less willing to release electrons and is therefore passivated (a thin passive or unreactive film has formed on the surface). This mode of action differs from inorganic anodic inhibitors as no dissolution is required.

Organic inhibitors have been established as being compatible with organosilane based sol-gel systems as they can be added to solutions prior to cross-linking and film formation (Khramov et al., 2005).

Suitable organic inhibitors include heterocyclic nitrogen rich compounds that are easily reducible, forming an inert product on the metal surface, preferentially at the most active sites, where the highest levels of intermetallics are found.

Suitable heterocyclic nitrogen rich compounds may be selected from ammonium compounds, substituted ammonium, ammonia, amines, aromatic amines, porphyrins, amidines, diamidines, guanidines, diguanidines, polyguanidines, biguanides, biguanidines, imidotricarbonimidic diamides. imidotetracarbonimidic diamides, dibiguanides, bis(biguanidines), polybiguanides, poly(biguanidines), imidosulfamides, diimidosulfamides, bis(imidosulfamides), bis(diimidosulfamides), poly(imidosulfamides), poly(diimidosulfamides), phosphoramidimidic triamides, bis(phosphoramidimidic triamides), poly(phosphoramidimidic triamides), phosphoramidimidic acid, phosphorodiamidimidic acid, bis(phosphoramidimidic acid), bis(phosphorodiamidimidic acid), poly(phosphoramidimidic acid), poly(phosphorodiamidimidic acid), phosphonimidic diamides, bis(phosphonimidic diamides), poly(phosphonimidic diamides), phosphoramidimidic acid, bis(phosphoramidimidic acid), poly(phosphoramidimidic acid), azo compounds, formazan compounds, azine compounds, Schiff Bases, hydra zones, or hydramides. Examples of diamines include, but are not limited to: hydrazine, methanediamine, ethylenediamine (1,2-ethanediamine, en), trimethylenediamine (1,3-propanediamine, tn), putrescine (1,4-butanediamine, bn), cadaverine (1,5-pentanediamine), hexamethylenediamine (1,6-hexanediamine), 2,3-diaminobutane (sbn), stilbenediamine (1,2-diphenyl-1,2-ethanediamine, stien), cyclohexane-1,2-diamine (chxn), cyclopentane-1,2-diamine, 1,3-diazacyclopentane, 1,3-diazacyclohexane, piperazine, benzopiperazine, dibenzopiperazine, naphthopiperazine, diazepine, and 1,2-diaminobenzene (dab), diaminobenzoic acid (DABA).

Examples of triamines include, but are not limited to: N-(2-aminoethyl)-1,2-ethanediamine (dien, 2,2-tri); N-(2-arninoethyl)-1,3-propanediamine (2,3-tri); N-(3aminopropyl)-1,3-propanediamine (3,3-tri, dpt); N-(3-aminopropyl)-1,4-butanediamine (3,4-tri, spermidine); N-(2-aminoethyl)-1,4-butanediamine (2,4-tri); N-(6-hexyl)-1,6-hexanediamine (6,6-tri); 1,3,5-triaminocyclohexane (tach); 2-(aminomethyl)-1,3-propanediamine (tamm); 2-(aminomethyl)-2-methyl-1,3-propanediamine (tame); 2-(aminomethyl)-2-ethyl-1,3-propanediamine (tamp); 1,2,3-triaminopropane (tap); 2,4-(2-aminoethyl)azetidine; di(2-aminobenzyl)amine; hexahydro-1,3,5-triazine; and hexahydro-2,4,6-trimethyl-1,3,5-triazine.

Examples of tetramines include, but are not limited to: N,N'-(2-aminoethyl)-1,2-ethanediamine (2,2,2-tet, trien); N,N'-(2-aminoethyl)-1,3-propanediamine (2,3,2-tet, entnen); N,N'-(3-aminopropyl)-1,2-ethanediamine (3,2,3-tet, tnentn); N-(2-aminoethyl)-N'-(3-aminopropyl)-1,2-ethanediamine (2,2,3-tet); N-(2-aminoethyl)-N'-(3-aminopropyl)-1,3-propanediamine (3,3,2-tet); N,N'-(3-aminopropyl)-1,3-propanediamine (3,3,3-tet); NN'-(3-aminopropyl)-1,4-butanediamine (3,4,3-tet, spermine); tri(aminomethyl)amine (tren); tri(2-aminoethyl)amine (trtn); tri(3-aminopropyl)amine (trbn); 2,2-aminomethyl-1,3-propanediamine (tam); 1,2,3,4-tetraaminobutane (tab); N,N'-(2-aminophenyl)-1,2-ethanediamine; and N,N'-(2-aminophenyl)-1,3-propanediamine.

Examples of pentamines include, but are not limited to: N-[N-(2-aminoethyl)-2-aminoethyl]-N'-(2-aminoethyl)-1,2-ethanediamine (2,2,2,2-pent, tetren); N-[N-(3-aminopropyl)-2-aminoethyl]-N'-(3-aminopropyl)-1,2-ethanediamine (3,2,2,3-pent); N-[N-(3-aminopropyl)-3-aminopropyl]-N'-(3-aminopropyl)-1,3-propanediamine (3,3,3,3-pent, caldopentamine); N-[N-(2-aminobenzyl)-2-aminoethyl]-N'-(2-aminopropyl)-1,2-ethanediamine; N-[N-(2-aminoethyl)-2-aminoethyl]-N,N-(2-aminoethyl)amine (trenen); and N-[N-(2-aminopropyl)-2-aminoethyl]-N,N-(2-aminoethyl)amine (4-Me-trenen).

Examples of hexamines include, but are not limited to: N,N'-[N-(2-aminoethyl)-2-aminoethyl]-1,2-ethanediamine (2,2,2,2,2-hex, linpen); N,N-[N-(2-aminoethyl)-3-aminopropyl]-1,2-ethanediamine (2,3,2,3,2-hex); N,N,N',N'-(2-aminoethyl)-1,2-ethanediamine (penten, ten); N,N,N',N'-(2-aminoethyl)-1-methyl-1,2-ethanediamine (tpn, R-5-Me-penten); N,N,N',N'-(2-aminoethyl)-1,3-propanediamine (ttn); N,N,N',N'-(2-aminoethyl)-1,4-butanediamine (tbn); N,N,N',N'-(2-aminoethyl)-1,3-dimethyl-1,3-propanediamine (R,R-tptn, R,S-tptn); N-(2-aminoethyl)-2,2-[N-(2-aminoethyl)aminomethyl-1-propaneamine (sen); and N-(3-aminopropyl)-2,2-[N-(3-aminopropyl)aminomethyl-1-propaneamine (stn).

Examples of 5-membered heterocyclic rings that contain one nitrogen atom include, but are not limited to: 1-pyrroline, 2-pyrroline, 3-pyrroline, pyrrole, oxazole, isoxazole, thiazole, isothiazole, azaphosphole, benzopyrroline, benzopyrrole (indole), benzoxazole, benzisoxazole, benzothiazole, benzisothiazole, benzazaphosphole, dibenzopyrroline, dibenzopyrrole (carbazole), dibenzoxazole, dibenzisoxazole, dibenzothiazole, dibenzisothiazole, naphthopyrroline, naphthopyrrole, naphthoxazole, naphthisoxazole, naphthothiazole, naphthisothiazole, and naphthazaphosphole.

Examples of 5-membered heterocyclic rings that contain two nitrogen atoms include, but are not limited to: pyrazoline, imidazoline, imidazole, pyrazole, oxadiazole, thiadiazole, diazaphosphole, benzopyrazoline, benzimidazoline, benzimidazole (azindole), benzopyrazole (indazole), benzothiadiazole (piazthiole), benzoxadiazole (benzofurazan), naphthopyrazoline, naphthimidazoline, naphthimidazole, naphthopyrazole, naphthoxadiazole, and naphthothiadiazole.

Examples of 5-membered heterocyclic rings that contain three nitrogen atoms include, but are not limited to: triazole, oxatriazole, thiatriazole, benzotriazole, and naphthotriazole.

Examples of 5-membered heterocyclic rings that contain four nitrogen atoms include, but are not limited to: tetrazole.

Examples of 6-membered heterocyclic rings that contain one nitrogen atom include, but are not limited to: pyridine, picoline, lutidine, [gamma]-collidine, oxazine, thiazine, azaphosphorin, quinoline, isoquinoline, benzoxazine, benzothiazine, benzazaphosphorin, acridine, phenanthridine, phenothiazine (dibenzothiazine), dibenzoxazine, dibenzazaphosphorin, benzoquinoline (naphthopyridine), naphthoxazine, naphthothiazine, and naphthazaphosphorin.

Examples of 6-membered heterocyclic rings that contain two nitrogen atoms include, but are not limited to: pyrazine, pyridazine, pyrimidine, oxadiazine, thiadiazine, diazaphosphorin, quinoxaline (benzopyrazine), cinnoline (benzo[c]pyridazine), quinazoline (benzopyrimidine), phthalazine (benzo[d]pyridazine), benzoxadiazine, benzothiadiazine, phenazine (dibenzopyrazine), dibenzopyridazine, naphthopyrazine, naphthopyridazine, naphthopyrimidine, naphthoxadiazine, and naphthothiadiazine.

Examples of 6-membered heterocyclic rings that contain three nitrogen atoms include, but are not limited to: 1,3,5-triazine, 1,2,3-triazine, benzo-1,2,3-triazine, naphtho-1,2,3-triazine, oxatriazine, thiatriazine, melamine, and cyanuric acid.

Examples of 6-membered heterocyclic rings that contain four nitrogen atoms include the tetrazine group of compounds, for example the commercially available tetrazines such as: 3,6-diphenyl-1,2,4,5-tetrazine, 3,6-bis(2-chlorophenyl)-1,2,4,5-tetrazine, 3,6-di-2-pyridyl-1,2,4,5-tetrazine, clofentezine, 2,4,6-triphenyl-1,2,3,4-tetrahydro-(1,2,4,5)tetrazine, 3,6-di-pyridin-2-yl-1,2-dihydro-(1,2,4,5)tetrazine, 3,6-diphenyl-1,2,4,5-tetrazine, 3,6-dipropyl-1,4-dihydro-(1,2,4,5)tetrazine, and hexahydro-1,2,4,5-tetrazine-3,6-dione. Alternatively, tetrazines may be synthesised using the process described in Kaim (2002) the entire contents of which is incorporated herein by reference.

Tetrazine inhibitors in accordance with the invention may have the following structures (a) or (b):

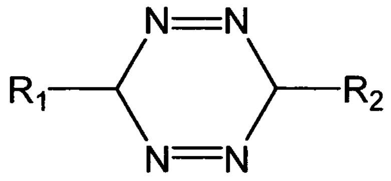 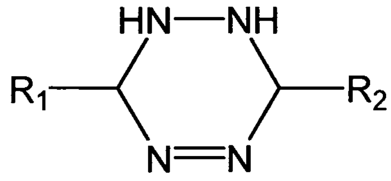

(a) or (b)

Where R1 and R2 can be hydroxyl, halogens, alkoxy, acyloxy, alkyl, alkenyl, aryl, alkylaryl, arylalkyl, alkenylaryl, arylalkenyl, alkylene, alkenylene, arylene, alkylarylene, arylalkylene, alkenylarylene, arylalkenylene, ethers, thiols, sulphides, sulphur analogs of alcohols or ethers, benzene or derivatives thereof, amines, phosphines, phosphorus analogs of amines, aldehydes, ketones, carboxylic acids and carboxylic derivatives

In one embodiment the tetrazine inhibitor is 3,6-di-2-pyridyl-1,2,4,5-tetrazine (DPTZ).

Corrosion inhibitors such as tetrazines and diamino benzoic acid can chelate zirconium precursors. Therefore if a tetrazine or diamino benzoic acid is incorporated into the sol gel there is no need to include an additional chelator as the tetrazine or diamino benzoic acid will function as both a chelator for the zirconium precursor and as a corrosion inhibitor.

Additives

One or more additives can be incorporated into the sol gel. The additive will impart a functionality to the sol gel coating. Examples of additives include:

- anti-microbial additive for example a nano- metal such as nano- silver, nano- copper, nano- zinc and mixtures thereof;
- scratch resistant additive for example zeolites (microporous aluminosilicate minerals) may be added to improve the scratch hardness properties of the coating. In some cases the zeolites may contain metal ions, and can therefore be considered antimicrobial. A series of anticrobial zeolite has been commercially supplied under the tradename AgION;
- water repellent additive for example fluorinated additives to reduce the reduce the surface energy of the sol-gel coating thereby preventing water ingress. Suitable fluorinated additives include those containing silane chemistries such as Dynasylan® F 8815, Dynasylan® F 8261 and Dynasylan® F 8061-E;
- Dyes, including pH indicators, to impart visual properties to the sol-gel coating, for example cresol red can be added to the basic sol-gel composition to give a deep red colour, but is also used a pH indicator allowing the coating to change colour when immersed in different pH solutions for extended periods of time (greater than at least one hour);
- Inorganic clays may be incorporated to impart improved scratch resistance properties to the sol-gel coating. For example, bentonite may be added to improve the scratch resistance property of the coating and give a matt finish to the sol-gel coating rather than a gloss finish. Additionally, the inorganic clay may also be used as a thixotrope (decreases the viscosity of a solution over time at a constant shear/stirring rate) to modify the viscosity of the sol-gel;
- Organic oligomers may be incorporated into the sol-gel to improve the flexibility of the final sol-gel coating. This will reduce the hardness of the coating but will improve the brittleness sometimes seen when the level of inorganic chemistries of the coating is too high;
- The inclusion of crosslinking chemistries will decrease the porosity of the coatings and improve the structural strength. Examples of crosslinking chemistries include bis-silanes, diaminoalkanes, diisocyanates, divinylbenzenes, acrylics, amides & polyamides, aziridines, benzoguanamines, carbodiimide resins, glycolurils, isocyanates, melamines, polyols, silicon based compounds, urea-formaldehydes, urethanes & polyurethanes; and
- Other additives normally used in coatings, especially acid-catalyzed coatings, and those used in antimicrobial compositions, can be included as well. Representative examples of such additives include, but are not limited to, wetting agents, defoaming agents, anti-sag agents, pigments, sheen controllers, plasticizers, (e. g., DINP (di-isonomylphthalate), etc. ), stabilizers, alcohols (e.g., butanol, isobutanol, ethanol, etc. ), silicone flow agents, other flow agents, polysiloxanes, polyethers, silica, polyethylene wax, polypropylene wax, etc.

Sol-gel

The silane sol-gel process has received considerable attention as a method of coating metal substrates, due to the presence of a natural hydroxyl monolayer to which a silane film will bind to form a strong covalent bond. The film properties can be altered to minimise water ingress thus protecting the metal. These coatings are chemically inert and dense, with good barrier properties, and high mechanical strength. By varying the silane precursor organic substituent,

with chemical functionalities such as amino, epoxy, vinyl, and allyl groups (Voevodin et al., 2001) a wide range of sol-gel coatings can be designed.

The organosilane precursor(s) can be varied depending on the final film properties required. For applications where film flexibility is a requirement the organic component can be increased by varying the precursor mixture at the outset.

The sol-gel may be a combination of a hydrolysed organosilane precursor and a chelated zirconium precursor with a corrosion inhibitor and optionally a photoinitiator. The organosilane precursor(s) can be chosen from a wide variety of commercially available sources, but preferentially is MAPTMS for superior crosslinking. The zirconium precursor is preferably zirconium (IV) isopropoxide which is chelated to allow mixing with the silane precursor. The chelate can be MAAH, IBA, or acetic acid. Alternatively the chelate may be a corrosion inhibitor, such a DPTZ or a β-diketone or carboxyl modified azole species (e.g. triazole or tetrazole). The photoinitiator can be used in the presence of a silane containing vinyl bonds, such as those possessed by acrylic or methacryl functionalised organosilanes.

The organosilane precursor may be combined with an acid catalyst, which can be an organic acid such as acetic acid or a mineral acid such as nitric acid. The sol-gel may also include water to hydrolyse the organosilane/catalyst/organometallic precursor/inhibitor mixture.

Within the completely hydrolysed mixture zirconium domains or nanoparticles form, typically with sizes in the region of 1 to 60 nm in size.

<u>Inhibitor Incorporation</u>

Inhibitors are leachable and active in corrosive environments. Inhibitor containing compounds may be formulated so that in addition to, or instead of, an immediate release inhibitor source there is a sustained release inhibitor source. The sustained release inhibitor source can be considered as a reservoir of inhibitor that allows for sustained release of an inhibitor as and when is required.

There are two routes for inhibitor incorporation. The first method involves adding the inhibitor to the sol-gel solution at a weight/volume percentage of between about 0.1 to 10%, such as 0.1 to 1% (based on the final dry weight of the film). The dispersion is controlled by the solution mixing.

An alternative route for inhibitor incorporation is to use the inhibitor as a chelate for the organometallic precursor.

Tetrazines have the potential to act as chelates for zirconium precursors. The availability of nitrogen, and their respective lone pairs for donor purposes, makes these aromatic species ideal as chelates. The molar ratio is maintained in equimolar concentrations to avoid precipitation problems. The structure of the tetrazine-zirconium complex is as follows:

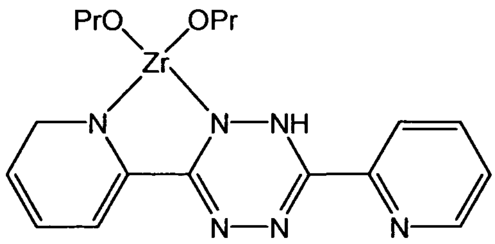

By incorporating the inhibitor as a chelate, dispersion of the inhibitor is achieved on a nanoparticle scale as the inhibitor will be bound to the zirconium nanoparticles. The self healing property of the sol-gel coating is realised by the zirconium-tetrazine nanoparticle releasing the tetrazine chelate in the presence of corrosion activity. This activity occurs on copper rich aluminium alloys at copper intermetallic sites *via* the oxygen reduction reaction (ORR). The chemical affinity of tetrazines for copper ensures the ORR is reduced by inhibitor adsorption and thus lowers the corrosion rate. Referring to Fig. 1 in which an inhibitor (I) has been incorporated as a chelate, the inhibitor is in direct contact with zirconium. Therefore during corrosion when the pH level is increased, zirconium reacts to form a hydroxide, to protect the organosilane film from degrading, thereby releasing the inhibitor. The inhibitor is then free to migrate to the corrosion site (region of higher chemical activity) and irreversibly bind with the metal substrate, thereby inhibiting the corrosion reaction.

The trapped inhibitors can be considered as self-healing agents and may be stored in nanocapsule form, anchored to the organosilane sol-gel backbone. Suitable inhibitor species for incorporation into a sol gel by chelation include for example, tetrazines, and triazoles which can be modified with a β-diketone or carboxyl ligand.

Nitrogen based inhibitors are a popular choice for protective coatings, due to their ability to bond with corrosive chloride ions. This prevents the chloride ions reaching the metal surface where such ions accelerate the corrosion process.

The corrosion inhibitor will be activated by environmentally-triggered stimuli, to initiate the self-healing process (e.g. suppression of electrochemical events).

The invention is further illustrated with non-limiting examples given below.

Examples

**Materials:**

*Chemicals*

3-methacryloxypropyltrimethoxysilane, zirconium propoxide (70 wt. % in 1-propanol), Ethanol, Nitric Acid (70%), sodium chloride, ammonium sulphate, Dipyridyltetrazine (DPTZ), 1,2,4 triazole and benzotriazole were purchased from Sigma Aldrich and were used as received.
The molecular formula of DPTZ is illustrated below:

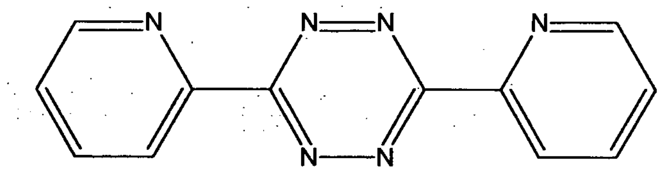

Oakite 61B was purchased from Chemetall (UK).

*Metal:*

Anticorrosion coatings of the invention may be applied to many different types of metal or alloy for example, the suitable metals may be selected from the group comprising:- cast-iron, steel, aluminium, aluminium alloys, zinc, zinc alloys, magnesium, magnesium alloys, copper, copper alloys, tin, tin alloys, nickel alloys, titanium, and titanium alloys.
Anticorrosion coatings of the invention may also be suitable to use with alloys of cobalt, gallium, zirconium, silver and indium.
In one embodiment, coatings of the invention are particularly suited for alloys containing copper for example aluminium alloys containing up to 5% (w/w) copper. For example, aluminium alloys used in the aerospace industry such as those listed in Table A below.

**Table A: Nominal Composition of Aluminium Alloys used in the Aerospace Industry**

| Alloy | Cu | Mg | Zn | Si | Mn | Cr |
|---|---|---|---|---|---|---|
| Al 356 | - | 0.35 | - | 7.0 | - | - |
| Al 2024-T3 | 4.4 | 1.5 | - | - | 0.6 | - |
| Al 3003 | 0.12 | - | - | - | 1.2 | - |
| Al 6061-T6 | 0.3 | 1.0 | - | 0.6 | - | 0.2 |
| Al 7075-T6 | 1.6 | 2.5 | 5.6 | - | - | 0.23 |

In the specific examples described below, aerospace grade AA2024-T3 aluminium panels (0.8 mm thick) was used. These panels were sourced from an industrial partner, and were cut into 150 mm x 100 mm panels.

*Plastic Bottles:*

LDPE plastic bottles (28 mL volume) were purchased from AGB Scientific, Ireland.

**Forming sol-gels**

If more than one organosilane is used, the organosilanes can be mixed prior to hydrolysis. The organosilane(s) is (are) hydrolysed using a weak acid solution, composed of a weak organic acid such as acetic acid or nitric acid. The acid : precursor molar ratio is generally in the range 1:10 to 1:100. The solution is allowed to mix and is then combined with a zirconium solution, mixed and the reaction is then completed by adding water to neutralise the solution.

***Example 1*** *- Synthesis of disubstituted tetrazines*

*1.1 Synthesis of 3,6-bis(3,5-dimetylpyrazol-1-yl)-1,2,4,5-tetrazine (dmptz)*

The synthesis was performed using a three-step published procedure (Codburn et al., 1991) according to the following scheme:

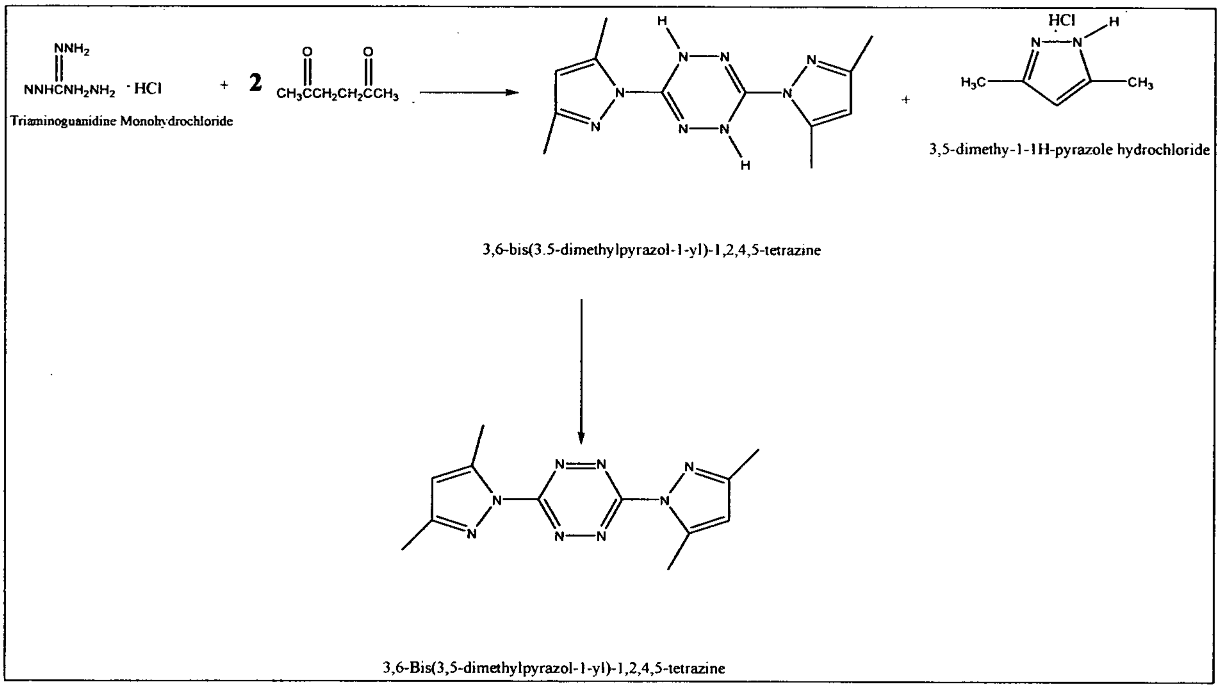

Triaminoguanidine Monohydrochloride

3,5-dimethy-1-1H-pyrazole hydrochloride

3,6-bis(3.5-dimethylpyrazol-1-yl)-1,2,4,5-tetrazine

3,6-Bis(3,5-dimethylpyrazol-1-yl)-1,2,4,5-tetrazine

1.1.1 Synthesis of Triaminoguanidine Monohydrochloride.

Hydrazine monohydrate was added slowly to guanidine hydrochloride (19.1g, 0.020 moles) in 1,4-dioxane (100 ml) under stirring. The mixture was heated under reflux for 2 hrs. The solution was then cooled to room temperature and the product was collected by Buchner filtration, washed with 1,4-dioxane and dried on the air. The product formed was triaminoguanidine.

1.1.2 Synthesis of 3,6-bis(3,5-dimethylpyrazol-1-yl)-1,2-dihydro-1,2,4,5-tetrazine.

2,4-Pentanedione (30.0 g, 0.30 moles) was slowly added to triaminoguanidine monohydrochloride (21.09 g, 0.15 moles) in water (150 ml) cooled in an ice-bath. The mixture was heated under reflux for 4h. During the experiment a yellow solid precipitated out of solution.

The solution was cooled, the product was collected by filtration, washed with water, and dried to yield a yellow powder of 3,6-bis(3,5-dimethylpyrazol-1-yl)-1,2-dihydro-1,2,4,5-tetrazine.

1.1.3 Oxidation to 3,6-bis(3.5-dimethylpyrazol-1-yl)-1.2,4,5-tetrazine

3,6-Bis(3.5-dimethylpyrazol-1-yl)-1,2,4,5-tetrazine was prepared by oxidisation of 3,6-Bis(3,5-dimethylpyrazol-1-yl)-1,2-dihydro-1,2,4,5-tetrazine using mixture of NO and $NO_2$ gases. NO/$NO_2$ gas was generated by slow addition of concentrated nitric acid onto iron filings in a reaction vessel (3-neck round bottom flask). A slow steady stream of argon gas was used to bubble the NO/$NO_2$ gas mixture through a series of tubes and a gas trap, into a solution of 3,6-Bis(3,5-dimethylpyrazol-1-yl)-1,2-dihydro-1,2,4,5-tetrazine (13.2g) in 1-methyl-2-pyrrrolidinone(100 ml) for one hour. Upon oxidation the reaction mixture colour changed to deep red. Ice water (200 ml) was added to the mixture, and the red solid that precipitated out of solution was collected by filtration and washed with water. The final translucent red product was crystallised from acetonitrile and dried in vacuum

*1.2 Synthesis of 3, 6-diamino-1,2,4,5-tetrazine (datz)*

There are two published methods for the preparation of 3,6-diamino-tetrazine in moderately good yields. One of the techniques uses a high pressure synthesis step which requires special expensive high pressure containers (Codburn et al., 1991). We used the simpler second method (Codburn and Ott, 1991), which is based on the reaction of 1,3-diaminoguanidine monochloride and 2,4-pentanedionei according to the following scheme:

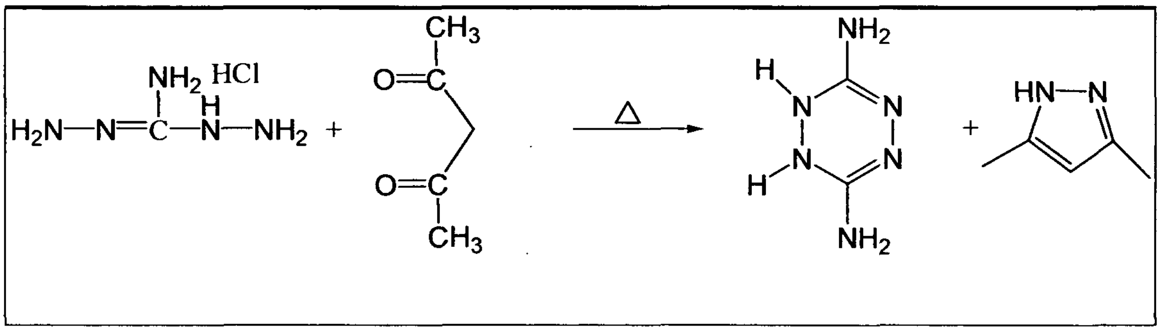

1.2.1 Synthesis of 3,6-diamino-1,2-dihydro-1,2,4,5-tetrazine monohydrochloride

2,4-pentanedione (20 g, 0.2 moles) was slowly added to 1,3-diaminoguanidine monohydrochloride (25.6 g, 0.2 moles) in 2-propanol (50 ml). The mixture was stirred at room temperature for 24 h. Then the mixture was heated under reflux for 8 h. The product which precipitated at room temperature was collected by Buchner filtration and washed three times with 2-propanol (10 ml). The product was recrystallised from the propanol (30 ml) and water (5 ml) mixture at -10°C. The crystals of 3,6-Diamino-1,2-dihydro-1,2,4,5-tetrazine monohydrochloride were collected by filtration and dried.

1.2.2 Synthesis of 3,6-diamino-1,2,4,5-tetrazine (datz)

Sodium perborate tetrahydrate (16g, 0.1 moles) was slowly added to a stirring solution of 3,6-Diamino-1,2-dihydro-1,2,4,5-tetrazine monohydrochloride (15g, 0.1 moles) in water (500ml) at room temperature. As the sodium perborate dissolved, the colour changed from pink to dark red. The mixture was stirred at room temperature for two h before being cooled to 0°C. The precipitate was collected by Buchner filtration, washed three times with ice water (20ml) and dried under reduced pressure to give pure product 3,6-diamino-1,2,4,5-tetrazine (8.96 g, 80% yield).

*1.3 Synthesis of 3,6-dicarboxylic-1,2,4,5-tetrazine (dctz)*

The synthesis of 3,6-dicarboxylic-1,2,4,5-tetrazine was performed using a modified published procedure (www.orgsyn.org keysearch: tetrazine).

1.3.1 Synthesis of disodium dihydro-1,2,4,5-tetrazine-3,6-carboxylate

Sodium hydroxide (16g, 0.4 moles) was dissolved in water (25 ml) and the mixture was heated to 70°C. Ethyl diazocetate (10g, 0.88 moles) was added slowly over 2 h to the mixture ensuring that the temperature stayed within the range 70°C±10°C.

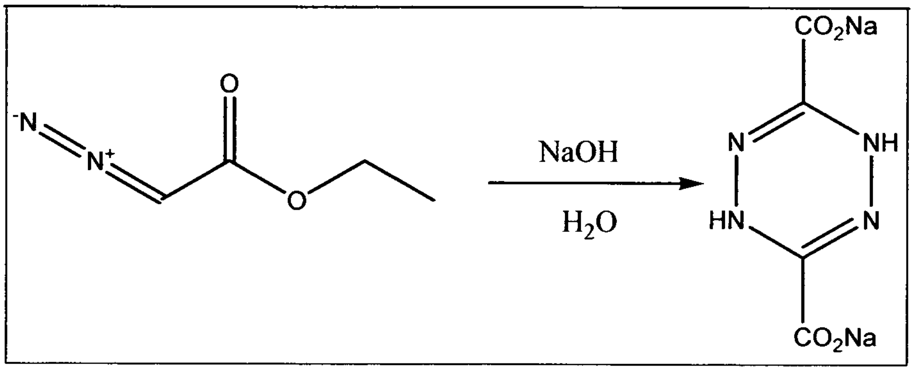

The mixture was then left stirring until it reached room temperature. Ethanol (100 ml) was added into the flask, mixed, allowed to settle and the top layer was decanted. The washing was repeated further three times. The brown precipitate was collected by Buchner filtration and washed two times with ethanol (10 ml) and three times with diethyl ether (20 ml).

1.3.2 Synthesis of dihydro-1,2,4,5-tetrazine-3,6-carboxylic acid

Disodium dihydro-1,2,4,5-tetrazine-3,6-carboxylate (8.0g 37 mmoles) was dissolved in the mixture of ice (10 g) and water (5 ml) in a reaction vessel (50 ml round bottom flask) and cooled to -10°C using a salt/ice bath. The mixture was rapidly stirred and HCl (8ml, 34% conc.) was added drop-wise over an hour. The mixture was then washed with dry ether (20 ml) three times and the ether layer was decanted each time. The yellow product was then collected by Buchner filtration, washed again with ether (10 ml) and dried under vacuum, giving dihydro-1,2,4,5-tetrazine-3,6-carboxylaic acid.

1.3.3 Synthesis of *3,6-dicarboxylic-1,2,4,5-tetrazine*

Dihydro-1,2,4,5-tetrazine-3,6-carboxylaic acid (7.2g, 3.5x$10^{-2}$ moles) was dissolved in acetonitrile (20ml) and oxidised using NO and $NO_2$. NO/$NO_2$ gas was generated as described above in the synthesis of dmptz. The NO/$NO_2$ gas was slowly bubbled through the acetonitrile solution for 2 hours. The reaction mixture changed colour becoming a deep red. The red precipitate was collected by Buchner filtration and dried on the air to yield 3,6-Dicarboxylic-1,2,4,5-tetrazine:

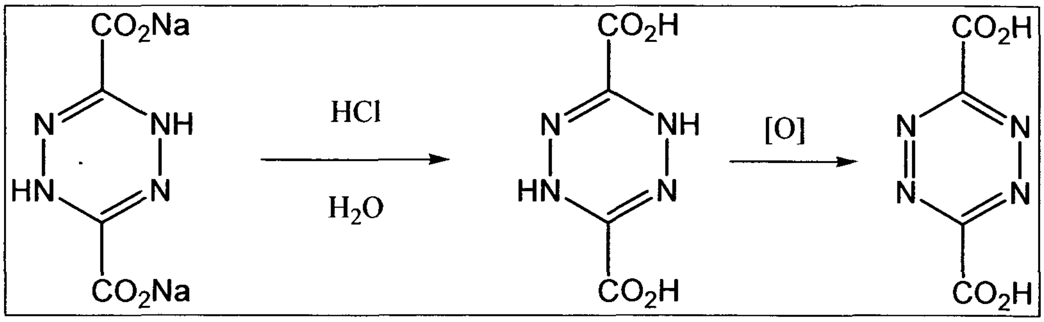


*1.4 Synthesis of 3-amino-1,2,4,5-tetrazine-6-carboxylic acid*

The two step procedure was carried out using DCTZ:

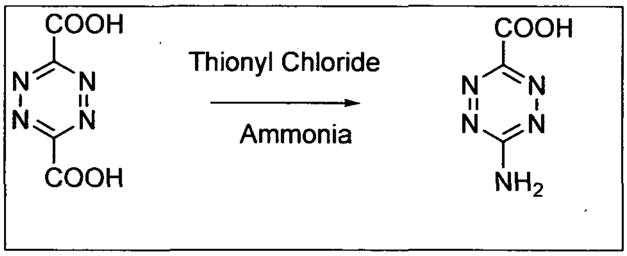


1.4.1 Step 1: Use of (freshly distilled) thionyl chloride into acid chloride:

$$R\text{-}COOH + SOCl_2 \rightarrow R\text{-}COCl + SO_2 + HCl$$

DCTZ (1 g) was refluxed with freshly distilled Thionyl Chloride (excess, 5 mls) in an anhydrous environment for 30 min. Then the excess thionyl chloride was removed by distillation and the remaining solution containing the acid chloride was reacted immediately in step 2.

1.4.2 Step 2: Conversion of R-COCl to R-$CONH_2$

$$R\text{-}COCl + 2NH_3 \rightarrow R\text{-}CONH_2 + NH_4Cl$$

wherein:

R = 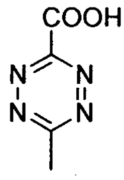

To the acid chloride solution, concentrated ammonia (in excess) was added at room temperature with constant stirring. The product, of 3-amino-1,2,4,5-tetrazine-6-carboxylic acid, was then collected and washed.

*1.5 Synthesis of 3-amino-(3,5-dimethylpyrazol-1-yl)-1,2,4,5-tetrazine*

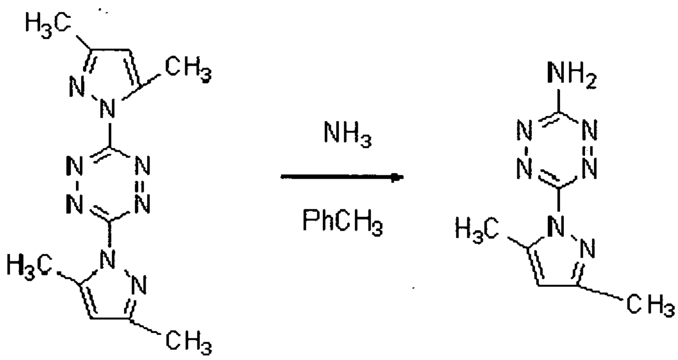


A slurry of 3,6-Bis(3,5-dimethylpyrazole-1-yl)-1,2,4,5-tetrazine (0.500 g, 1.85 mmols) in toluene (10 mls) was left stirring in a 2-neck 250 ml round bottomed flask. This was treated by bubbling ammonia gas through the reaction mixture. After 1.5 hours the red solid was collected by filtration, washed with toluene and dried, yielding the products.

***Example 2*** *- Formulating a sol gel with a ligand as the chelate*

In this example, methacrylic acid (MAAH) was used as the chelating agent.
Referring to the flow diagram of Fig. 2:

*Organosilane Hydrolysis (A)*

Organosilane hydrolysis was effected by hydrolysing MAPTMS with an aqueous $HNO_3$ 0.01M solution in a 1 : 0.75 volume ratio (below this ratio, precipitation of zirconium species occurred during the second hydrolysis). As MAPTMS and water were not miscible, the hydrolysis was performed in a heterogeneous way. After 20 minutes of stirring, the production of methanol became sufficient to allow the miscibility of all species present in solution.

*Zirconium Chelation (B)*

Strong complexing ligands have been often used for non-silicate metal alkoxide precursors in order to control hydrolysis condensation reactions (Livage and Sanchez, 1992). Among these strong complexing ligands, MAAH can be covalently bonded to the zirconium atom through two oxygen atoms and a third bond is shared on the two C-O bond to respect the carbon valence. MAAH was added dropwise to $Zr(OPr)_4$ with a molar ratio of 1:1. MAAH reacted on $Zr(OPr)_4$ agent to form a modified zirconium alkoxide $Zr(OPr)_{4-2x}(MAA)_x$ where MAA is the deprotonated form of MAAH.

Due to the equimolar proportions of alkoxide and MAAH in this preparation, the most probable resulting complex is $Zr(OPr)_2MAA$.

*Organosilane Zirconium Combination (C)*

After 45 minutes, the partially hydrolyzed MAPTMS was slowly added to the zirconate complex. This mixture is characterized by a temperature increase, demonstrating the formation of irreversible chemical bonds.

*Final Hydrolysis*

Following another 2 minutes, water (pH 7) was then added to this mixture with a final 2.5 : 1 : 1 : 5, MAPTMS : MAAH : $Zr(OPr)_4$: $H_2O$ molar ratio. This second hydrolysis leads to a stable and homogeneous sol after a final hydrolysis time of about 45 minutes. At this stage the corrosion inhibitors (DPTZ, 1,2,4-Triazole and benzotriazole) were added to give a final inhibitor concentration of up to 0.1, 0.2, 0.3, 0.4, 0.5% (weight/weight percent with the final film). These resulting sols were then left stirring for one further hour before deposition on aluminium panels.

***Example 3*** *- Formulating a sol gel with the inhibitor as a chelate*

In this example, DPTZ was used as the chelating agent.
Referring to Fig. 3:

*Organosilane Hydrolysis (A)*

Organosilane hydrolysis was effected by hydrolysing MAPTMS with an aqueous $HNO_3$ 0.01M solution in a 1 : 0.75 volume ratio. As MAPTMS and water were not miscible, the hydrolysis was performed in a heterogeneous way. After 20 minutes of stirring, the production of methanol became sufficient to allow the miscibility of all species present in solution.

*Zirconium Chelation (B)*

DPTZ (dissolved in EtOH) was added dropwise to $Zr(OPr)_4$ with a molar ratio of 1:1.

*Organosilane Zirconium Combination (C)*

After about 45 minutes (using the above concentrations), the partially hydrolyzed MAPTMS was slowly added to the zirconate complex. This mixture is characterized by a temperature increase, demonstrating the formation of irreversible chemical bonds

*Final Hydrolysis*

Following another 2 minutes (using the above concentrations), water (pH 7) was then added to this mixture with a final 2.5 : 1 : 1 : 5, MAPTMS : DPTZ : $Zr(OPr)_4$ : $H_2O$ molar ratio. This second hydrolysis leads to a stable and homogeneous sol after about 45 minutes. Sols were then left stirring for one hour before deposition on aluminium panels.

***Example 4*** *- Forming a sol gel with organic chelates*

The aim of this Example was to study the performance of hybrid sol-gel coatings on AA 2024-T3 aluminium alloy while varying the ligands used to chelate the zirconium precursor. Zirconium n-propoxide was chelated with three carboxylic acids (methacrylic, acetic and isobutyric acid), a β-diketone (AcAc) and Bipy to form nanoparticles within a silane matrix based on 3-(trimethoxysilyl)propylmethacrylate (MAPTMS). Once applied as a coating, the influence of the ligand on the physical properties was studied using Fourier transform infra red (FT-IR) spectroscopy, differential scanning calorimetry (DSC) and dynamic light scattering (DLS). The electrochemical behaviour of the coatings was studied using potentiodynamic scanning (PDS) and electrochemical impedance spectroscopy (EIS). Long term performance was evaluated using neutral salt spray test.
The results indicate that the effect of ligands on performance of hybrid coatings is very significant, especially in harsh environments where aluminium alloys are dependant on protective coatings for long term usage.

*Synthesis of Hybrid Sols*

The sols were prepared according to the experimental schematic in Fig. 4. The silane precursor, 3-(trimethoxysilyl)propylmethacrylate (MAPTMS) (Sigma Aldrich, Irl, Assay ~99%) was pre-hydrolysed using 0.01 N HCl for 45 min (solution A). Simultaneously, zirconium (IV) n-propoxide (TPOZ) (Sigma Aldrich, Ireland, Assay ~70% in propanol) was chelated using one of five ligands (Table 1, below), at a 1:1 molar ratio for 45 minutes (solution B) to form a zirconium complex. All of the ligands (acetic acid, isobutyric acid, methacrylic acid, acetylacetone and 2,2'-bipyridine) were purchased from Sigma Alrich (Ireland) and used without further modification. Solution A was slowly added to solution B over ten minutes. The mixture of A with B is characterised by an exothermic reaction indicating the hydrolysis of the remaining propoxy bonds on the zirconium precursor, rather than a physical dispersion, was occurring. Following another 45 min, water (pH 7) was added to this mixture to give a final molar ratio of 2.5:1:1:5 (MAPTMS:Ligand:TPOZ:$H_2O$), as used previously (Oubaha et al., 2005). For description purposes the final sol-gel coating materials will be referred in shorthand notation as Si/Zr/Ligand (eg. Si/Zr/AcOH).

**Table 1 - ligands used to chelate TPOZ**

| Name | Ligand Abbreviation | Structure |
|---|---|---|
| Acetic Acid | AcOH | 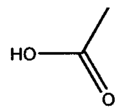 |
| Isobutyric Acid | IBA | 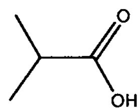 |
| Methacrylic acid | MAAH | 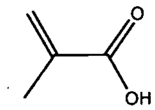 |
| Acetylacetone | AcAc | 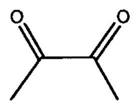 |
| 2,2'-BiPyridine | Bipy | 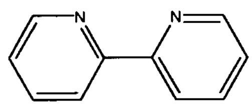 |

*Preparation of sol-gel coating*

AA2024-T3 aluminium panels (150 mm x 100 mm) were sourced from Amari Irl, Clondalkin. The panels were degreased with isopropanol, alkaline cleaned using Oakite 61 B® (Chemetall, UK) by immersion at 60°C for 1 minute and washed in warm deionised water. Any smut was removed by washing in 10% nitric acid (Sigma, Ireland) and washed in deionised water. The sols were filtered using a 0.45 $\mu$m syringe filter and applied by spin coating on AA 2024-T3 alloy at up to 1000 rpm and cured for 12 hrs at 100°C. The final thickness of all sol-gel coating was 3.5 $\mu$m ($\pm$0.5 $\mu$m), as measured using an Elcometer® non destructive coating thickness gauge. All finishes were touch dry within 24 hours, with a gloss finish.

*Measurements*

The electrochemical data was obtained using a Solartron SI 1287/1855B system comprising of frequency analyser and potentiostat. Potentiodynamic scanning was performed using an electrochemical cell (PAR K0235 Flat Cell) with an exposed area of 0.78cm$^2$ in an aerated Harrison's solution (3.5 wt% $(NH_4)_2SO4$ and 0.5 wt% NaCl) where the coated metal acted as a working electrode, a silver/silver chloride (Ag/AgCl) electrode was used as a reference electrode and platinum mesh as a counter electrode. All scans were acquired in the region from -0.4 V to + 0.5V vs. $E_{oc}$, with a scan rate 20 mV/sec at room temperatures (20 °C $\pm$ 2 °C).

Electrochemical impedance data was performed using the electrochemical cells prepared by slicing polypropylene sample bottles (2.5 cm diameter) 10 mm from the base which were then secured on the sol-gel coated aluminium

substrate using a 2K epoxy adhesive (Araldite, Radionics (Ireland)). A dilute Harrison's solution was used as electrolyte (0.35 wt% $(NH_4)_2SO_4$ and 0.05 wt% NaCl). All measurements were made at the open circuit potential (OCP, $E_{oc}$) with an applied 10mV sinusoidal perturbation in the frequency range $1 \times 10^6$ to $1 \times 10^{-2}$ Hz (10 points per decade).

Samples for differential scanning calorimetry (DSC) were prepared by dropping 10 μl of the sol into aluminium sample pans and curing at 100° C for 1 hr in an oven. DSC measurements were carried out using a Rheometric Scientific DSC QC instrument under an air atmosphere at a heating rate of 10°C/min between 50°C and 400°C.

Sol-gel particle sizes were determined using a Malvern Nano-ZS instrument, using the Dynamic light scattering (DLS) technique.

The chemical bonding within the zirconium complexes was characterised by Fourier Transform Infrared Spectroscopy (FTIR, Perkin Elmer GX). The solution B was dried at 100° C for 12 hrs. The dried powders were then crushed with KBr pellets to form disks and analysed in transmission mode.

The corrosion resistance of the coated AA2024-T3 alloys was evaluated by exposure of the scribed samples to salt fog atmosphere generated from 5 wt% aqueous NaCl solution at 35 (± 1) °C for 168 hours according to ASTM B117 specifications. The edges and backs of all panels were protected using a two pack epoxy coating prepared using Desmophen A365 and Desmodure N75 (Bayer AG, Germany). The sides were also taped using insulating tape.

*FTIR Results*

FTIR spectroscopy is a powerful characterisation technique to identify the coordination mode of a carboxylate ligand in metal carboxylates (Chatry et al., 1994). To identify the effect of the ligands on the nature of the coordination with the zirconium atom, 5 complexes were synthesised and respective infrared spectra recorded in the 1300 - 1800 $cm^{-1}$ spectral range, as represented in Table 2 below. This is well known to be the region where the carboxylic vibration bands are usually identified (Perrin et al., 2003). Within this spectral window TPOZ shows 6 absorption bands centred at 1350, 1360, 1380, 1440, 1460 and 1470 $cm^{-1}$ ascribable to the stretching vibrations of the aliphatic CH groups contained in the propoxide group (Heobbel et al., 1997). The absorption vibrations involving the Zr-OPr group are primarily located in the range 800-1300$cm^{-1}$ (Rubio et al., 1998) and do not show any absorption beyond 1500$cm^{-1}$. Within the 1300 - 1800 $cm^{-1}$ spectral range, the chelated TPOZ shows several absorption bands inherent to the fundamental vibration of the zirconium nanoparticle (Oubahaet al., 2005).

**Table 2 - FTIR peakassignation for chelated zirconium precursors in the 1300 - 1800$cm^{-1}$ region**

| Ligand | Wavenumber ($cm^{-1}$) | Inference |
|---|---|---|
| **AcOH** | 1548 | $\upsilon_{as}$ $COO^-$ |
| | 1446 | $\upsilon_s$ $COO^-$ |
| **IBA** | 1542 | $\upsilon_{as}$ $COO^-$ |
| | 1477 | $\upsilon_s$ $COO^-$ |
| | 1430 | $\delta CH_3$ |
| **MAAH** | 1770 | C=O |
| | 1550 | $\upsilon_{as}$ $COO^-$ |
| | 1448 | $\upsilon_s$ $COO^-$ |
| **AcAc** | 1598 | γC=O (bonded AcAc - enol form |
| | 1523 | υ C=C (bonded AcAc - enol form |
| | 1373 | δZr-O |
| **Bipy** | 1565 | Zr - N |
| | 1315 | C-N |

The Zr/Ligand complexes synthesised with carboxylic acids ligands (MAAH, IBA, and AcOH) have two peaks in the 1500-1700$cm^{-1}$ region, which are clearly ascribable to the symmetric ($v_s$) and asymmetric stretching ($v_{as}$) vibrations of the carboxylic group ($COO^-$) respectively (Weihua et al., 2003). With typical $\Delta\upsilon$ ($COO^-$) of between 75 and 125 $cm^{-1}$, all complexes can be said to act as bidentate chelates.

Two bands are observed at 1598 and 1523 $cm^{-1}$ for the Zr/Ligand complexes synthesised with AcAc that can be attributed to the formation of the carbonyl and vinyl bonds within the prevalent keto-enol form of the ketone:

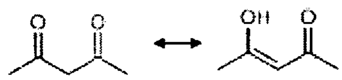

In this configuration the unsaturated vinylic group acts as an auxochromic group, then provoking a bathochromic shift of the carbonyl group via a mesomeric effect. It is possible that the complex synthesised with AcAc can exist in two different configurations, due to the presence of the methylene bridge in the aliphatic chain between the ketone and the alcohol functions, which can confer a higher flexibility to the molecule facilitating binding with two different zirconium atoms, thereby increasing the size of the particles.

The complex synthesised with Bipy as chelating agent shows the disappearance of the main absorption bands associated to the Bipy absorption (1414, 1451, 1457, and 1578$cm^{-1}$) and the appearance of a broad band (measuring about 320$cm^{-1}$) centred at 1565 $cm^{-1}$. Basically, Bipy can only react with TPOZ by coordination bonds involving the nitrogen atom and the free d orbitals of the zirconium atom. Similarly to AcAc, Bipy is potentially bidentate and can potentially react with two different zirconium atoms in its trans form, potentially forming oligomers of different sizes. However, by both the electronic attraction (mesomeric effect) and sterical hindrance of the aromatic structure, Bipy can provoke distortions of the spatial configuration of the oligomers formed. Both phenomena can contribute to the molecular dispersion, the result of which is observed as the broadening of the fundamental absorption of the metal-ligand vibration.

From the analysis of the IR spectra, two conclusions can be drawn. Firstly the formation of zirconium complexes with organic ligands is clearly evidenced in this work. Secondly, the nature of the organic ligand has an effect on the size of the zirconium particles. Indeed, it seems that the carboxylic acids tend to form complexes with only one zirconium atom, whereas AcAc and Bipy have the ability to form oligomers with different degrees of condensation.

*Thermal Stability*

DSC analysis was performed on cured sol-gel materials between 25°C and 400°C, although the working temperature for a typical coating would be likely to be below 250°C. The results indicates that the ligand choice has a profound effect on the glass transition temperature ($T_g$) of each material (Table 3, below, and Fig. 5). Two distinct transitions can be attributed to the zirconium nanoparticles and the silane network. It was found that the zirconium nanoparticles formed using MAAH and AcOH display higher $T_g$, while Bipy is lowest. This highlights the difference (by up to 80°C) in the chelating ability of the ligand and is related to the metal ligand charge transfer stability. There is less variation in the $T_g$ for the silane network which remains consistent in the 300 - 320 °C region. Therefore it is reasonable to infer that the thermal stability of the acid chelated complexes is superior to the weaker basic bonded ligands.

**Table 3 - Physical data for Organosilane coatings**

| **Zirconium Chelate** | **$T_g$(Zr)** | **$T_g$(Si)** | Particle Sizes (nm) |
|---|---|---|---|
| No Zirconium | - | 240 | 2.3[b] |
| AcOH | 260 | 310 | 0.83[a], 7.5[b] |
| IBA | 240 | 320 | 1.5[a], 8.7[b] |
| MAAH | 260 | 305 | 0.96[a], 2.6[b] |
| AcAc | 205 | 250 | 1.17[a], 6.5[b] |
| Bipy | 180 | 320 | 2[a], 8.7[b], 122[c] |

a - Zirconium chelated nanoparticle; b - Silane sol; c - Bipy oligomer

*Particle Size Analysis*

Particle size measurements (Table 3 above and Fig. 6) indicate the level of influence the ligands have on the formation of the Zirconium nanoparticles. The lowest particle sizes are Si/Zr/AcOH and Si/Zr/MAAH, followed by Si/Zr/AcAc, Si/Zr/IBA and finally Si/Zr/Bipy. Interestingly Si/Zr/Bipy seems to have formed particles in the 120 nm range, which are potentially oligomers as discussed previously.

*Electrochemical Testing*

The electrochemical properties of the sol-gel coatings give vital early information on the potential long term performance in aggressive challenging environments. Potentiodynamic Scanning (PDS) is a DC technique that gives useful information on a coatings ability to resist corrosion against a voltage gradient, while Electrochemical Impedance Spectroscopy (EIS) is an AC technique is used to estimate electrochemical interactions at the coating metal interface at the open circuit potential.

*PDS*

Using Harrison's solution potentiodynamic evaluation involves applying a voltage from 0.5V below the open circuit potential (cathodic region) to 0.4V above it (anodic region). Therefore the degree of change in the current density (electrons exchange occurring at the electrodes) is a function of the potential applied. If a high enough potential (overpotential) is applied then corrosion is accelerated. Therefore a coating that maintains a low current density at high overpotential is desirable. The barrier properties such as corrosion current densities ($I_{corr}$) and potential ($E_{corr}$) were estimated by the Tafel method (Kendig et al., 2001), while the polarisation resistance ($R_p$) was calculated using Stern-Geary equation (Barranco et al., 2004):

$$I_{corr} = B/R_p$$

Where $R_p$ is the polarisation resistance and B is a proportionality constant for the particular system which is calculated from and the slopes of the anodic ($\beta_a$) and cathodic ($\beta_c$) Tafel regions as shown by the following equation:

$$B = \frac{\beta_a . \beta_c}{2.3(\beta_a + \beta_c)}$$

$I_{corr}$, $E_{corr}$ and the Tafel coefficients for all coatings are listed in Table 4 below.

**Table 4 - Electrochemical data for sol-gel coatings**

| **Substrate Coating** | $I_{Corr}$ | $E_{Corr}$ | $R_P$ | \|βa\| | \|βc\| | $E_{Pit}$ |
|---|---|---|---|---|---|---|
| | ($A.cm^{-2}$) | (V) | ($\Omega.cm^2$) | (V/decade) | (V/decade) | (V) |
| None (Bare AA 2024-T3) | $8.15 \times 10^{-8}$ | - 0.525 | $2.05 \times 10^6$ | 0.0943 | 0.125 | |
| MAPTMS(Si) | $6.87 \times 10^{-9}$ | - 0.662 | $1.32 \times 10^7$ | 0.0689 | 0.103 | -0.6 |
| Si/Zr/AcOH | $1.41 \times 10^{-9}$ | - 0.472 | $5.50 \times 10^7$ | 0.0553 | 0.080 | - |
| Si/Zr/IBA | $2.05 \times 10^{-9}$ | - 0.560 | $2.93 \times 10^7$ | 0.0542 | 0.089 | -0.15 |
| Si/Zr/MAAH | $1.39 \times 10^{-9}$ | - 0.148 | $6.50 \times 10^7$ | 0.0552 | 0.075 | - |
| Si/Zr/AcAc | $2.57 \times 10^{-10}$ | - 0.254 | $3.20 \times 10^7$ | 0.0148 | 0.067 | -0.21 |
| Si/Zr/Bipy | $1.15 \times 10^{-9}$ | - 0.564 | $1.64 \times 10^7$ | 0.0265 | 0.068 | -0.17 |

Referring to Fig. 7, the use of an organosilane reduced the corrosion current density by an order in magnitude versus bare AA2024-T3. The improvement can be attributed to the adhesion of a nanostructured silane coating to the alloy surface. With little change in the $E_{Corr}$ value it is clear that the coating does not inhibit any electrochemical activity on the surface, but retards the ingress of water and/or oxygen. Further improvement in the performance of the organosilane was achieved by the introduction of the zirconium nanoparticles. The beneficial impact of the nanoparticles is observed when comparing the coating resistances ($R_P$). The methacrylic and acetic acids providing the best improvements (no $E_{Pit}$ observed) while the basic nitrogen bonding Bipy provided the least. The hierarchy of performance is in broad agreement with the thermal stability data and confirms that importance of the ligand on the nanoparticle formation.

*EIS*

EIS involves applying an AC voltage at the OCP, with sinusoidal amplitude of 10 mV, from a frequency of $10^6$ Hz down to $10^{-2}$ Hz across a coating in contact with an aggressive electrolyte. The coatings resistance to the AC signal, or impedance, varies according to the applied frequency and is graphically represented on a Bode frequency plot. The phase angle associated with the impedance gives valuable information on the film properties such as barrier performance and interfacial activity. This activity is often seen as a build up of oxide material, which may prevent charge transfer at the metal surface thus increasing the effective interface capacitance. The technique can be modelled as an equivalent electrical circuit as explained elsewhere (Zheludkevich et al., 2005).

The impedance data for the hybrid coatings is shown after initial electrolyte (Harrison's solution) exposure (Fig. 8A and B) and 72 Hrs exposure (Fig. 9A and B). The most apparent drop in impedance performance is seen with MAPTMS alone, which can be interpreted as electrolyte ingress and interface corrosion ($\varphi$ increased to -80° at $10^{-1}$ Hz). In contrast Si/Zr/MAAH performs best, maintaining high impedance with a minimal phase lag ($\varphi$ remaining below -20° at $10^{-2}$ Hz). As with the DSC study, the acid chelated systems appear to be the most stable and resistant to corrosion product formation.

*Neutral Salt Spray Test*

Neutral Salt spray test were conducted for 1 week under ASTM B117 conditions. The first panels to fail were coated with MAPTMS alone, after 48 hours (Fig. 10). The hybrid coatings performed better and all panels were exposed for 1 week. The coatings based on Si/Zr/MAAH and Si/Zr/AcOH performed best, corroding only along the scribe with little pitting observed. The same order of performance as seen with DSC, EIS and PDS was observed, whereby Si/Zr/IBA coating outperformed the AcAc and Si/Zr/Bipy chelated equivalents. Pitting was observed for the Si/Zr/IBA coating, to a greater extent on the Si/Zr/AcAc coating with extensive corrosion product present on the Si/Zr/Bipy film. The presence of pitting indicates that the copper intermetallics at the alloy surface are not being passivated, which confirms the PDS data where $E_{pit}$ values in the -0.1 to -0.2V were observed.

Various ligands were used to form Zirconium nanoparticles within an organosilane coating on AA2024-T3 aluminium, to improve its performance under aggressive conditions. The electrochemical studies and neutral salt spray results indicated that the zirconium nanoparticles significantly improved the performance of the organosilane coating, with nanoparticles formed using carboxylic acid offering the best protection. The improved performance of the acid modified ligands can be attributed to the formation of much smaller size particles of $ZrO_2$ during the hydrolysis and condensation process thus providing a greater degree of thermal stability to the polymer network. The use of other ligand such as AcAc and Bipy may have resulted in formation of the larger size particles, and thus a less compact polymer network which allowed the ingress of electrolyte to promote corrosion.

***Example 5*** *- Aluminium Substrate Preparation*

2024-T3 aluminium panels are first degreased using an alcohol wash, cleaned in an alkaline aqueous solution containing 60 g/l of Oakite 61B at 70□C until water-break free, rinsed in deionised water at 70□C and wiped dry using Kimwipes. There are several options available for applying these coating such as spraying, dipping, brushing and spin coating. Generally, the sol-gel formulations were applied to the panels by spincoating using a Sheen 1100 spin coater using the following methodology: the panel is first flooded with approximately 3 ml of the relevant sol, allowed to stand for 10 seconds and then spun at up to 2,000 rpm for one minute. Panels are removed and heated to 70°C for two hours, the temperature was then increased to 100°C for 22 hours.

***Example 6*** *- Surface Energy Measurements*

The surface energy of the coated AA2024-T3 panels were measured by water contact angle, using the FTA 2000 instrument (First Ten Angstroms, Portsmouth, VA). The method used was the Girifalco-Good-Fowkes-Young technique which converted the contact angle of the water drop into surface energy measurements.

***Example*** *7 - Electrochemical Cell*

To facilitate efficient sampling, a cell was designed to allow exposure of a coated aluminium panels to a variety of electrolytes. Polyproplylene bottles (volume = 28 mL, I.D. = 2.5 cm) were sectioned (cut) about 10 mm from the base (Fig. 11(a)), and attached to the coated/uncoated aluminium surface using an Araldite™ 2K epoxy resin, thus forming sealed sample cells to act as a working electrode (working area = 4.9 $cm^2$) (Fig. 11(b)). The cells were filled with 5 mL of an electrolyte solution and sealed with the bottle lid when not in use. The electrochemical arrangement was set up as seen in Fig. 11(c) where the reference electrode uses a micropipette tip as a Luggin probe.

***Example 8*** *- Characterisation Techniques*

*Electrochemical Testing*

Open circuit potentials (OCP), Electrochemical Impedance Spectroscopy (EIS) and Potentiodynamic Scanning (PDS) measurements were obtained using a Solartron S1287 potentiostat and S1255B frequency generator using Z plot software. The experiments were conducted with a three-electrode arrangement consisting of a saturated silver/silver

chloride reference electrode, a platinum expanded mesh as counter electrode and the exposed panel surface as the working electrode. The working area was 4.9 $cm^2$.

PDS measurements of both bare and uncoated aluminium panels were measured for 10 minutes periods after 0, 24, 48 and 72 hours exposure to $NaCl_{(aq)}$ solutions.

Electrochemical impedance spectroscopy (EIS) measurements were made directly following the OCP measurements, with a perturbation amplitude of ± 10 mV at the rest potential. The frequency range was from $10^6$ Hz to $10^{-2}$ Hz.

Potentiodynamic Scanning (PDS) was conducting from -0.4 V to + 0.5 V relative to the rest OCP.

*Cyclic Voltammetry*

Cyclic voltammetry was carried out in a 100 ppm $Cl^-$ solution containing 100 ppm DPTZ. A scan rate of 50 mV/sec was used.

*UV Study*

The change in the absorption profile of DPTZ in the presence of a chloride solution was measured using a Perkin Elmer Lamda UV-Vis spectrometer. The absorption of the solutions was measured in the presence of the aluminium alloy AA2024-T3 (using the cell design above on bare aluminium) and the concentration drop was compared to the natural degradation.

***Example 9*** *- Inhibitor Study*

*UV Study:*

A solution containing 100 ppm of DPTZ was prepared. From this solution a sample was taken and sodium chloride was added to give a 100 ppm $Cl^-$ concentration. Both solutions were allowed to stand for 10 minutes and a UV-Vis spectrum of each was measured. 5 ml of each solution was poured into separate cells that were set on bare AA2024-T3 alloy. The absorbance of the solution was recorded after 16, 20 and 24 hours. The results (shown in Fig. 12) indicate that the reduction of DPTZ is accelerated by aluminium and chloride ions.

*Cyclic Voltammetry*

Cyclic voltammetry of the exposed aluminium surface in the presence of 100 ppm $Cl^-$ and 100 ppm of the tetrazine, DPTZ, at a scan rate of 50 mV/sec. Referring to Fig. 13, the height of the reduction peak initially peaks due to the availability of aluminium ions, and the starts to reduce on further cycles. The current reaches a maximum at -600 mV, the natural reduction potential for aluminium. The absence of reduction peak on the reverse cycle implies that there is no reversal of this reaction. However on subsequent cycles the current decreases, which implies the oxidation process is being hampered. Correspondingly the UV absorbance of the electrolyte solution at the □max of DPTZ, dropped from about 0.07 to 0. This implies that the redox active inhibitor has been irreversibly bound to the metal surface.

***Example 10*** *- Electrochemical Evaluation of Inhibitor Doped Coatings*

The anticorrosion properties of the organosilane zirconium coating composition was evaluated electrochemically using Electrochemical Impedance Spectroscopy (EIS). The electrolyte was a neutral 3.5% sodium chloride solution, and the exposure time was 72 hours, with readings taken at 24 hour intervals. A summary of the results is presented in Table 5 below.

**Table 5: Summary of Impedance Measurements at 1 Hz**

| $\|Z\|$ (x $10^4 \Omega.cm^{-2}$) | 1,2,4-Triazole | Benzotriazole | Imidazole | DPTZ |
|---|---|---|---|---|
| 0.1% Inhibitor | | | | |
| 0 Hrs | 23 | 20 | 23 | 1300 |
| 24 Hrs | 6.3 | 1.9 | 1.3 | 610 |
| 48 Hrs | 0.88 | 1.6 | 1.2 | 310 |
| 72 Hrs | 0.76 | 1.4 | 1.2 | 220 |

(continued)

| | | | | |
|---|---|---|---|---|
| 0.2% Inhibitor | | | | |
| 0 Hrs | 68 | 12 | 5.2 | 1400 |
| 24 Hrs | 1.4 | 1.5 | 1.3 | 1300 |
| 48 Hrs | 1.3 | 1.2 | 1.2 | 440 |
| 72 Hrs | 1.1 | 1.1 | 1.2 | 140 |
| 0.3% Inhibitor | | | | |
| 0 Hrs | 15 | 27 | 24 | 1200 |
| 24 Hrs | 1.6 | 1.4 | 1.4 | 1000 |
| 48 Hrs | 1.5 | 1.2 | 1.1 | 990 |
| 72 Hrs | 1.3 | 1.1 | 1 | 860 |
| 0.4% Inhibitor | | | | |
| 0 Hrs | 20 | 31 | 22 | 1300 |
| 24 Hrs | 1.1 | 2.1 | 1.3 | 240 |
| 48 Hrs | 1 | 1.7 | 1.1 | 130 |
| 72 Hrs | 0.93 | 1.4 | 1.1 | 110 |
| 0.5% Inhibitor | | | | |
| 0 Hrs | 24 | 29 | 22 | 130 |
| 24 Hrs | 0.66 | 2 | 1.4 | 12 |
| 48 Hrs | 0.44 | 1.6 | 1.3 | 5.2 |
| 72 Hrs | 0.36 | 1.3 | 1.2 | 3.7 |

As was expected with impedance studies, the protection effect of the inhibitors reached a peak followed by a reduction. The concentration at which protection activity peaked varied for the different inhibitors tested.

The impedance data for the organosilane coating containing 0.2% benzotriazole is displayed in Fig. 14. The data in Table 1 shows that this response is consistent across each of the coatings containing the inhibitors 1,2,4-triazole, benzotriazole and imidazole. Typically an initial impedance decrease is seen in the kilohertz range (Fig. 14(a)) as the electrolyte breaches the coating, thereby increasing its conductivity and reducing the impedance. This results in a phase change in the low frequency range (Fig. 14(b)) which indicates that a corrosion product (between the aluminium and the inhibitor) is forming on the surface. This mechanism blocks the surface pores and thus inhibits further corrosion.

The impedance data for the tetrazines doped sol-gel coating was superior, with higher initial impedance values and a slower rate of decrease over time. This implies that the ingress of chloride ion is being retarded, most likely by binding the reducible tetrazine. The best performing results were obtained by the 0.3% coating, which maintained a performance of within the same order, while displaying no indication of a corrosion product forming (Fig. 15(b)). Other concentrations such as the 0.5% coating, indicate that there may be a limit on the inhibitor level, as it rapidly decreases in performance over time, with a corresponding increase in the phase angle indicating a corrosion product being formed.

***Example 11*** *- Electrochemical Evaluation of Inhibitor Chelated Coatings*

By replacing the MAAH in the chelation step with an inhibitor as the chelate, a new material was synthesised.

The Impedance data for the coating formed using DPTZ as a chelate (Fig. 17 (a)) is superior to that of the coating using MAAH as a chelate (Fig. 16 (a)). The formation of a corrosion product when DPTZ was used as a chelate (Fig. 17(b)) is slower compared to when MAAH was used as a chelate (Fig. 16 (b)), again illustrating the superior inhibitive nature of a coating formed using DPTZ as a chelate.

***Example 12*** *- Potentiodynamic Scanning: Sol-Gel Barrier Properties*

To compare the properties of the sol-gel coating with an uncoated bare (or blank) alloys potentiodynamic

scanning (PDS) was used. The technique sweeps a potential (Y-Axis) across an electrode (the sol-gel coated aluminium panel) and measures the current density (X-Axis) from the surface of the working electrode (the metal being tested), specifically the current density at the onset of corrosion ($I_{CORR}$ and $E_{CORR}$). Based upon the voltage required to free electrons from the metal surface, a comparison can be made between different coating systems. Lower currents indicate better coatings.

The data in Fig. 18 for the bare (blank) 2024-T3 gives the baseline performance of the alloy and shows that a natural oxide layer had formed ($E_{CORR}$= -480 mV, $I_{CORR}$ = $10^{-8}$ A.cm$^{-2}$).

By applying an organosilane (MAPTMS only) the performance is improved ($I_{CORR}$ = $10^{-8}$ A.cm$^{-2}$), although there is a shift in the natural potential ($E_{CORR}$= -600mV). This means that the organosilane has bound to the surface *via* surface hydroxyls and no protective oxide has formed. Inclusion of zirconium into the organosilane improves the performance significantly, rising the potential ($E_{CORR}$) to -550 mV and lowering $I_{CORR}$ to $10^{-10}$ A.cm$^{-2}$. Pitting (the generation of small corrosion cells) at the surface is seen at high potentials (E = -50 mV), indicating aggressive ions penetrating to the metal. However the use of tetrazine chelates in the final system shows similar barrier properties, but does not suffer from pitting corrosion. This is most likely due to the ability of the nitrogen rich tetrazine bonding with the chloride ions. Therefore the presence of zirconium modified organosilanes protects aluminium alloys, with further protection possible through the addition of tetrazine chelates as inhibitors.

***Example 13*** *- Raman Spectroscopy: Binding of Tetrazine to Zirconium*

To investigate the binding of the tetrazine chelate, Raman Spectroscopy was used rather than Fourier Transform Infra Red (FTIR) due to the avoidance of solvent effects. The tetrazines used to chelate the zirconium but not mixed with the organosilane. The material was then processed as per Example 2, and allowed to react for a day, and then dried to form a tablet. This method ensures that the only bonds being examined relate to the chelated zirconium.

The Raman spectra of the DPTZ ligand is shown in Fig. 19 shows a strong band around 1439.4 cm$^{-1}$ and at 1581 and 1568.6 cm$^{-1}$. The 1439.4 cm$^{-1}$ group of modes are assigned as predominantly tetrazine ring stretching, and are strong due to the electron rich N=N and N-C bonds. Those at higher frequency are pyridyl ring stretch. The band at 1100.5 cm$^{-1}$ can be assigned to the C-C bond between the pyridyl modes of vibration.

As shown in Fig. 20, when reacted with zirconium the peak at 1439.4 cm$^{-1}$ (tetrazine stretch peak for DPTZ) has slightly shifted to 1435.8 cm$^{-1}$ for the complex. In previous work the peak at 1457.3 cm$^{-1}$ for tetrazine is predicted to shift to near 1380 cm$^{-1}$ for DPTZ$^{-}$. In this body of work the peak shifts to 1387 cm$^{-1}$, indicative of the metal-ligand electron transfer. An additional peak for the complex is seen near 400.8 cm$^{-1}$ which may be due to N-M-N in plane bending vibration

***Example 14*** ***-*** *Corrosion inhibitors*

A range of heterocycles, including tetrazines, were synthesised and investigated as potential corrosion inhibitors. Concentrations of 250, 500, 750 and 1,000 ppm of each of the inhibitors in 3.5% $NaCl_{(aq)}$ were exposed to aluminium panels (AA2024-T3) for up to 4 days. This particular alloy contains up to 4.2% copper and is therefore prone to corrosion in ion rich aqueous systems.

*No Inhibitor*

An aluminium panel was exposed to a 3.5% $NaCl_{(aq)}$ solution for 1 day. Corrosion occurred over the entire exposed area (Fig. 21) and was visible on SEM as a series of artefacts (Fig. 22). Elemental analysis of these artefacts (Fig. 23) revealed a high level of chlorine with some high levels of copper adjacent in the alloy. This would be in agreement with theory where aluminium chloride will form beside a copper rich site on AA2024-T3.

*Dihydro-1,2,4,5-tetrazine-3,6-dicarboxylic acid ($H_2DCTZ$) inhibitor*

When the AA2024-T3 panel was exposed to 1000ppm $H_2DCTZ$ having the formula:

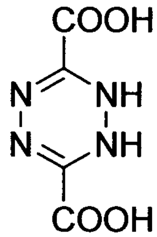

no pitting occurred, although some surface staining was observed (Fig. 25) but showed no pattern to match the higher levels of copper or magnesium within the alloy. This means that the inhibitor prevented corrosion at the copper rich sites.

*3,6-Bis(3,5-dimethylpyrazole-1-yl)-1,2,4,5-tetrazine (DMPTZ) inhibitor*

When the AA2024-T3 panel was exposed the salt solution in the presence of 1000ppm DMPTZ having the formula:

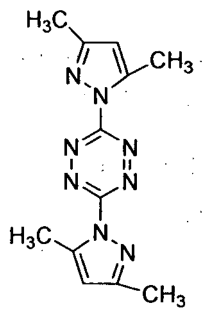

pitting occurred. The presence of the pits was easily detectable due to the deposition of the pink tetrazine at the sites. The presence of the pits was verified by polishing the alloy (Fig. 29) and imaging the underlying pits by elemental analysis. The pit (Fig. 30) displays a high level of copper but low level of magnesium, which could be interpreted as dealloying (a typical corrosion phenomenon).

Therefore $H_2$DCTZ was more suitable for use as a corrosion inhibitor than DMPT2 for the copper rich aluminium alloy AA-2024-T3.

***Example 15*** *- Anti-corrosion sol*

As an exemplary example, a sol containing DMPTZ as a corrosion inhibitor can be made from the following composition:

| **Anti-Corrosion Sol (Inhibitor: DMPTZ)** | **Mass (g)** |
|---|---|
| MAPTMS | 39.6 |
| $Zr(OPr)_4$ | 13.0 |
| 1,4-Bis(3,5-dimethylpyrazole-1-yl)-1,2,4,5-tetrazine | 10.8 |
| Dilute nitric acid (0.04Mole/L) | 4.0 |
| Ethanol | 18.3 |
| Water | 14.3 |
| **Total Composition** | **100** |

MAPTMS (39.6g) was hydrolysed with an aqueous $HNO_3$ (0.01M) solution (4 g) and allowed to stir for at least 45 minutes. At the same time 1, 4-Bis(3, 5-dimethylpyrazole-1-yl)-1, 2, 4, 5-tetrazine (10.8g) was dissolved in ethanol (18.3g) and the solution was slowly added to $Zr(OPr)_4$ (13.0g) and allowed to stir for at least 45 minutes to ensure chelation had occurred. The partially hydrolyzed MAPTMS was slowly added to the zirconium-tetrazine solution. After at least 2 minutes water (14.3g) was added to this mixture. This second hydrolysis leads to a stable and homogeneous

sol after about 45 minutes. The sols can be stored at 4°C.

***Example 16*** *- Anti Corrosion Sol*

As an exemplary example, a sol containing diaminobenzoic acid (DABA) as a corrosion inhibitor can be made from the following composition:

| **Anti-Corrosion Sol (Inhibitor: DABA)** | **Mass (g)** |
|---|---|
| MAPTMS | 41.51 |
| $Zr(OPr)_4$ | 13.69 |
| Diamino Benzoic Acid | 6.35 |
| Dilute nitric acid (0.04Mole/L) | 4.18 |
| Ethanol | 19.22 |
| Water | 15.04 |
| **Total Composition** | **100** |

MAPTMS (41.51g) was hydrolysed with an aqueous $HNO_3$ (0.01M) solution (4.18 g) and allowed to stir for at least 45 minutes. At the same time Diamino Benzoic Acid (6.35) was dissolved in ethanol (19.22g) and the solution was slowly added to $Zr(OPr)_4$ (13.69g) and allowed to stir for at least 45 minutes to ensure chelation had occurred. The partially hydrolyzed MAPTMS was slowly added to the zirconium-diamino benzoic acid solution. After at least 2 minutes water (15.04g) was added to this mixture. This second hydrolysis leads to a stable and homogeneous sol after about 45 minutes. The sols can be stored at 4°C.

***Example 17*** **-** *Fluorinated sol*

As an exemplary example, a fluorinated sol can be made from the following composition:

| **Fluorinated Sol** | **Mass (g)** |
|---|---|
| MAPTMS | 41.84 |
| Dynasylan 8815 (2% of Total Silane) | 0.85 |
| $Zr(OPr)_4$ | 14.08 |
| MAAH | 3.70 |
| Dilute nitric acid (0.04Mole/L) | 4.30 |
| Ethanol | 19.77 |
| Water | 15.47 |
| **Total Composition** | **100** |

MAPTMS (41.84g) was hydrolysed with an aqueous $HNO_3$ (0.01M) solution (4.18 g) and allowed to stir for at least 20 minutes. A solution of Dynasylan 8815 (0.85g) in ethanol (19.77g) was slowly added to this solution and allowed to stir for a further 25 minutes. At the same time MAAH (3.7 g) slowly added to $Zr(OPr)_4$ (13.69g) and allowed to stir for at least 45 minutes to ensure chelation had occurred. The partially hydrolyzed MAPTMS/ Dynasylan 8815 was slowly added to the zirconium-MAAH solution. After at least 2 minutes water (15.04g) was added to this mixture. This second hydrolysis leads to a stable and homogeneous sol after about 45 minutes. The sols can be stored at 4°C.

***Example 18*** *- Abrasion resistant sol*

As an exemplary example, an abrasion/scratch resistant sol can be made from the following composition:

| Abrasion Resistant Sol | Mass (g) |
|---|---|
| MAPTMS | 42.65 |
| $Zr(OPr)_4$ | 13.94 |
| MAAH | 3.65 |
| Dilute nitric acid (0.04Mole/L) | 4.25 |
| Ethanol | 19.57 |
| Water | 15.32 |
| Levasil 100S (1% of total Composition) | 1.00 |
| **Total Composition** | **100** |

MAPTMS (42.65g) was hydrolysed with an aqueous $HNO_3$ (0.01M) solution (3.65 g) and allowed to stir for at least 20 minutes. A solution of Levasil 100S (1.0 g) in ethanol (19.57g) was slowly added to this solution and allowed to stir for a further 25 minutes. At the same time MAAH (3.65 g) slowly added to $Zr(OPr)_4$ (13.94g) and allowed to stir for at least 45 minutes to ensure chelation had occurred. The partially hydrolyzed MAPTMS/Levosil solution was slowly added to the zirconium-MAAH solution. After at least 2 minutes water (15.32 g) was added to this mixture. This second hydrolysis leads to a stable and homogeneous sol after about 45 minutes. The sols can be stored at 4°C.

***Example 19*** *- Photoinitiator assisted sol*

As an exemplary example, a photoinitiator assisted sol can be made from the following composition:

| Photoinitiator Assisted Sol | Mass (g) |
|---|---|
| MAPTMS | 42.65 |
| $Zr(OPr)_4$ | 14.06 |
| MAAH | 3.70 |
| Dilute nitric acid (0.04Mole/L) | 4.29 |
| Ethanol | 19.75 |
| Water | 15.45 |
| Irgacure 819 (0.1% of total Composition) | 0.10 |
| **Total Composition** | **100** |

MAPTMS (42.65g) was hydrolysed with an aqueous $HNO_3$ (0.01M) solution (4.29 g) and allowed to stir for at least 20 minutes. A solution of Irgacure 819 (0.10 g) in ethanol (19.57g) was slowly added to this solution and allowed to stir for a further 25 minutes. At the same time MAAH (3.70 g) slowly added to $Zr(OPr)_4$ (14.06 g) and allowed to stir for at least 45 minutes to ensure chelation had occurred. The partially hydrolyzed MAPTMS/Irgacure 819 solution was slowly added to the zirconium-MAAH solution. After at least 2 minutes water (15.45 g) was added to this mixture. This second hydrolysis leads to a stable and homogeneous sol after about 45 minutes. The sols can be stored at 4°C.

***Example 20*** *- Antimicrobial Sol*

As an exemplary example, a sol containing nano-silver as an antimicrobial additive can be made from the following composition:

| Anti-Microbial Sol | Mass (g) |
|---|---|
| MAPTMS | 42.65 |
| $Zr(OPr)_4$ | 13.94 |
| MAAH | 3.65 |

(continued)

| Anti-Microbial Sol | Mass (g) |
|---|---|
| Dilute nitric acid (0.04Mole/L) | 4.25 |
| Ethanol | 19.57 |
| Water | 15.32 |
| AgION AJ10D (1% of total Composition) | 1.00 |
| **Total Composition** | **100** |

MAPTMS (42.65g) was hydrolysed with an aqueous $HNO_3$ (0.01M) solution (3.65 g) and allowed to stir for at least 20 minutes. A solution of AgION AJ10D (1.0 g) in ethanol (19.57g) was slowly added to this solution and allowed to stir for a further 25 minutes. At the same time MAAH (3.65 g) slowly added to $Zr(OPr)_4$ (13.94g) and allowed to stir for at least 45 minutes to ensure chelation had occurred. The partially hydrolyzed MAPTMS/AgION AJ10D solution was slowly added to the zirconium-MAAH solution. After at least 2 minutes water (15.32 g) was added to this mixture. This second hydrolysis leads to a stable and homogeneous sol after about 45 minutes. The sols can be stored at 4°C.

Summary

In the presence of chloride ions tetrazine are reduced, changing from a highly coloured red solution to pink. In the presence of aluminium ions this colour change is accelerated, due to the highly oxidising aluminium.

The electrochemical activity of the tetrazine in the presence of aluminium was found to protect the metal from oxidation. Irreversible binding was observed, indicative of an adsorptive inhibitor.

Tetrazines were compared to azole inhibitors as dopants in organosilane based sol-gel coatings, using impedance spectroscopy. The results indicated that the tetrazine outperformed the alternatives significantly.

The ability of the tetrazines to chelate zirconium propoxide was investigated, and effective chelation was observed by Raman spectroscopy.

The binding of zirconium to DPTZ was investigated by Raman Spectroscopy. The results prove that the existence of metal ligand binding.

The invention is not limited to the embodiment hereinbefore described, with reference to the accompanying drawings, which may be varied in construction and detail.

References

V. Barranco, S. Feliu Jr, S. Feliu, Corr. Sci. 46 (2004) 2203-2220.

M. Chatry. M. Henry, M. In, C. Sanchez, J. Livage, J. Sol-Gel Sci. Technol. 1 (1994) 233-240.

M.D. Codburn and D.G. Ott J. Heterocyclic Chem (1991) 27: 1990.

M.D. Codburn, G.A. Buntain, B.W. Harris, M.A. Hiskey, K-Y. Lee., D.G. Ott, J. Heterocyclic Chem (1991) 28: 2049.

M.S. Donley et al., Prog. Org. Coat. 47 (2003) 401-415.

Environmental Security Technology Certification Program (ESTCP) Project No. PP0025: Non-Chromate Aluminium Pretreatments Phase II interim Report.

EUCAR, Key Issues to meet the Challenges of the Future Mobility and Road Transport System, 7/12/04.

EuMAT, Materials for the Life Cycle, Roadmap of the European Technology Platform For Advanced Engineering Materials and Technologies, Version 7, June 27th 2006.

European Aeronautics: a vision for 2020, ISBN 92-894-0559-7.

D. Hoebbel, T. Reinert and H.Schmidt, J. Sol-Gel. Sci & Techn. 10 (1997) 115-126.

W. Kaim, Coordination Chemistry Reviews 230 (2002) 127-139.

M. Kendig, S. Jeanjaquet, R. Addison, J. Waldrop, Surf. Coat. Technol. 140 (2001) 58-66.

A.N. Khramov et al., Thin Solid Films 447 (2004) 549-557.

A.N. Khramov, et al, Thin Solid Films 483 2005, 191-196.

J. Livage, C. Sanchez, J. Non-Cryst. Solids 145 (1992) 11.

M. Oubaha, P. Etienne, S. Calas, R. Sempere, J.M. Nedelec and Y. Moreau, J. Non-Cryst. Solids 351 (2005) 2122-2128.

F. X. Perrin, V. Nguyen, J. L. Vernet, J. Sol-Gel Technol. 28 (2003) 205.

F. Rubio, J. Rubio and J.L. Oteo, J. Mat. Sci. Lett., 17 (1998) 1839-1842.

C. Sanchez, G. J. de A. A. Soler-Illia, F. Ribot, T. Lalot, C. R. Mayer, V. Cabuil, Chem. Mater., 13(2001) 3061-3083.

S. Tan et al., Surf. and Coat. Technol., 198 (2005) 478-482.

N.N. Voevodin et al., Surf. and Coat. Technol. 140 (2001) 24-28).

Z. Weihua, Z. Gaoyang, C. Zhiming, Mat. Sci & Eng. B 99 (2003) 168-172.

M.L. Zheludkevich, R. Serra, M.F. Montemor, K.A. Yasakau, I.M. Miranda Salvado, M.G.S. Ferreira Electrochim. Acta 51 (2005) 208-217.

## Claims

1. A sol gel coating composition comprising a hydrolysed organosilane, an organometallic precursor and a corrosion inhibitor, wherein the corrosion inhibitor is a chelator for the organometallic precursor, and wherein the corrosion inhibitor is selected from diaminobenzoic acid and tetrazine.

2. A coating composition as claimed in claim 1, wherein the tetrazine is of the formula:

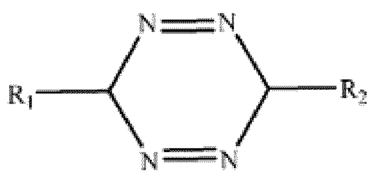

(a)

or

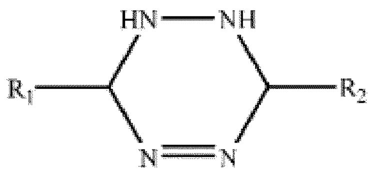

(b)

wherein R1, R2 are selected from hydroxyl, halogen, alkoxy, acyloxy, alkyl, alkenyl, aryl, alkylaryl, arylalkyl, alkenylaryl, arylalkenyl, alkylene, alkenylene, arylene, alkylarylene, arylalkylene, alkenylarylene, arylalkenylene, ethers, thiols, sulphides, sulphur analogs of alcohols or ethers, benzene and derivatives thereof, amines, phosphines, phosphorus analogs of amines, aldehydes, ketones or carboxyl.

3. A coating composition as claimed in claim 2 wherein R1 and/or R2 are pyridyl, carboxylate, and alkylamine.

4. A coating composition as claimed any of claims 1 to 3 wherein the tetrazine is 3,6-di-2-pyridyl-1,2,4,5-tetrazine (DPTZ) or 3,6-dicarboxylic-4,5-dihydro-1,2,4,5-tetrazine (H2DCTZ).

**5.** A coating composition as claimed in any of claims 1 to 4 wherein the organometallic precursor is a transition metal precursor.

**6.** A coating composition as claimed in claim 5, wherein the transition metal precursor contains zirconium or titanium.

**7.** A coating composition as claimed in claim 6, wherein the zirconium precursor is zirconium (VI) propoxide ($Zr(OPr)_4$).

**8.** A coating composition as claimed in any of claims 1 to 7, wherein the hydrolysed organosilane is of the formula:

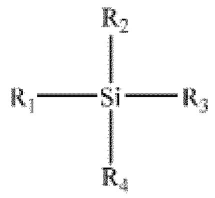

wherein R1, R2, R3, and R4 may be the same or different and are each selected from:

n-alkanes which may be $C_1$-$C_8$; hydroxyl group (OH); alkoxy group such as $OCH_3$, $OCH_2CH_3$, $OCH_2CH_2CH_3$; aromatic group such as $C_6H_5$; amine group such as $NH_2$, $CH_2NH_2$, $CH_2CH_2NH_2$, $CH_2CH_2CH_2NH_2$; vinyl group such as $CHCH_2$, and $CH_2CHCH_2$, $CH_2CHCH_2$; epoxy group; acryl; methacryl; or mercaptyl.

**9.** A coating composition as claimed in claim 8 wherein the organosilane is methacryloxypropyltrimethoxysilane (MAPTMS) or tetra-ethyl-ortho-silicate (TEOS).

**10.** A process for preparing a sol gel coating composition comprising the steps of:

hydrolysing an organosilane in the presence of a catalyst;
chelating an organometallic precursor;
mixing the hydrolysed silane and the chelated organometallic precursor and
hydrolysing the organosilane-organometallic precursor wherein the chelating agent is a corrosion inhibitor selected from diaminobenzoic acid and tetrazine.

**11.** A process as claimed in claim 10 wherein the organosilane is hydrolysed for 45 minutes and optionally wherein the organometallic precursor is chelated for 45 minutes.

**12.** A coated metal surface comprising a metal surface and a coating as claimed in any one of claims 1 to 9.

**13.** A coated metal surface as claimed in claim 12 wherein the metal is selected from the group comprising: cast-iron, steel, aluminium, aluminium alloys, zinc, zinc alloys, magnesium, magnesium alloys, copper, copper alloys, tin and tin alloys, nickel alloys, titanium and titanium alloys.

## Patentansprüche

**1.** Sol-Gel-Beschichtungszusammensetzung, die ein hydrolysiertes Organosilan, einen metallorganischen Precursor und einen Korrosionsinhibitor umfasst, wobei der Korrosionsinhibitor ein Chelator für den metallorganischen Precursor ist und wobei der Korrosionsinhibitor aus Diaminobenzoesäure und Tetrazin ausgewählt ist.

**2.** Beschichtungszusammensetzung nach Anspruch 1, wobei das Tetrazin die folgende Formel aufweist:

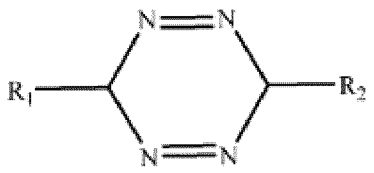

(a)

oder

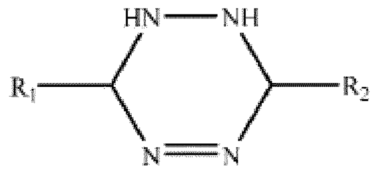

(b)

,

wobei R1, R2 aus Folgenden ausgewählt sind: Hydroxyl, Halogen, Alkoxy, Acyloxy, Alkyl, Alkenyl, Aryl, Alkylaryl, Arylalkyl, Alkenylaryl, Arylalkenyl, Alkylen, Alkenylen, Arylen, Alkylarylen, Arylalkylen, Alkenylarylen, Arylalkenylen, Ethern, Thiolen, Sulfiden, Schwefelanaloga von Alkoholen oder Ethern, Benzol und Derivaten davon, Aminen, Phosphinen, Phosphoranaloga von Aminen, Aldehyden, Ketonen oder Carboxyl.

**3.** Beschichtungszusammensetzung nach Anspruch 2, wobei R1 und/oder R2 Pyridyl, Carboxylat und Alkylamin sind.

**4.** Beschichtungszusammensetzung nach einem der Ansprüche 1 bis 3, wobei das Tetrazin 3,6-Di-2-pyridyl-1,2,4,5-tetrazin (DPTZ) oder 3,6-Dicarbonsäure-4,5-dihydro-1,2,4,5-tetrazin (H2DCTZ) ist.

**5.** Beschichtungszusammensetzung nach einem der Ansprüche 1 bis 4, wobei der metallorganische Precursor ein Übergangsmetall-Precursor ist.

**6.** Beschichtungszusammensetzung nach Anspruch 5, wobei der Übergangsmetall-Precursor Zirconium oder Titan enthält.

**7.** Beschichtungszusammensetzung nach Anspruch 6, wobei der Zirconium-Precursor Zirconium(VI)-propoxid ($Zr(OPr)_4$) ist.

**8.** Beschichtungszusammensetzung nach einem der Ansprüche 1 bis 7, wobei das hydrolysierte Organosilan die folgende Formel aufweist:

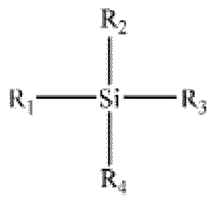

,

wobei R1, R2, R3 und R4 gleich oder verschieden sein können und jeweils aus Folgenden ausgewählt sind:

n-Alkanen, die $C_1$-$C_8$ sein können; Hydroxylgruppe (OH); Alkoxygruppe wie $OCH_3$, $OCH_2CH_3$, $OCH_2CH_2CH_3$; aromatischer Gruppe wie $C_6H_5$; Amingruppe wie $NH_2$, $CH_2NH_2$, $CH_2CH_2NH_2$, $CH_2CH_2CH_2NH_2$; Vinylgruppe wie $CHCH_2$ und
$CH_2CHCH_2$, $CH_2CHCH_2$; Epoxygruppe; Acryl; Methacryl; oder Mercaptyl.

**9.** Beschichtungszusammensetzung nach Anspruch 8, wobei das Organosilan Methacryloxypropyltrimethoxysilan (MAPTMS) oder Tetraethylorthosilicat (TEOS) ist.

**10.** Verfahren für die Herstellung einer Sol-Gel-Beschichtungszusammensetzung, das die folgenden Schritte umfasst:

Hydrolysieren eines Organosilans in Gegenwart eines Katalysators;
Chelatisieren eines metallorganischen Precursors;
Mischen des hydrolysierten Silans und des chelatisierten metallorganischen Precursors und
Hydrolysieren des Organosilans und des metallorganischen Precursors, wobei der Chelatbildner ein Korrosionsinhibitor ist, der aus Diaminobenzoesäure und Tetrazin ausgewählt ist.

11. Verfahren nach Anspruch 10, wobei das Organosilan für 45 Minuten hydrolysiert wird und optional wobei der metallorganische Precursor für 45 Minuten chelatisiert wird.

12. Beschichtete Metalloberfläche, die eine Metalloberfläche und eine Beschichtung nach einem der Ansprüche 1 bis 9 umfasst.

13. Beschichtete Metalloberfläche nach Anspruch 12, wobei das Metall aus der Gruppe ausgewählt ist, die Folgende umfasst: Gusseisen, Stahl, Aluminium, Aluminiumlegierungen, Zink, Zinklegierungen, Magnesium, Magnesiumlegierungen, Kupfer, Kupferlegierungen, Zinn und Zinnlegierungen, Nickellegierungen, Titan und Titanlegierungen.

**Revendications**

1. Composition de revêtement sol-gel comprenant un organosilane hydrolysé, un précurseur organométallique et un inhibiteur de corrosion, dans laquelle l'inhibiteur de corrosion est un chélateur pour le précurseur organométallique, et où l'inhibiteur de corrosion est choisi parmi l'acide diaminobenzoïque et la tétrazine.

2. Composition de revêtement selon la revendication 1, dans laquelle la tétrazine répond à la formule :

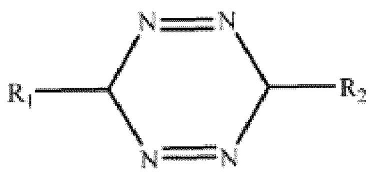

(a)

ou

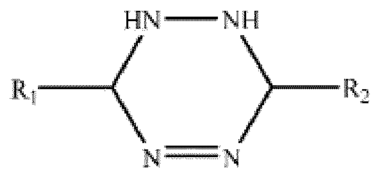

(b)

où R1, R2, sont choisis parmi hydroxyle, halogène, alcoxy, acyloxy, alkyle, alcényle, aryle, alkylaryle, arylalkyle, alcénylaryle, arylalcényle, alkylène, alcénylène, arylène, alkylarylène, arylalkylène, alcénylarylène, arylalcénylène, les éthers, les thiols, les sulfures, les analogues soufrés d'alcools ou d'éthers, le benzène et des dérivés de celui-ci, les amines, les phosphines, les analogues phosphorés d'amines, les aldéhydes, les cétones ou carboxyle.

3. Composition de revêtement selon la revendication 2, dans laquelle R1 et/ou R2 sont pyridyle, carboxylate et alkylamine.

4. Composition de revêtement selon l'une quelconque des revendications 1 à 3, dans laquelle la tétrazine est la 3,6-di-2-pyridyl-1,2,4,5-tétrazine (DPTZ) ou l'acide 4,5-dihydro-1,2,4,5-tétrazine-3,6-dicarboxylique (H2DCTZ).

5. Composition de revêtement selon l'une quelconque des revendications 1 à 4, dans laquelle le précurseur organométallique est un précurseur de métal de transition.

6. Composition de revêtement selon la revendication 5, dans laquelle le précurseur de métal de transition contient du zirconium ou du titane.

7. Composition de revêtement selon la revendication 6, dans laquelle le précurseur de zirconium est le propoxyde de zirconium (VI) ($Zr(OPr)_4$).

8. Composition de revêtement selon l'une quelconque des revendications 1 à 7, dans laquelle l'organosilane hydrolysé répond à la formule :

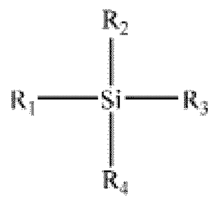

où R1, R2, R3 et R4 peuvent être identiques ou différents et sont choisis chacun parmi :

des n-alcanes pouvant être en $C_1$-$C_8$ ; un groupement hydroxyle (OH) ; un groupement alcoxy tel que $OCH_3$, $OCH_2CH_3$, $OCH_2CH_2CH_3$ ; un groupement aromatique tel que $C_6H_5$ ; un groupement amine tel que $NH_2$, $CH_2NH_2$, $CH_2CH_2NH_2$, $CH_2CH_2CH_2NH_2$ ;
un groupement vinyle tel que $CHCH_2$, et $CH_2CHCH_2$, $CH_2CHCH_2$ ; un groupement époxy ; acryle ; méthacryle ; ou mercaptyle.

**9.** Composition de revêtement selon la revendication 8, dans laquelle l'organosilane est le méthacryloxypropyltriméthoxysilane (MAPTMS) ou l'orthosilicate de tétraéthyle (TEOS).

**10.** Procédé de préparation d'une composition de revêtement sol-gel, comprenant les étapes consistant à :

hydrolyser un organosilane en présence d'un catalyseur ;
chélater un précurseur organométallique ;
mélanger le silane hydrolysé et le précurseur organométallique chélaté et hydrolyser l'organosilane-précurseur organométallique, où l'agent chélateur est un inhibiteur de corrosion choisi parmi l'acide diaminobenzoïque et la tétrazine.

**11.** Procédé selon la revendication 10, dans lequel l'organosilane est hydrolysé pendant 45 minutes et éventuellement où le précurseur organométallique est chélaté pendant 45 minutes.

**12.** Surface métallique revêtue, comprenant une surface métallique et un revêtement selon l'une quelconque des revendications 1 à 9.

**13.** Surface métallique revêtue selon la revendication 12, dans laquelle le métal est choisi dans le groupe comprenant la fonte, l'acier, l'aluminium, les alliages d'aluminium, le zinc, les alliages de zinc, le magnésium, les alliages de magnésium, le cuivre, les alliages de cuivre, l'étain et les alliages d'étain, les alliages de nickel, le titane et les alliages de titane.

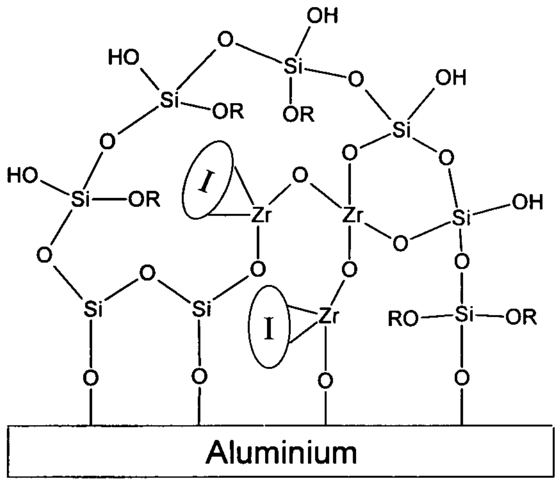

Fig. 1

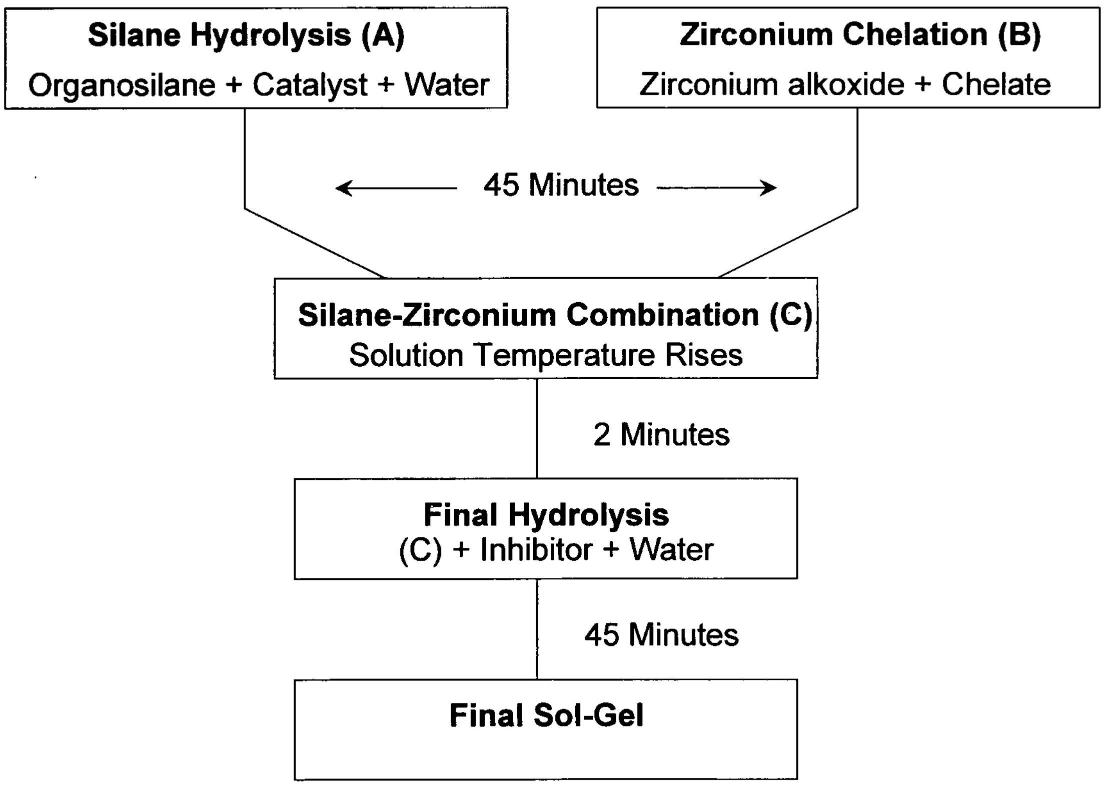
Silane Hydrolysis (A)
Organosilane + Catalyst + Water
Zirconium Chelation (B)
Zirconium alkoxide + Chelate
45 Minutes
Silane-Zirconium Combination (C)
Solution Temperature Rises
2 Minutes
Final Hydrolysis
(C) + Inhibitor + Water
45 Minutes
Final Sol-Gel

Fig. 2

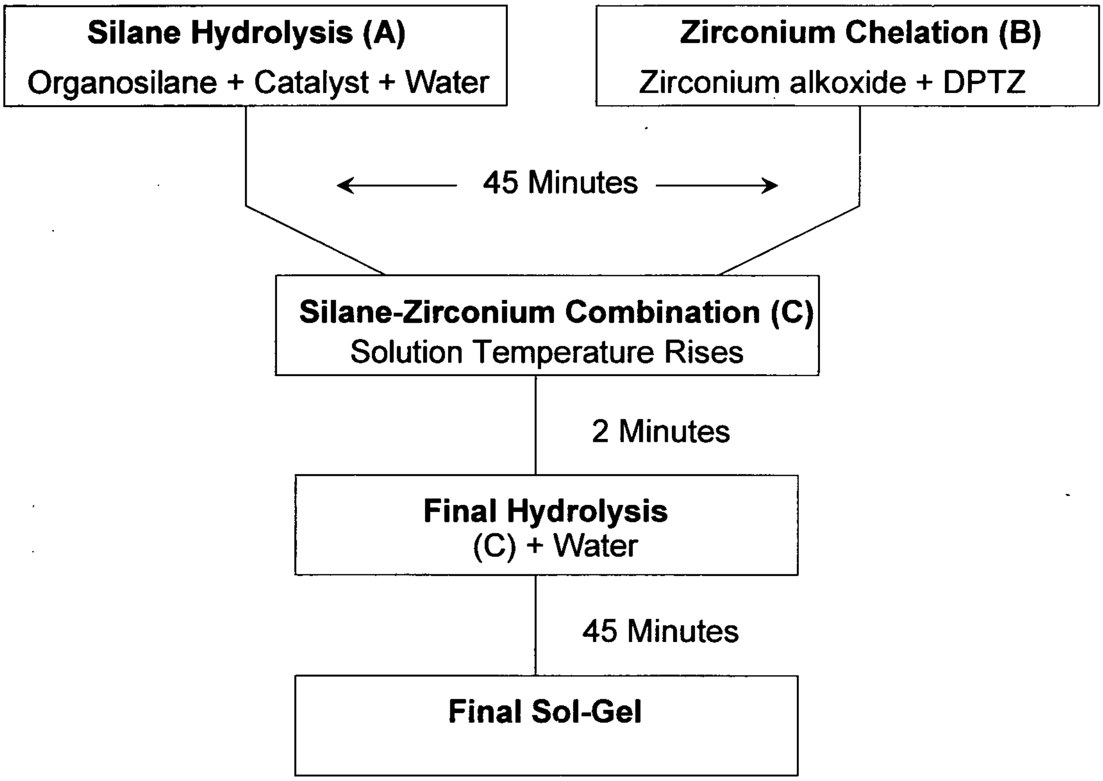
Silane Hydrolysis (A)
Organosilane + Catalyst + Water
Zirconium Chelation (B)
Zirconium alkoxide + DPTZ
45 Minutes
Silane-Zirconium Combination (C)
Solution Temperature Rises
2 Minutes
Final Hydrolysis
(C) + Water
45 Minutes
Final Sol-Gel

**Fig. 3**

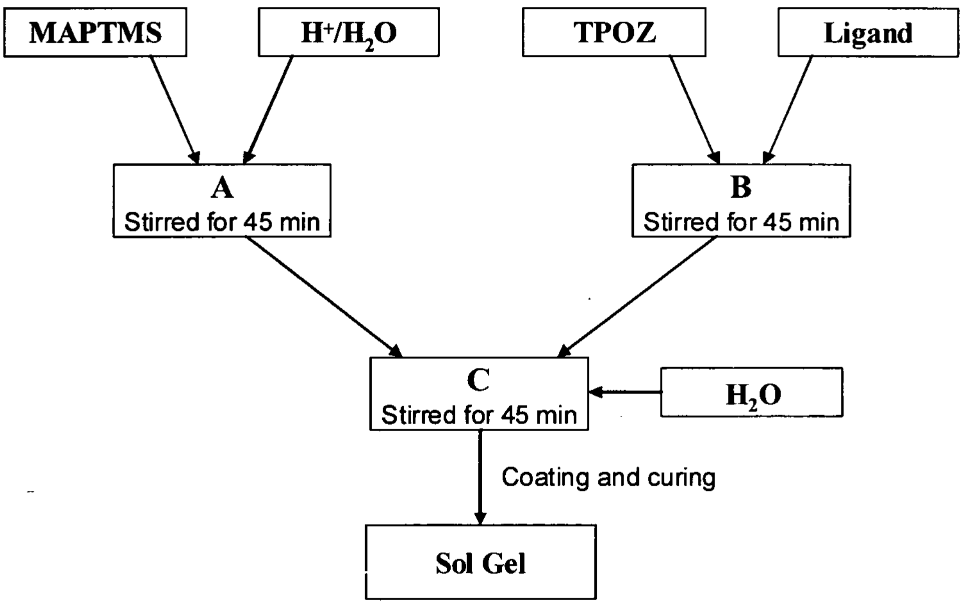
MAPTMS
$H^+/H_2O$
TPOZ
Ligand
A
Stirred for 45 min
B
Stirred for 45 min
C
Stirred for 45 min
$H_2O$
Coating and curing
Sol Gel

**Fig. 4**

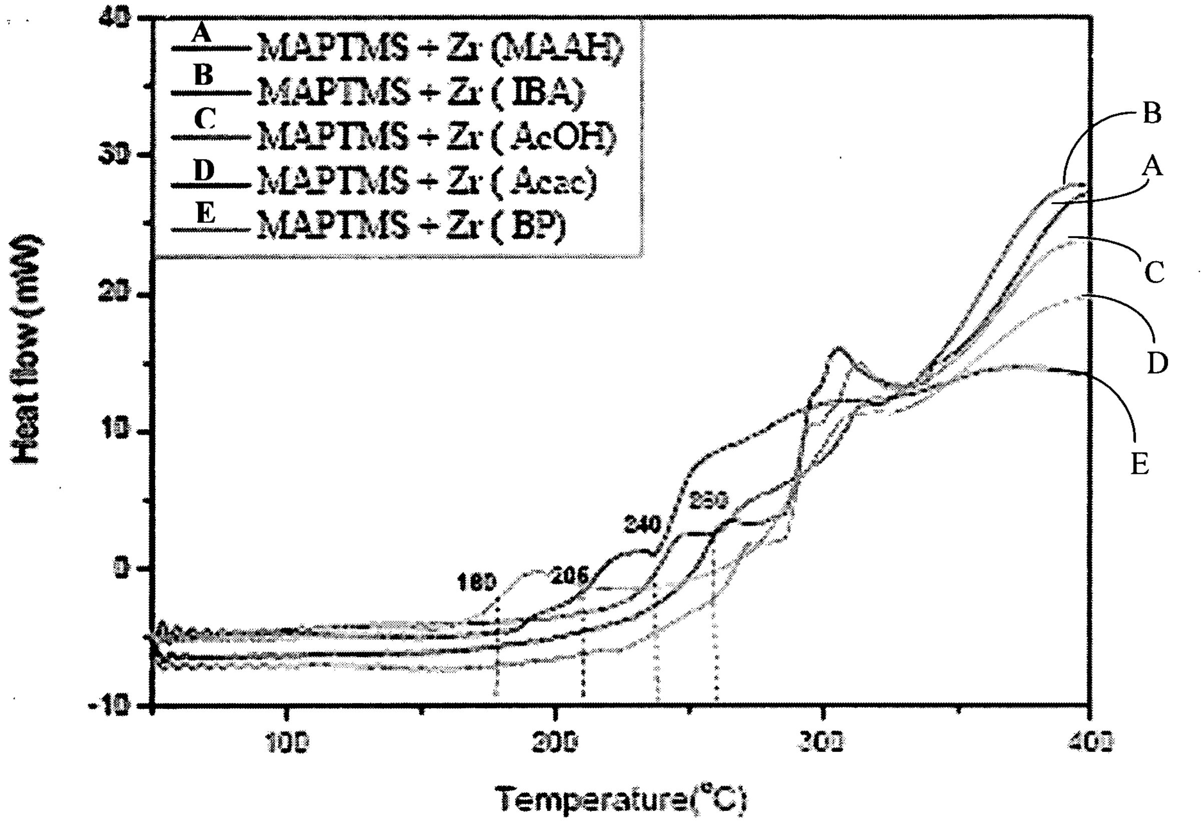
A MAPTMS + Zr (MAAH)
B MAPTMS + Zr ( IBA)
C MAPTMS + Zr ( AcOH)
D MAPTMS + Zr ( Acac)
E MAPTMS + Zr ( BP)
Heat flow (mW)
Temperature(°C)
40
30
20
10
0
-10
100
200
300
400
180
206
240
260
A
B
C
D
E

Fig. 5

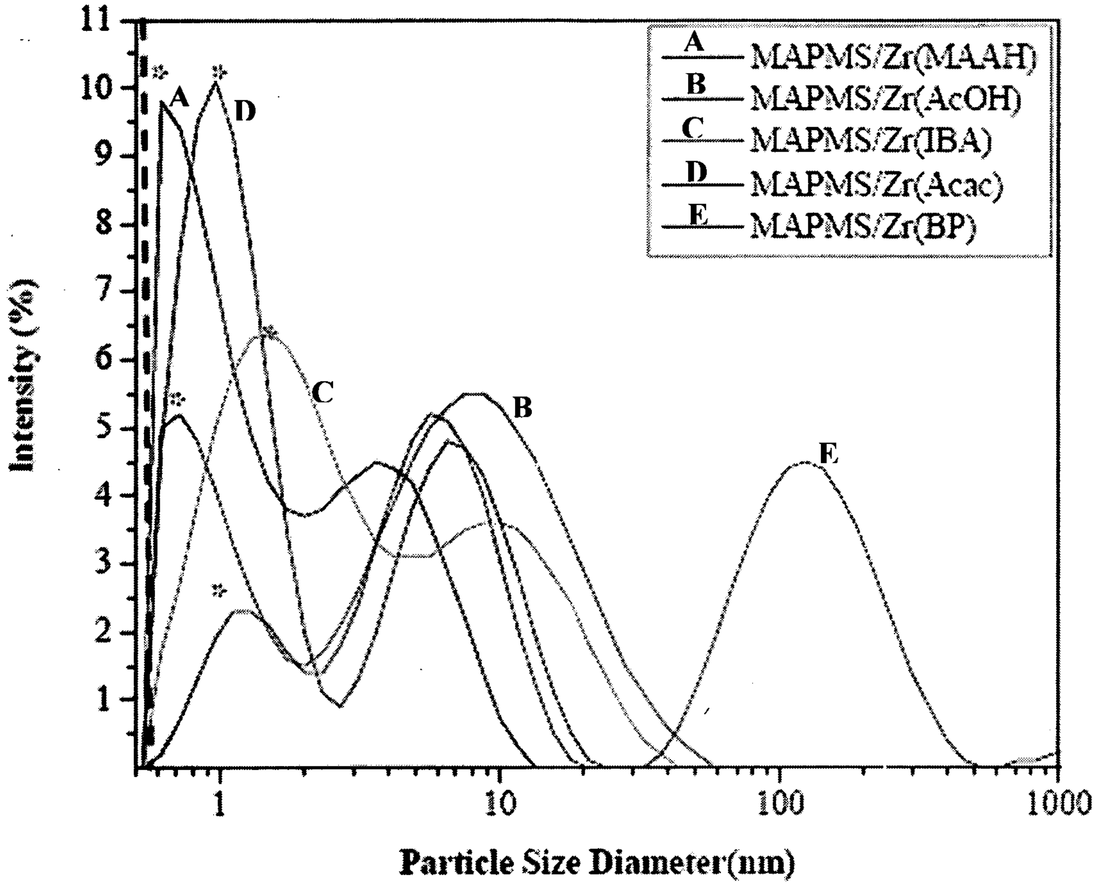
A MAPMS/Zr(MAAH)
B MAPMS/Zr(AcOH)
C MAPMS/Zr(IBA)
D MAPMS/Zr(Acac)
E MAPMS/Zr(BP)
Intensity (%)
Particle Size Diameter(nm)
11
10
9
8
7
6
5
4
3
2
1
1
10
100
1000
A
B
C
D
E

Fig. 6

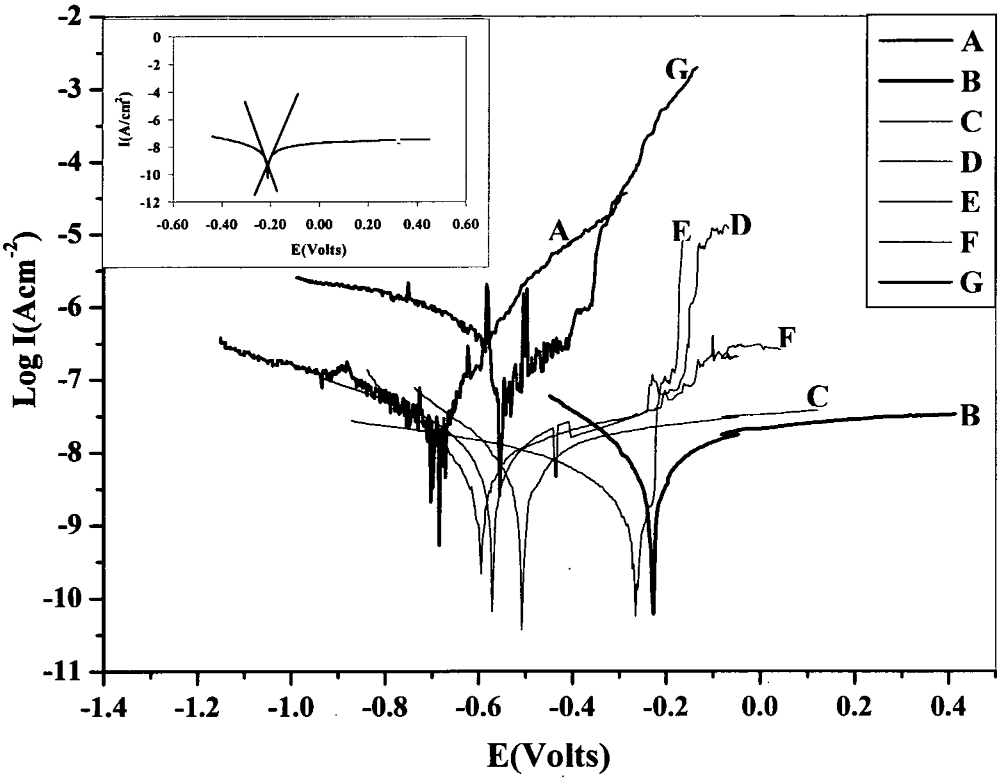
Log I(Acm$^{-2}$)
E(Volts)
-2
-3
-4
-5
-6
-7
-8
-9
-10
-11
-1.4
-1.2
-1.0
-0.8
-0.6
-0.4
-0.2
0.0
0.2
0.4
A
B
C
D
E
F
G
I(A/cm$^2$)
E(Volts)
0
-2
-4
-6
-8
-10
-12
-0.60
-0.40
-0.20
0.00
0.20
0.40
0.60

Fig. 7

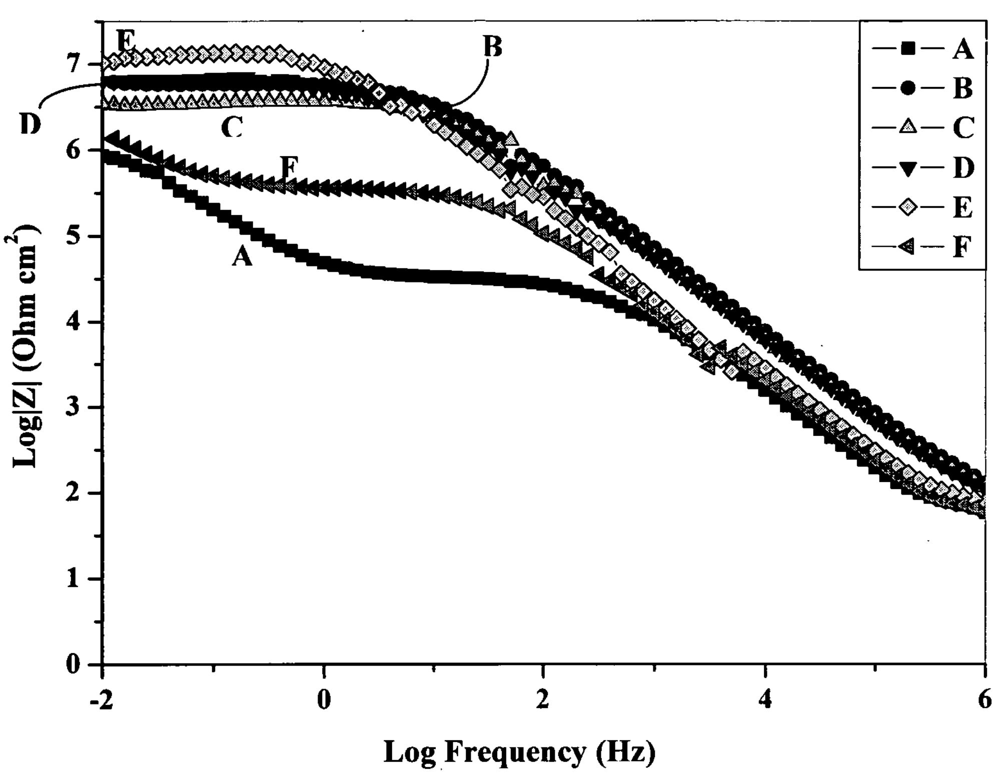


Fig. 8A

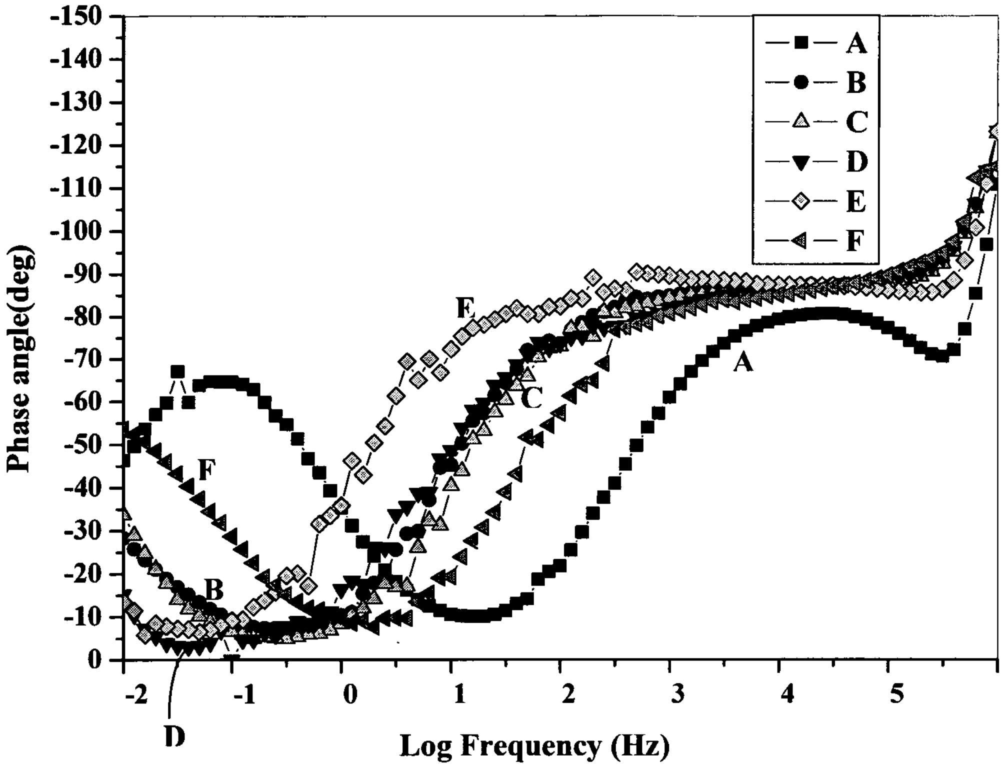
-150
-140
-130
-120
-110
-100
-90
-80
-70
-60
-50
-40
-30
-20
-10
0
Phase angle(deg)
A
B
C
D
E
F
E
F
B
C
A
D
-2
-1
0
1
2
3
4
5
Log Frequency (Hz)

Fig. 8B

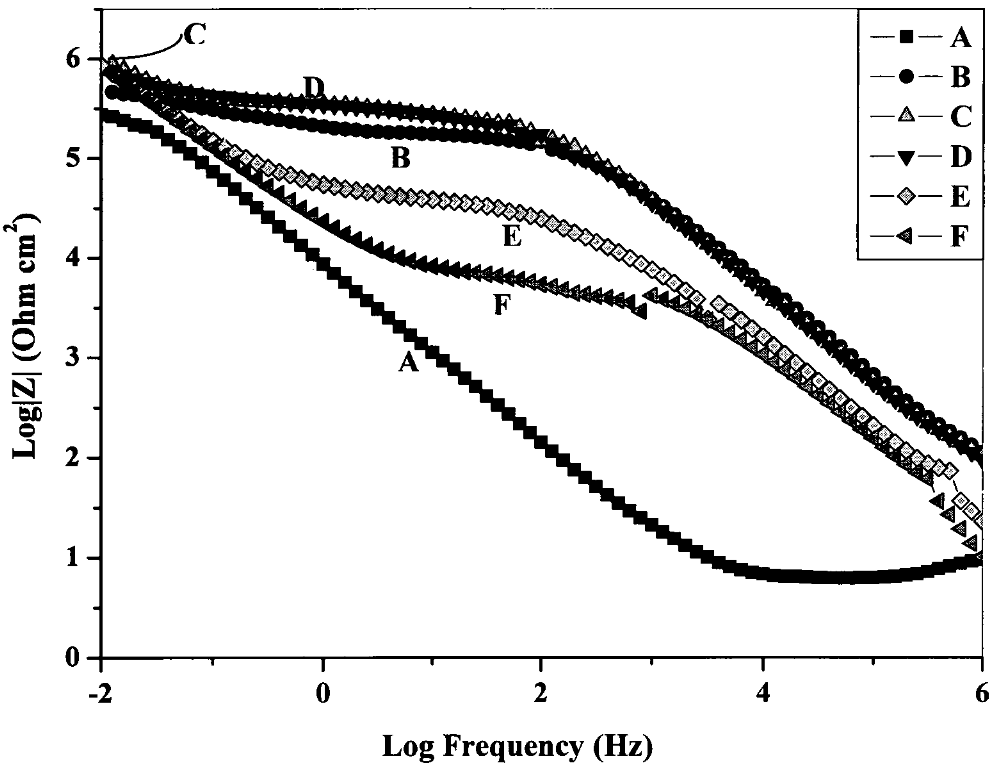


Fig. 9A

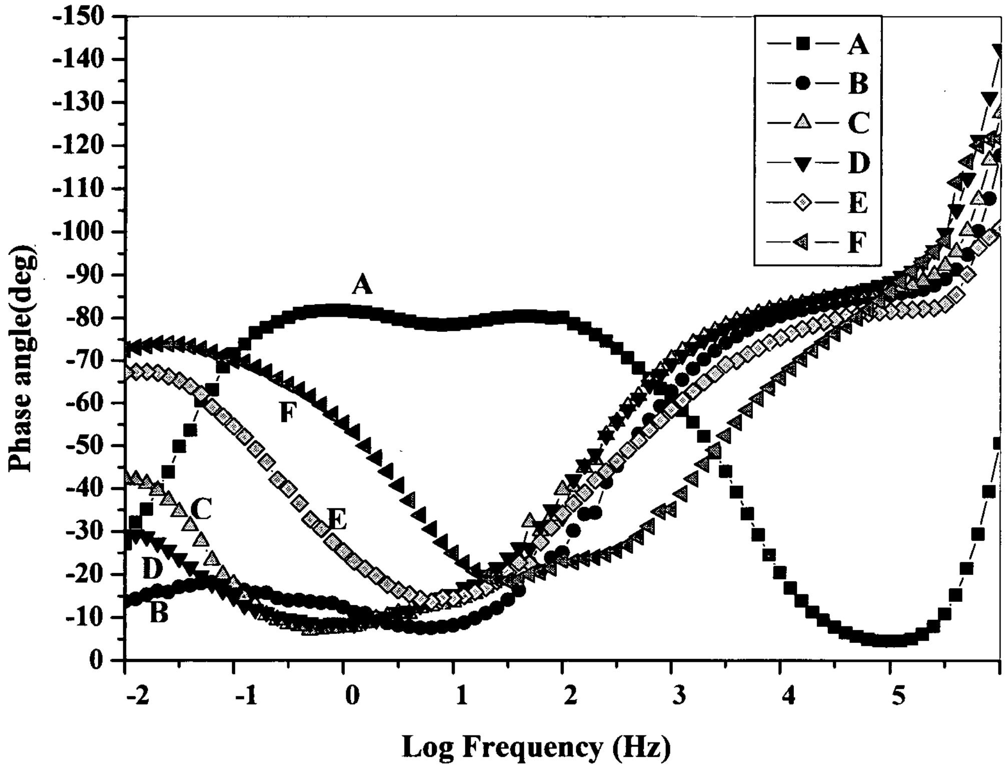
-150
-140
-130
-120
-110
-100
-90
-80
-70
-60
-50
-40
-30
-20
-10
0
Phase angle(deg)
-2
-1
0
1
2
3
4
5
Log Frequency (Hz)
A
B
C
D
E
F
A
F
E
C
D
B

Fig. 9B

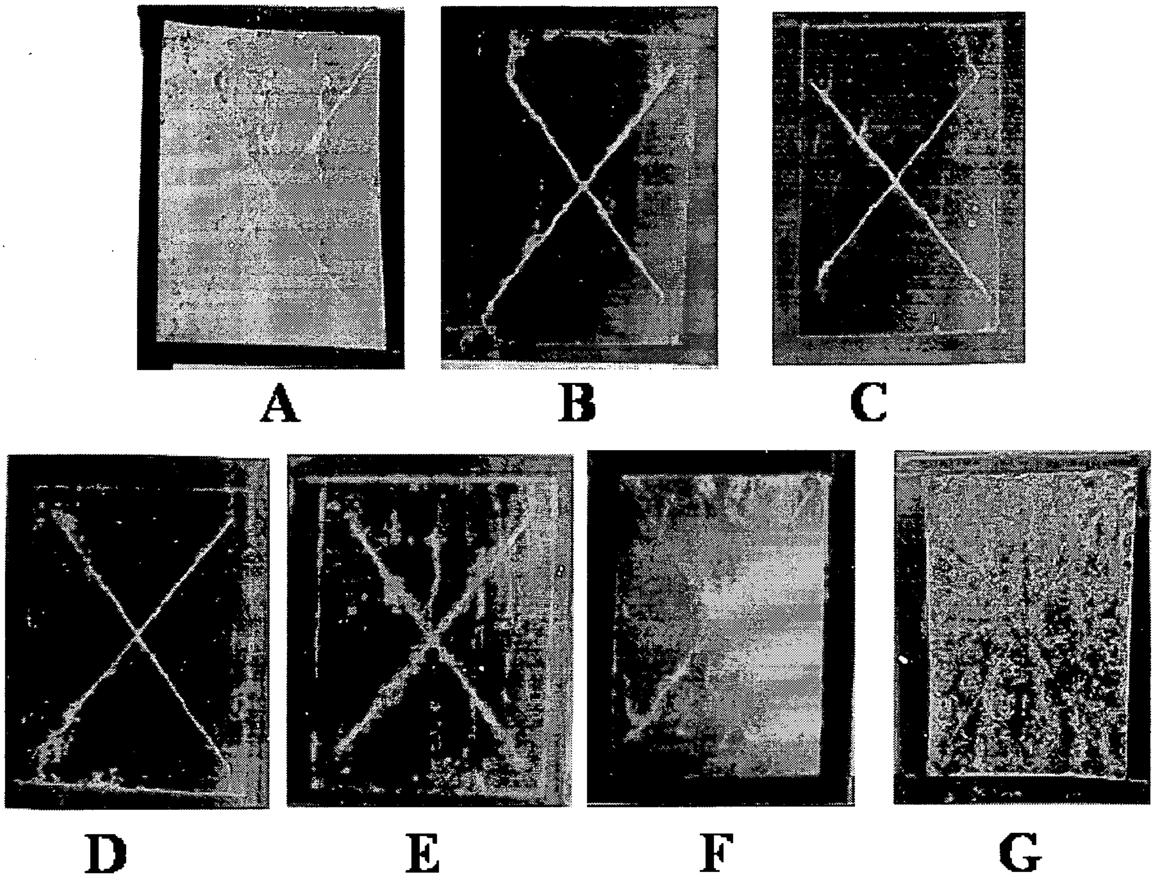
A
B
C
D
E
F
G

Fig. 10

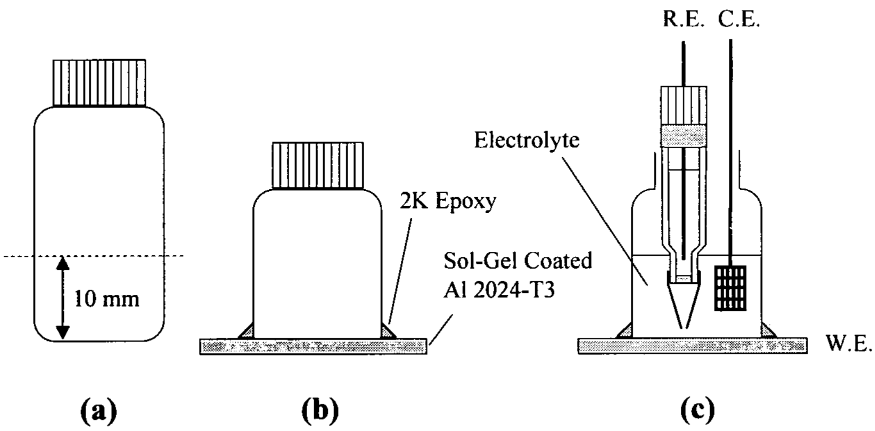
10 mm
2K Epoxy
Sol-Gel Coated
Al 2024-T3
Electrolyte
R.E. C.E.
W.E.
(a)
(b)
(c)

Fig. 11

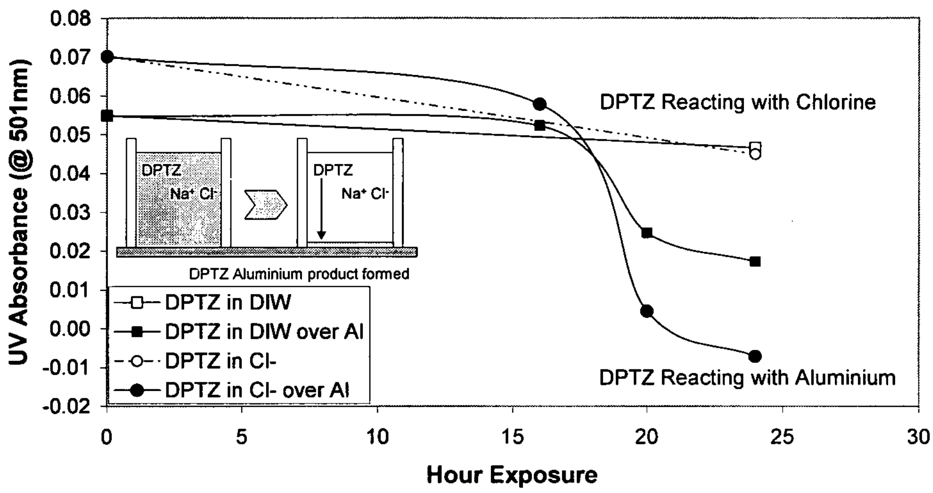
UV Absorbance (@ 501nm)
0.08
0.07
0.06
0.05
0.04
0.03
0.02
0.01
0.00
-0.01
-0.02
0
5
10
15
20
25
30
Hour Exposure
DPTZ Reacting with Chlorine
DPTZ Reacting with Aluminium
DPTZ
Na+ Cl-
DPTZ
Na+ Cl-
DPTZ Aluminium product formed
DPTZ in DIW
DPTZ in DIW over Al
DPTZ in Cl-
DPTZ in Cl- over Al

Fig. 12

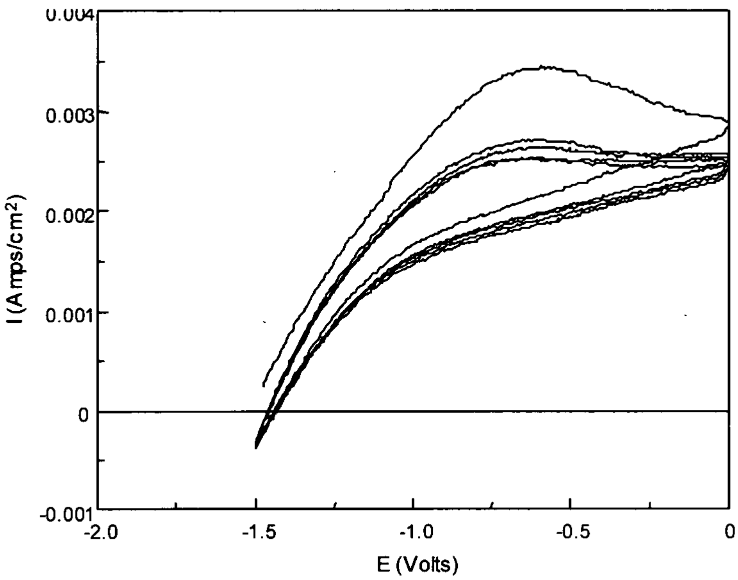
I (Amps/cm2)
0.004
0.003
0.002
0.001
0
-0.001
-2.0
-1.5
-1.0
-0.5
0
E (Volts)

Fig. 13

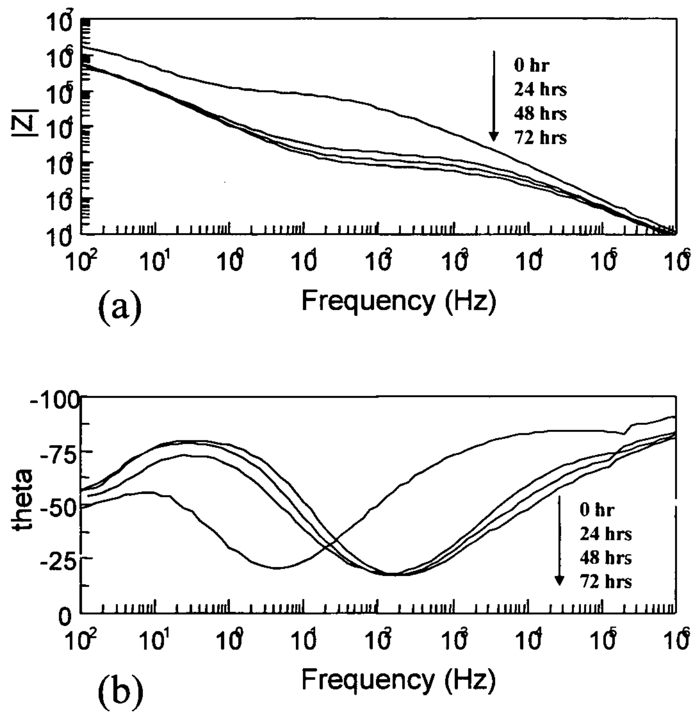
|Z|
0 hr
24 hrs
48 hrs
72 hrs
Frequency (Hz)
(a)
theta
0 hr
24 hrs
48 hrs
72 hrs
Frequency (Hz)
(b)

**Fig. 14**

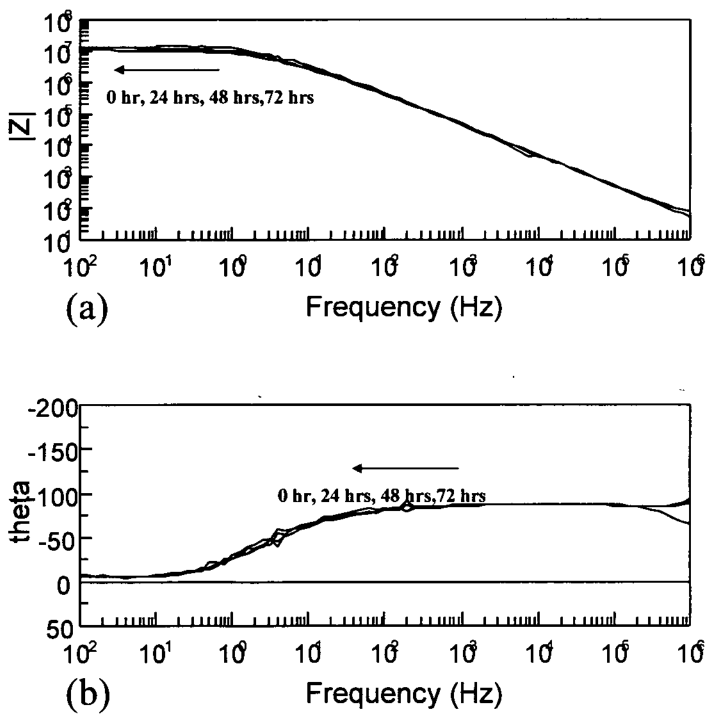
|Z|
0 hr, 24 hrs, 48 hrs,72 hrs
Frequency (Hz)
(a)
theta
0 hr, 24 hrs, 48 hrs,72 hrs
Frequency (Hz)
(b)

**Fig. 15**

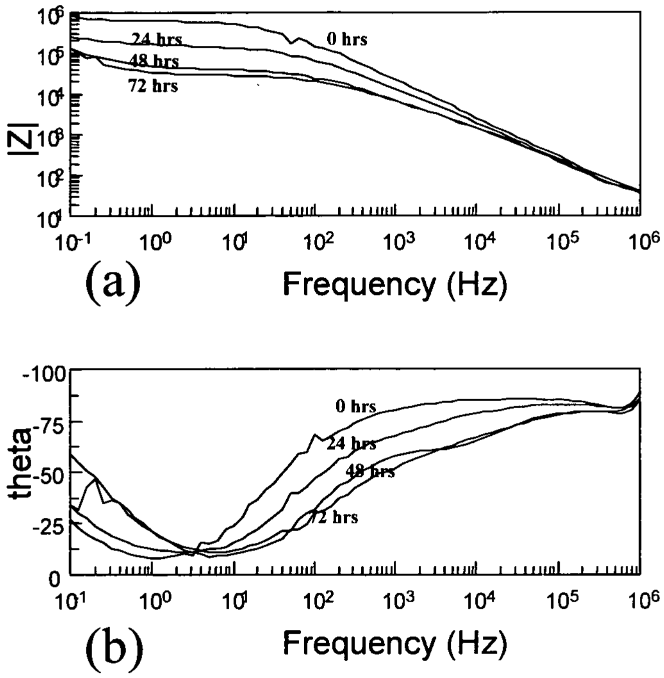
0 hrs
24 hrs
48 hrs
72 hrs
|Z|
(a)
Frequency (Hz)
theta
(b)
Frequency (Hz)

Fig. 16

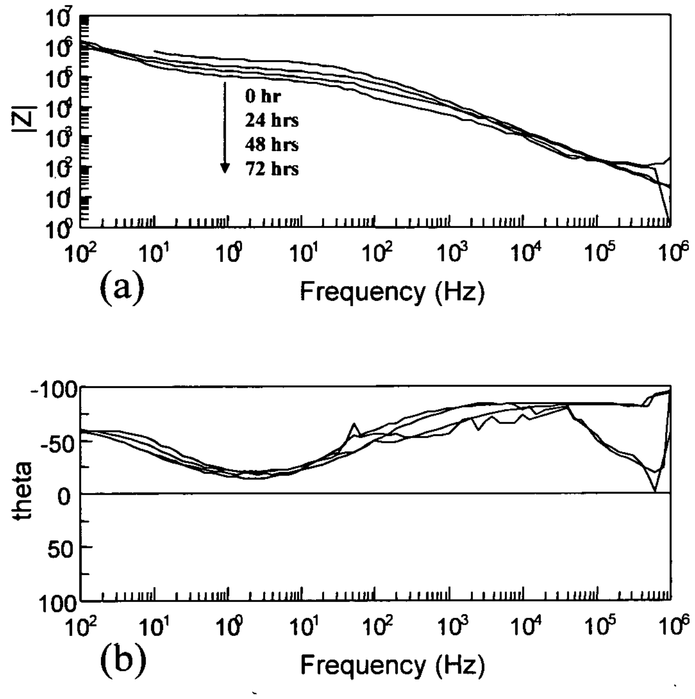
0 hr
24 hrs
48 hrs
72 hrs
|Z|
(a)
Frequency (Hz)
theta
(b)
Frequency (Hz)

Fig. 17

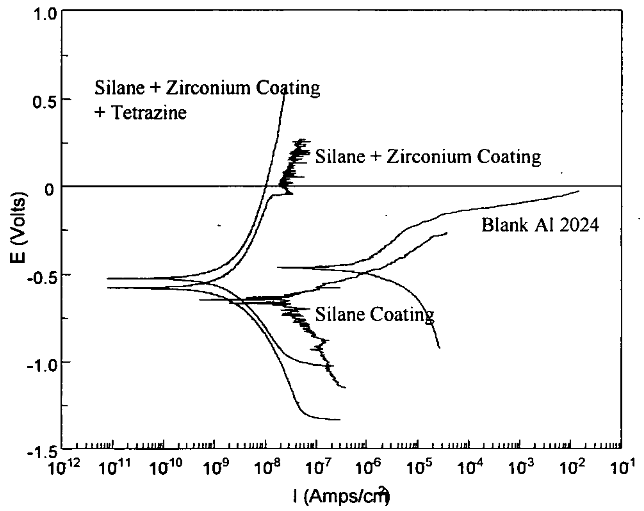
Silane + Zirconium Coating
+ Tetrazine
Silane + Zirconium Coating
Blank Al 2024
Silane Coating
E (Volts)
I (Amps/cm²)

Fig. 18

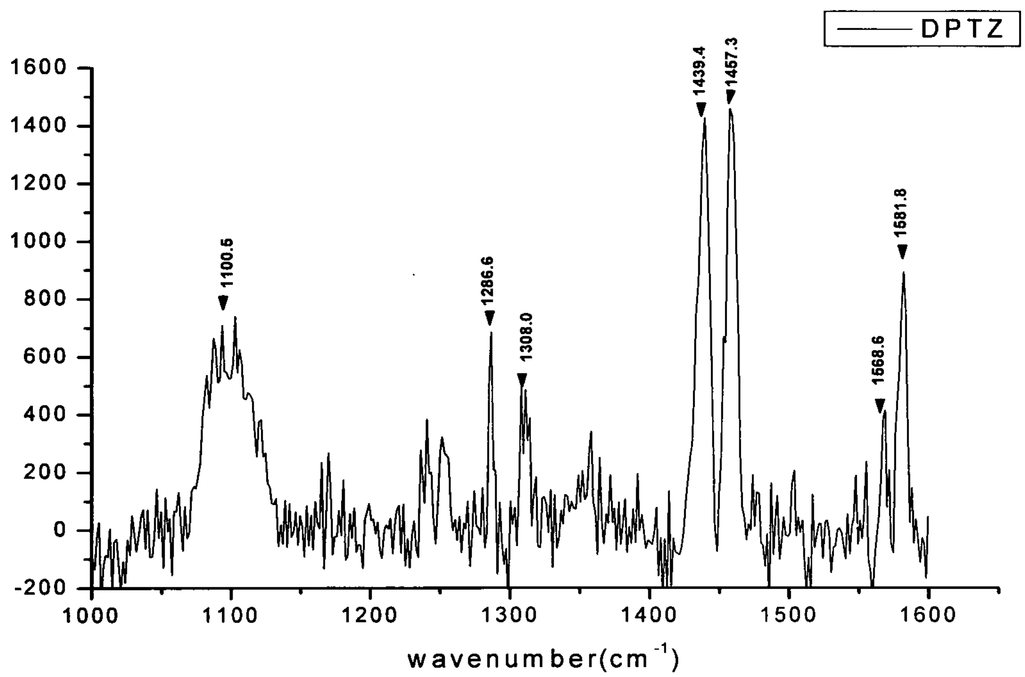
DPTZ
1100.5
1286.6
1308.0
1439.4
1457.3
1568.6
1581.8
wavenumber(cm⁻¹)

Fig. 19

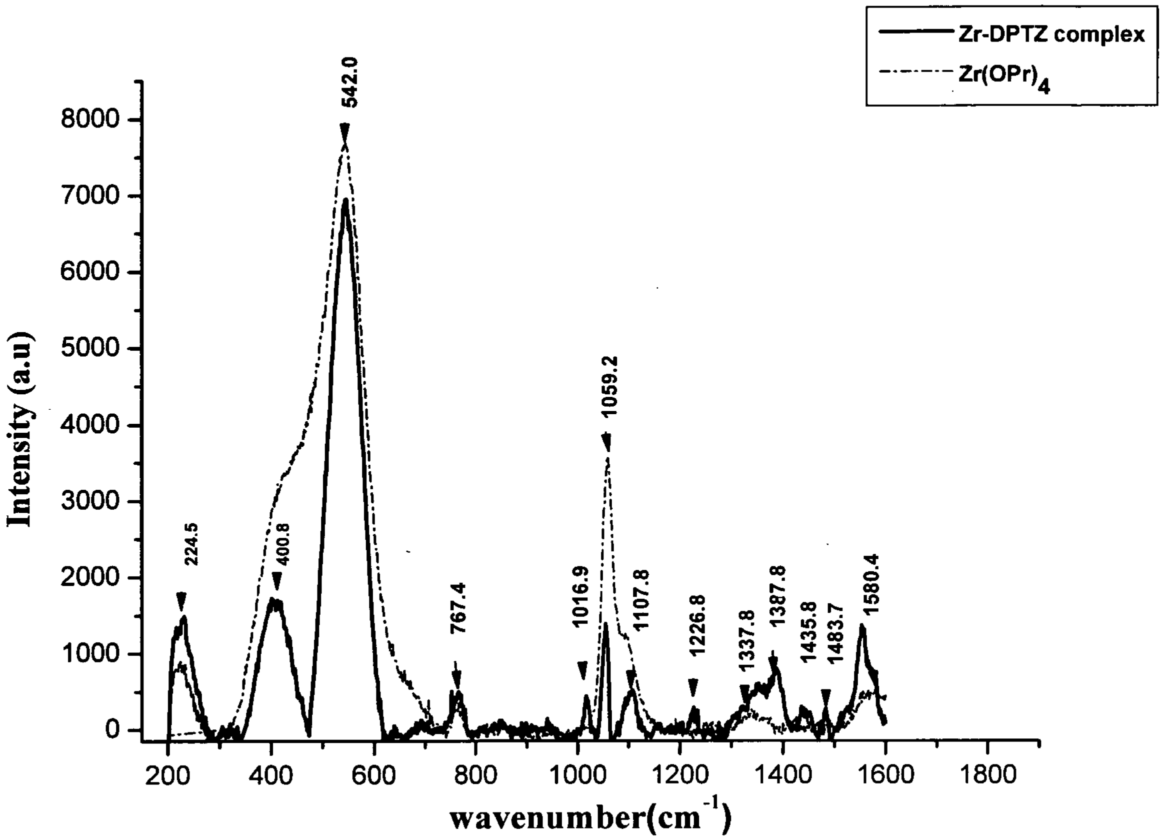
Zr-DPTZ complex
Zr(OPr)4
Intensity (a.u)
wavenumber(cm-1)
542.0
1059.2
224.5
400.8
767.4
1016.9
1107.8
1226.8
1337.8
1387.8
1435.8
1483.7
1580.4
0
1000
2000
3000
4000
5000
6000
7000
8000
200
400
600
800
1000
1200
1400
1600
1800

Fig. 20

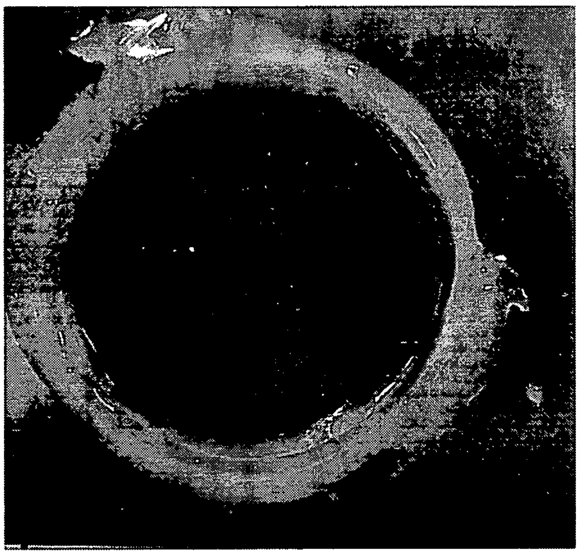

Fig. 21

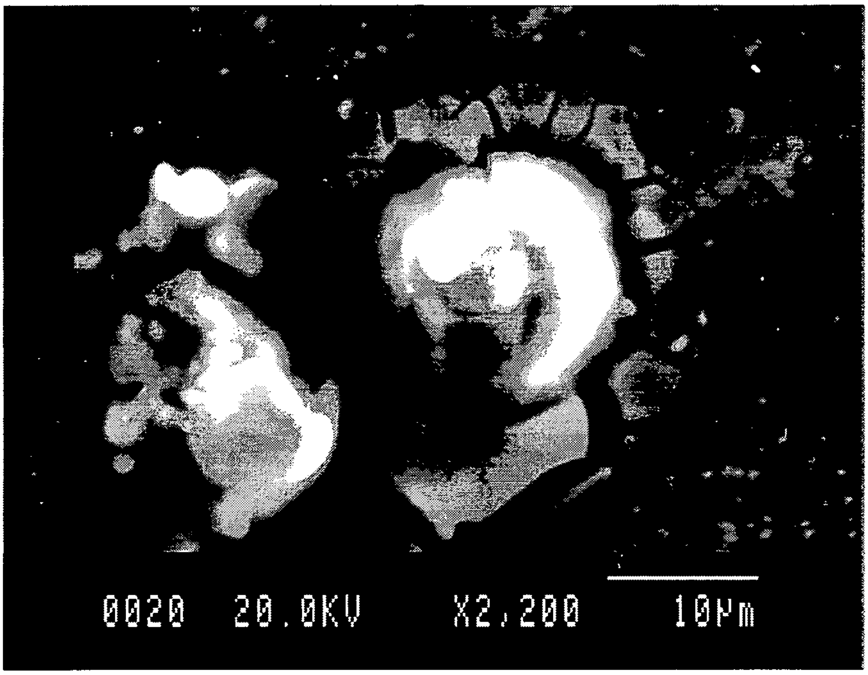


Fig. 22

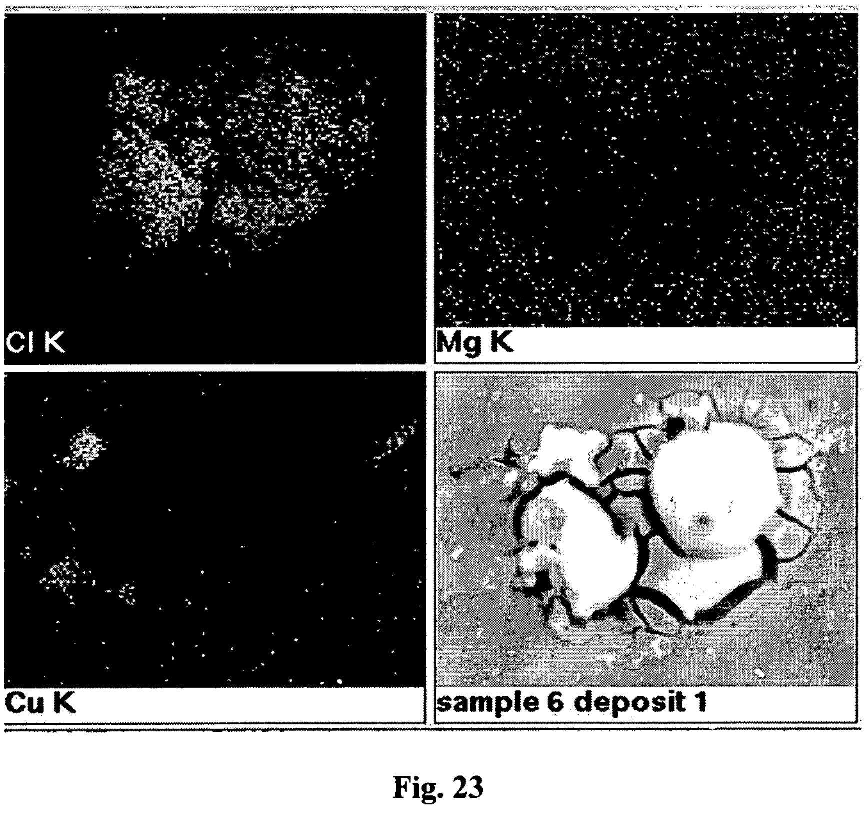


Fig. 23

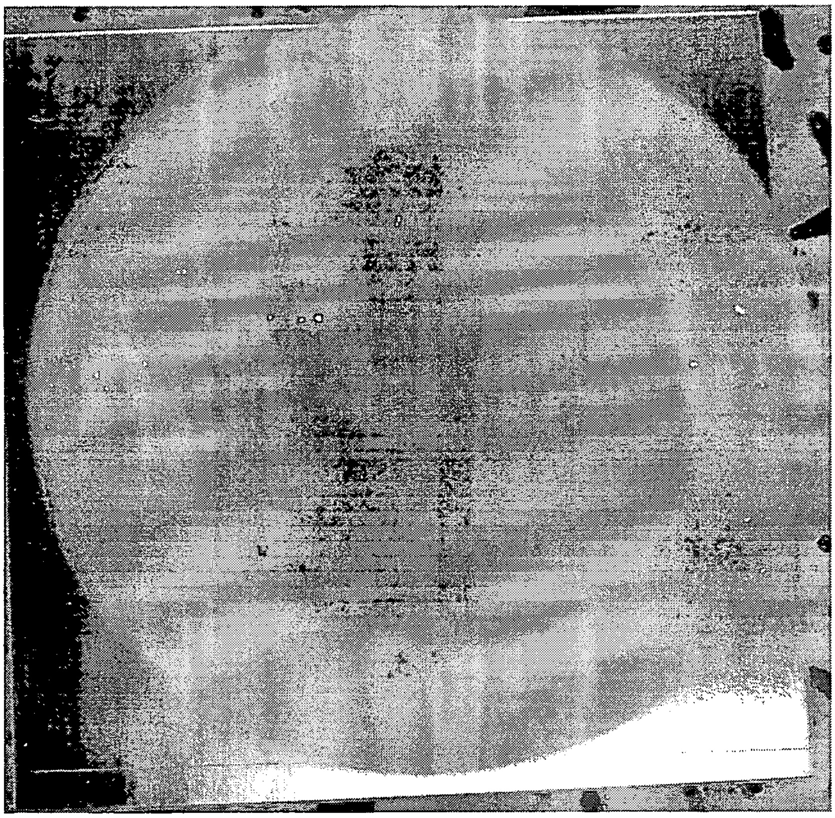

Fig. 24

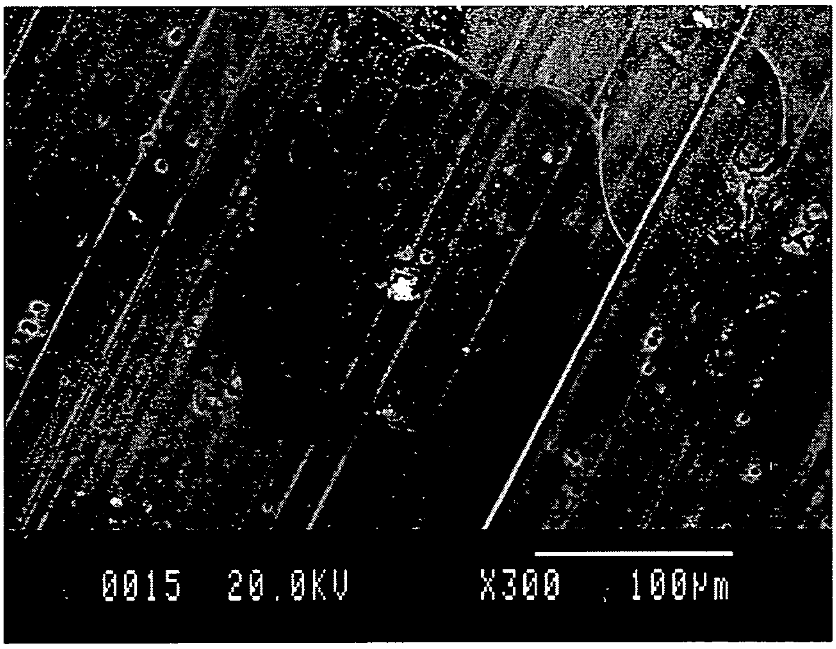


Fig. 25

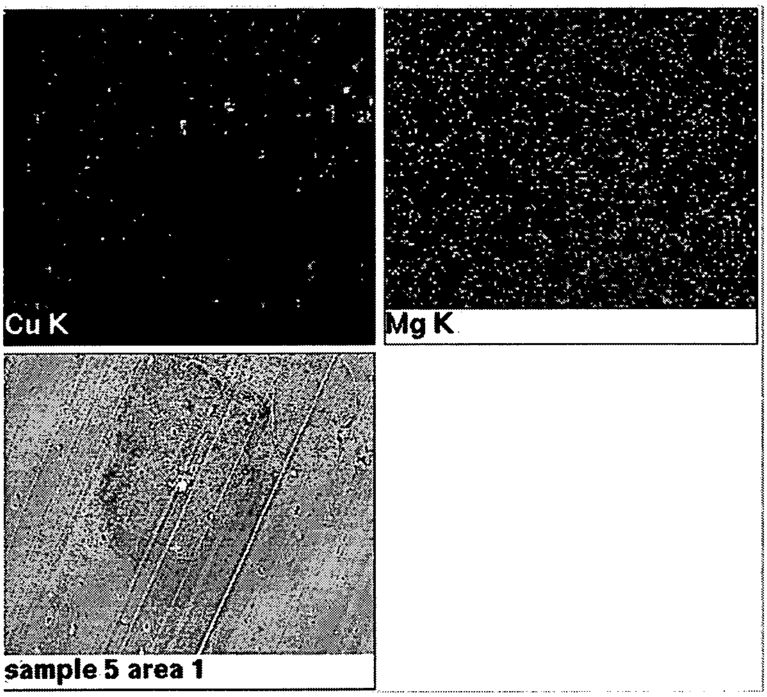


Fig. 26

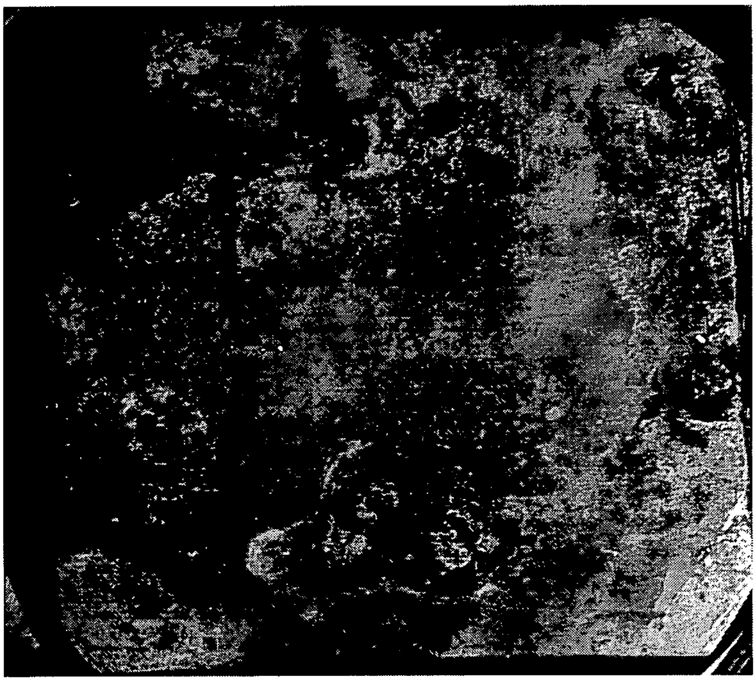

Fig. 27

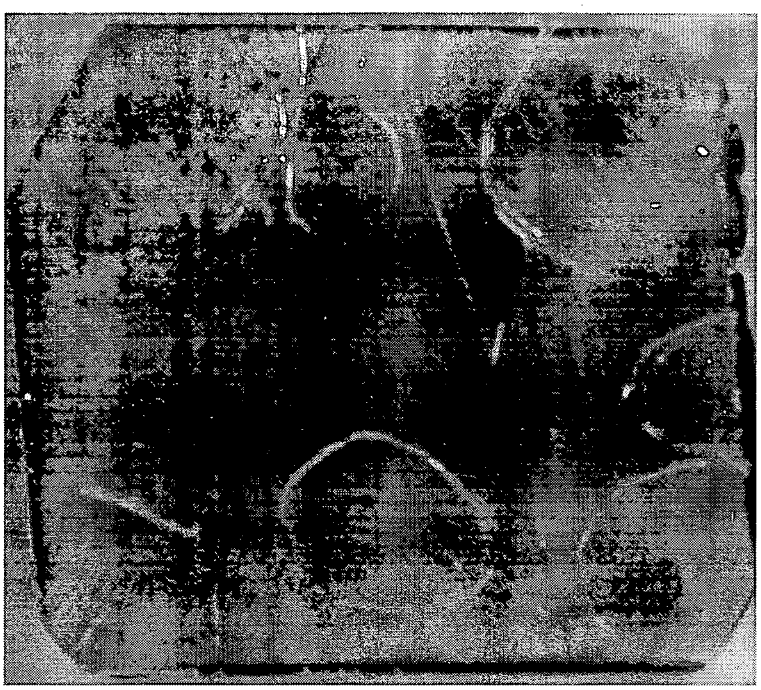

Fig. 28

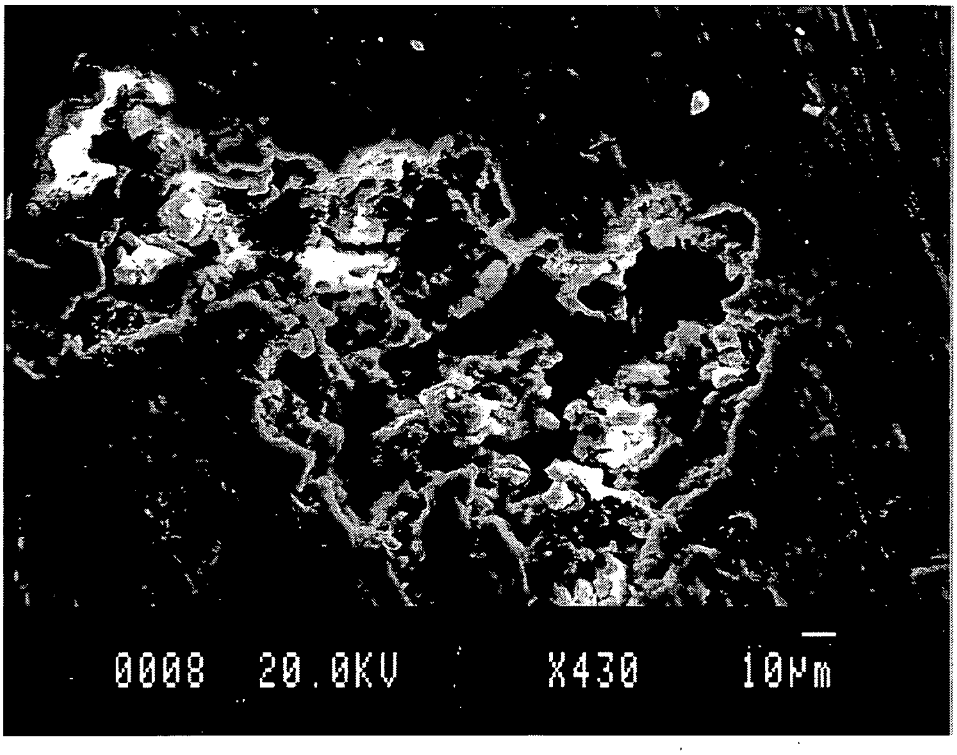


Fig. 29

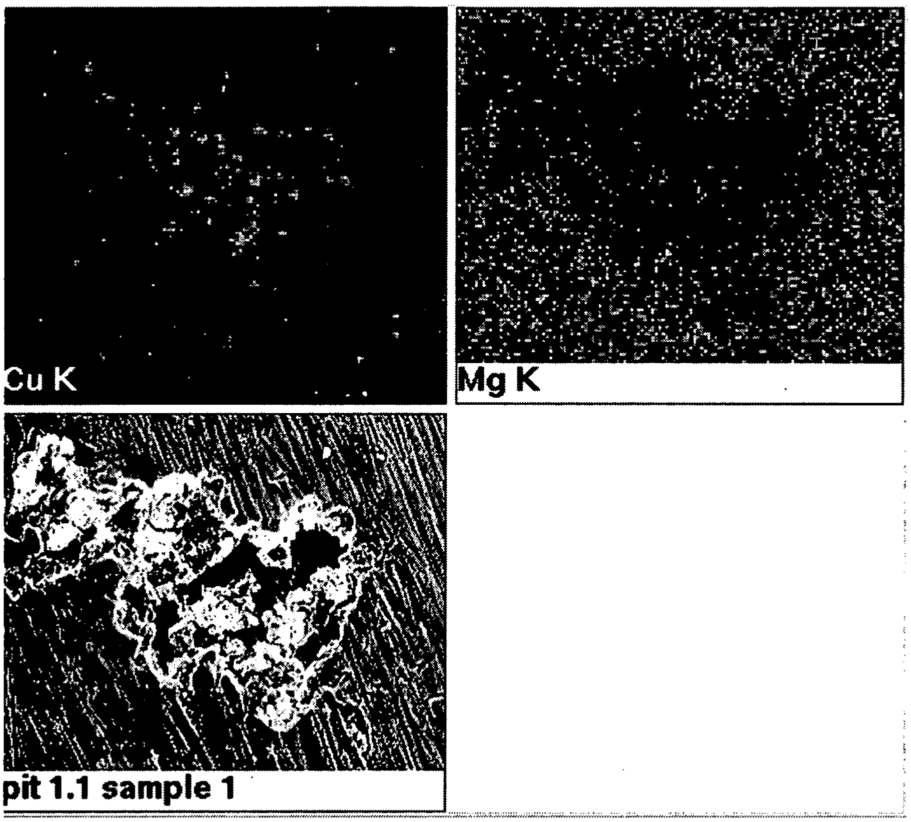


Fig. 30

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4746366 A


### Non-patent literature cited in the description


- **N.N. VOEVODIN et al.** *Surf. and Coat. Technol.,* 2001, vol. 140, 24-28
- **M.S. DONLEY et al.** *Prog. Org. Coat.,* 2003, vol. 47, 401-415
- **A.N. KHRAMOV et al.** *Thin Solid Films,* 2004, vol. 447, 549-557
- **V. BARRANCO ; S. FELIU JR ; S. FELIU.** *Corr. Sci.,* 2004, vol. 46, 2203-2220
- **M. CHATRY ; M. HENRY ; M. IN ; C. SANCHEZ ; J. LIVAGE.** *J. Sol-Gel Sci. Technol.,* 1994, vol. 1, 233-240
- **M.D. CODBURN ; D.G. OTT.** *J. Heterocyclic Chem,* 1991, vol. 27, 1990
- **M.D. CODBURN ; G.A. BUNTAIN ; B.W. HARRIS ; M.A. HISKEY ; K-Y. LEE. ; D.G. OTT.** *J. Heterocyclic Chem,* 1991, vol. 28, 2049
- Key Issues to meet the Challenges of the Future Mobility and Road Transport System. *EUCAR,* 07 December 2004
- Roadmap of the European Technology Platform For Advanced Engineering Materials and Technologies, Version 7. *Materials for the Life Cycle,* 27 June 2006
- *European Aeronautics: a vision for 2020,* ISBN 92-894-0559-7
- **D. HOEBBEL ; T. REINERT ; H.SCHMIDT.** *J. Sol-Gel. Sci & Techn.,* 1997, vol. 10, 115-126
- **W. KAIM.** *Coordination Chemistry Reviews,* 2002, vol. 230, 127-139
- **M. KENDIG ; S. JEANJAQUET ; R. ADDISON ; J. WALDROP.** *Surf. Coat. Technol.,* 2001, vol. 140, 58-66
- **A.N. KHRAMOV et al.** *Thin Solid Films,* 2005, vol. 483, 191-196
- **J. LIVAGE ; C. SANCHEZ.** *J. Non-Cryst. Solids,* 1992, vol. 145, 11
- **M. OUBAHA ; P. ETIENNE ; S. CALAS ; R. SEMPERE ; J.M. NEDELEC ; Y. MOREAU.** *J. Non-Cryst. Solids,* 2005, vol. 351, 2122-2128
- **F. X. PERRIN ; V. NGUYEN ; J. L. VERNET.** *J. Sol-Gel Technol.,* 2003, vol. 28, 205
- **F. RUBIO ; J. RUBIO ; J.L. OTEO.** *J. Mat. Sci. Lett.,* 1998, vol. 17, 1839-1842
- **C. SANCHEZ ; G. J. DE A. A. SOLER-ILLIA ; F. RIBOT ; T. LALOT ; C. R. MAYER ; V. CABUIL.** *Chem. Mater.,* 2001, vol. 13, 3061-3083
- **S. TAN et al.** *Surf. and Coat. Technol.,* 2005, vol. 198, 478-482
- **Z. WEIHUA ; Z. GAOYANG ; C. ZHIMING.** *Mat. Sci & Eng. B,* 2003, vol. 99, 168-172
- **M.L. ZHELUDKEVICH ; R. SERRA ; M.F. MONTEMOR ; K.A. YASAKAU ; I.M. MIRANDA SALVADO.** *M.G.S. Ferreira Electrochim. Acta,* 2005, vol. 51, 208-217